(19) Europäisches Patentamt
European Patent Office
Office européen des brevets

(11) **EP 2 751 411 B1**

(12) **EUROPEAN PATENT SPECIFICATION**

(45) Date of publication and mention
of the grant of the patent:
**09.03.2016 Bulletin 2016/10**

(51) Int Cl.:
*F02C 6/16* (2006.01)  *F01D 15/00* (2006.01)
*F02C 7/00* (2006.01)  *F02C 3/04* (2006.01)
*F02C 6/00* (2006.01)  *F02C 1/04* (2006.01)
*F02C 1/05* (2006.01)

(21) Application number: **12833920.7**

(22) Date of filing: **19.09.2012**

(86) International application number:
**PCT/US2012/056155**

(87) International publication number:
**WO 2013/043754 (28.03.2013 Gazette 2013/13)**

(54) **COMPRESSED GAS ENERGY STORAGE SYSTEM USING A TURBINE**

DRUCKGAS VERWENDENDES ENERGIESPEICHERSYSTEM MIT EINER TURBINE

SYSTÈME DE STOCKAGE D'ÉNERGIE À GAZ COMPRIMÉ UTILISANT UNE TURBINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.09.2011 US 201161536813 P**

(43) Date of publication of application:
**09.07.2014 Bulletin 2014/28**

(73) Proprietor: **Lightsail Energy, Inc.
Berkeley, California 94710 (US)**

(72) Inventors:
• **BERLIN, Jr., Edwin P.
Oakland, California 94611 (US)**
• **CRANE, Stephen E.
Santa Rosa, California 95401 (US)**
• **ABKENAR, Amir Hossein Pourmousa
Walnut Creek, California 94597 (US)**
• **FONG, Danielle A.
Oakland, California 94607 (US)**
• **STAHLKOPF, Karl E.
Honolulu, Hawaii 96813 (US)**

(74) Representative: **Noble, Nicholas
Kilburn & Strode LLP
20 Red Lion Street
London WC1R 4PJ (GB)**

(56) References cited:
JP-A- H09 166 028    JP-A- S56 132 477
US-A- 4 197 700      US-A1- 2011 041 501
US-A1- 2011 094 212  US-A1- 2011 094 231
US-A1- 2011 100 010

**Description**

BACKGROUND

US 2011/041501 relates to a Compressed Air Turbine-Generator, or CAT-G that will enable the ability to manage energy gathered from ecologically friendly sources, such as solar and wind power. Compressed Air Energy Storage, (C.A.E.S.), is a promising mode of clean energy storage. A major challenge facing this technology is the need to efficiently convert the compressed air energy into electricity. Conventionally, high-pressure air is used only to improve the efficiency of a conventional jet powered turbine generator. The focus of US 2011/041501 is on a new technology that efficiently converts the energy stored in compressed air directly into electrical power without producing greenhouse byproduct gases or other pollutants. This new capability will add important flexibility to the optimization of ecologically friendly energy systems.

US 2011/0100010is directed to an adiabatic compressed air energy storage (ACAES) system that includes a compressor system, an air storage unit, and a turbine system. The ACAES system further includes a thermal energy storage (TES) system that includes a container, a plurality of heat exchangers, a liquid TES medium conduit system fluidly coupling the container to the plurality of heat exchangers, and a liquid TES medium stored within the container. The TES system also includes a plurality of pumps coupled to the liquid TES medium conduit system and configured to transport the liquid TES medium between the plurality of heat exchangers and the container, and a thermal separation system positioned within the container configured to thermally isolate a first portion of the liquid TES medium at a lower temperature from a second portion of the liquid TES medium at a higher temperature.

BRIEF SUMMARY

An invention is set out in the claims.

Embodiments relate generally to energy storage systems, and in particular to energy storage systems using one or more turbines to compress and/or expand a gas. In various embodiments, a compressed gas storage system may include a plurality of turbines configured to convert energy in gas expansion and compression processes. One or more axial and centrifugal turbines may be used to store energy by compressing gas, and to recover energy from expanding gas. A plurality of orifices/nozzles may introduce a liquid into the gas as a heat exchange medium. Orifices/nozzles may be disposed on various surfaces of a turbine and/or in a separate mixing chamber flowing to a turbine. Structures of the turbine may be designed to mitigate damage caused by liquid injection, for example the turbine blades may be flexible and/or composed of impact-resistant materials.

BRIEF DESCRIPTION OF THE DRAWINGS

FIG. 1 is a simplified cross-sectional view of an embodiment of an axial turbine.
FIG. 2a and FIG. 2b are cross-sectional views of an embodiment of an axial turbine.
FIG. 2c is a cut-away view of an embodiment of axial turbine.
FIG. 3 is a cut-away view of an embodiment of centrifugal turbine.
FIG. 4 is a schematic diagram of an embodiment of an energy storage system.
FIG. 5a is a cross-sectional view of an embodiment of an axial turbine showing orifice locations.
FIG. 5b is a plan view of an embodiment of an axial turbine showing orifice locations.
FIG. 6 is a cut-away view of embodiments of a turbine and stator.
FIG. 7 is a cut-away view of an embodiment of a turbine with orifices disposed as stators.
FIG. 8a is a cross-sectional view of an embodiment of an orifice.
FIG. 8b is a cross-sectional view of an embodiment of a removable nozzle in an orifice location.
FIG. 9 is a cut-away view of an embodiment of a turbine with orifices disposed in the shaft.
FIG. 10 is a cut-away view of an embodiment of a centrifugal turbine and orifice locations.
FIG. 11 is a plan view of an embodiment of a centrifugal turbine shaft and blades.
FIG. 12 is a cut-away view of an embodiment of a turbine and a mixing chamber.
FIG. 13 is a schematic view illustrating the relationship between a reversible compressor/expander apparatus and various other system elements.
FIG. 14A-B illustrating one embodiment of a reversible turbine having flexible, low mass blades.
FIG. 14C illustrates an embodiment of a unidirectional turbine(s) having flexible, low mass blades.
FIG. 14D illustrates an embodiment of a reversible turbine having flexible, low mass blades.
FIG. 15A shows operation of a rotating-type expander apparatus operating based upon liquid injection for heat exchange with expanding gas.

FIG. 15B shows selective operation of the apparatus of Figure 15A based upon steam input.

FIG. 15C shows operation of a reciprocating-type expander apparatus operating based upon liquid injection for heat exchange with expanding gas.

FIG. 15D shows selective operation of the apparatus of Figure 15C based upon steam input.

FIG. 16A-16C show views of an example of a reversible compressor/expander comprising a rotating member and utilizing gas present as bubbles in a heat exchange liquid.

Figure 17 generically depicts interaction between a compressed gas system and external elements.

Figure 18 is a simplified schematic view of a network configured to supply electrical power to end users.

Figure 19 is a table listing possible functions for an energy storage system incorporated within a power supply network.

Figure 20 shows a simplified view of the levelizing function that may be performed by a compressed gas energy storage and recovery system according to an example of the present disclosure.

Figure 21 shows a simplified view of an example of a compressed gas energy storage and recovery system according to the present disclosure, which is co-situated with a power generation asset.

Figure 21A shows a simplified view of an example of a compressed gas energy storage and recovery system utilizing a combined motor/generator and a combined compressor/expander.

Figure 21B shows a simplified view of an example of a compressed gas energy storage and recovery system utilizing dedicated motor, generator, compressor, and expander elements.

Figure 21C shows a simplified view of an example of a compressed gas energy storage and recovery system in accordance with the present disclosure utilizing a multi-node gearing system.

Figure 22 shows a simplified top view of one example of a planetary gear system which could be used in examples of the present disclosure. Figure 22A shows a simplified cross-sectional view of the planetary gear system of Figure 22 taken along line 22A-22A'.

Figure 23 is a table listing heating and cooling functions for an energy storage system according to an example of the present disclosure.

Figure 24 shows a simplified view of an example of a compressed gas energy storage and recovery system according to the present disclosure, which is co-situated with an end user behind a meter.

Figure 25 plots power over time showing an example of a transition of grid capacity from a renewable energy source to a long-term generation asset.

Figure 25A is a simplified schematic view of a system including a processor configured to coordinate operation of an energy system with a power supply network.

Figures 26A-B show different views of an example of a system according to the present disclosure, configured to receive various inputs and to produce various outputs.

Figure 27A shows a simplified view of an example of an apparatus according to the present disclosure.

Figures 27BA-BF are highly simplified depictions of the flow of gases through the apparatus of Figure 27A in various configurations.

Figures 27C-EB are tables showing different energy pathways of an example of a system in various configurations.

Figure 28 shows a flowchart of apportioning inputs and outputs of an example of a system.

FIG. 29 shows a schematic view of incorporation of an example of an energy storage system with generation and transmission resources of a power supply network.

FIG. 30 plots energy output of an energy storage system and of a baseline combined cycle turbine apparatus over time, according to an example.

## DETAILED DESCRIPTION

Compressed air is capable of storing energy at densities comparable to lead-acid batteries. However, compressed gas does not involve issues associated with a battery such as limited lifetime, materials availability, or environmental friendliness.

A compressed gas storage system performs the functions of compressing a gas to store energy, and recovering the energy by restoring the gas to a lower pressure. To decrease size, complexity, and cost of such as system, it may be desirable to use the same equipment for both the compression and expansion phases of the process. Examples of such a system can be found in U.S. Patent Publication No. 2011/0115223 ("the Publication").

It should be appreciated that concepts discussed below may include one or more concepts discussed in the Publication. For instance, gas bubbling may be used in place of or in combination with spraying to achieve gas-liquid heat exchange with expanding or compressed gas. For example, the gas could be introduced to the chamber for compression or expansion by rotating blades of a turbine, through a liquid.

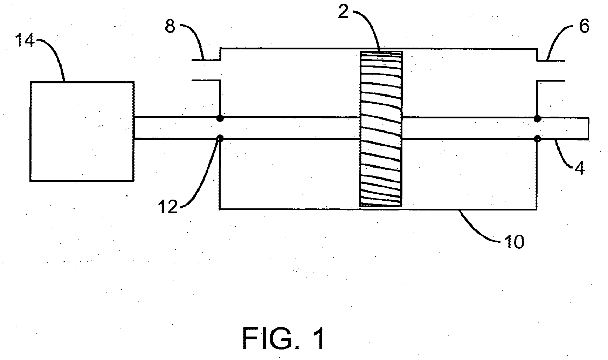

A turbine-based design may be employed to convert energy between rotational motion and compressed gas. As illustrated by FIG. 1, an axial turbine according to an embodiment includes at least one rotor 2 which is coupled to a shaft 4.

The rotor and portions of the shaft are typically enclosed by a housing 10 to protect the blades and contain the gas. The housing 10 includes a first port 8 and a second port 6. When, for example, the first port is configured to be an inlet port, gas moves from the first port 8 across the rotor 2, causing the shaft 4 to rotate. In the axial turbine, the gas flows parallel to the axis of the shaft 4.

Such a system can be used to convert electrical energy into potential energy stored by compressed gas. For example, the rotation of shaft 4 can be caused by electricity supplied to an electric motor-generator 14 coupled to shaft 4, causing the shaft to rotate.

According to certain embodiments, the motor-generator may comprise a wire coil in magnetic communication with magnetic element(s) present on the shaft. Rotation of the shaft and the magnetic elements relative to the wire coil, creates a current within the wire coil based upon inductive principles.

Due to the shape and orientation of the blades on the rotor, the blades function as an airfoil, causing a resultant force in a predetermined direction when the shaft is rotated. The force causes air to flow through the housing 10, which creates a vacuum at inlet 8, and compresses air through outlet 6.

When a compressed gas storage unit is coupled to outlet 6 or to a next higher pressure stage, the system effectively stores energy in the form of compressed gas. Examples of suitable compressed gas storage units include man-made structures such as metal or composite pressure vessels. Alternative structures which may be suitable for storage of compressed gas include depleted oil or gas fields, as well as naturally-occurring features such as subterranean caverns, and porous geological formations.

Gas flowing from the turbine can be exposed to certain processes prior to being stored or passed onto a next higher pressure stage. For example, as described in detail below liquid may be introduced to the gas to effect heat exchange. The gas can be flowed through a gas-liquid separator to recover liquid therefrom, potentially for storage and/or reuse. Gas can also be flowed through structures such as condensers and heat exchangers.

The system as in Figure 1 or other embodiments described herein can be operated to convert energy stored in the form of compressed gas, into electricity. Specifically, compressed gas can be introduced from a compressed gas storage unit into inlet 8, which acts on rotor 2 to rotate the shaft. Rotation of the shaft of a motor/generator can generate electricity.

Again, as discussed below liquid may be introduced to effect heat exchange with the expanding gas. Accordingly, the expanded gas can be flowed from the turbine through a gas-liquid separator to recover liquid therefrom, potentially for storage and/or reuse. Expanded gas can also be flowed through structures such as condensers, noise reducers, and/or heat exchangers prior to flowing to a next lower pressure stage or to ambient.

While the particular embodiment of Figure 1 shows a turbine configured to selectively receive energy from motor/generator to compress gas for storage, this is not required. According to alternative embodiments, a turbine rotor could be in selective communication with sources of energy other than a motor/generator.

For example, in certain embodiments a turbine rotor could be in communication with another turbine as an energy source. In some embodiments this other turbine could be a wind turbine, Still other forms of turbine that may selectively communicate energy for gas compression, include combustion turbines such as those operating on natural gas. Yet other forms of turbine that may be in selective communication to compress gas, include steam turbines.

In certain embodiments, energy from the energy source could be communicated directly to the rotor of the turbine utilized for energy storage by gas compression. For example, the rotor of the turbine used for gas compression could be located on a same shaft as a second (wind, combustion, steam) turbine responsible for driving the first turbine. Alternatively, the energy source could be in communication with the turbine used for gas compression, through one or more linkages, for example a hydraulic linkage, electronic linkage, electrostatic linkage, magnetic linkage, or mechanical linkage.

Embodiments of the present disclosure that employ a turbine-based system for gas compression and/or expansion, may offer one or more benefits over various other designs. For example, a design having a reciprocating piston may employ a seal between sidewalls of the piston and sidewalls of the housing. This seal adds cost and complexity to the system, and is a possible point of failure that may require regular maintenance.

In addition, movement of the additional seal of the piston-based system against the sidewalls of the housing, may result in losses to friction. Such friction also contributes additional heat in the system. A turbine-based system lacking such a seal between a reciprocating piston and sidewall avoids both types of losses.

Moreover, a piston-based system must withstand the forces caused by repeated compression, without deforming to the point where the seal fails. Accordingly, such a piston may have a substantial mass. A significant amount of energy is therefore consumed to move the mass of the piston, reducing the efficiency of the system. In contrast, a lower amount of energy is required to move the shaft in a turbine-based system.

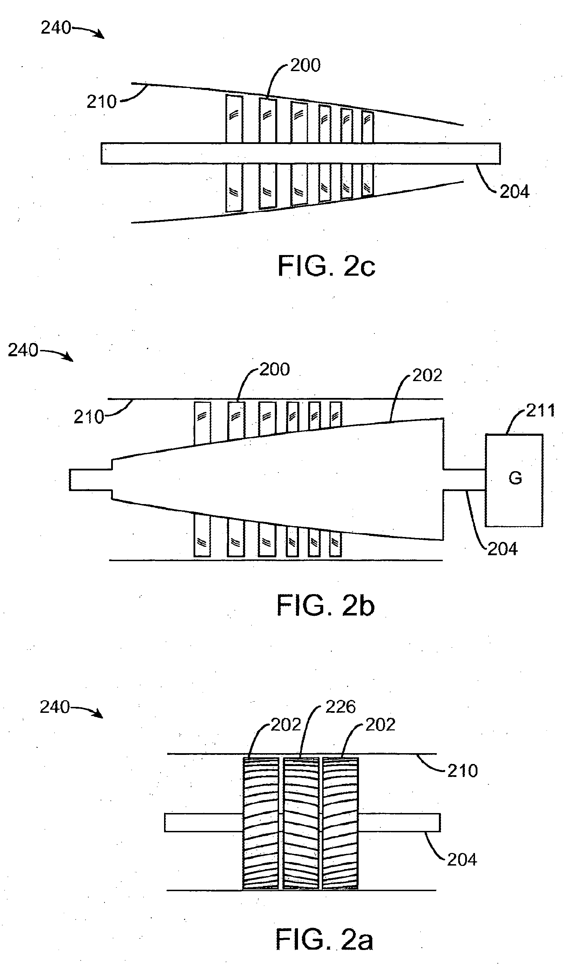

In order to achieve high levels of gas compression, embodiments of the present disclosure may utilize a multi-stage turbine. As illustrated by the particular embodiment of FIG. 2a, a multi-stage axial turbine 224 has a plurality of rotors 202, each of which has a plurality of blades, arranged around a shaft 204.

The axial turbine 224 may further include a stator 226 disposed between rotors. While the rotors 202 rotate with the shaft, the stator 226 is static. The blades of the stator 226 are arranged to oppose the blades of the rotors. The stator may be coupled to housing 210.

The stator serves a number of functions in the turbine. The stator may increase pressure in the system. The stator may also keep gas flowing in an axial direction.

As shown in FIG. 2a, in certain embodiments the inner sidewalls of the housing 210 and the outer sidewalls of the shaft 204 may be parallel to one another. In some embodiments (for example as shown by FIG. 2c) the inner diameter of the inner sidewalls of the housing 210 may decrease along the axis of shaft 204.

In other embodiments (for example as shown in FIG. 2b), the outer diameter of the rotor 202 may vary along its axis to progressively change the space between the rotor and the housing. Figure 2b also shows communication between the shaft 204 of the rotor 202 and a generator 211 (which may be a motor/generator).

It is noted that separate and distinct shaft/rotor combinations are not necessarily required for all embodiments. In certain embodiments, the rotor may comprise an integral structure configured to rotate, with magnetic elements for generating electricity being disposed proximate to wire coil(s) located at an end of the rotor opposite the end comprising the turbine blades. The coil(s) may be arranged with their axes pointing towards the axis of the shaft.

In the particular embodiments of FIG. 2b and FIG. 2c, the volume of the turbine chamber decreases along a left-to-right direction. The reduction in volume serves to match mass flow as the gas is compressed through each stage.

In some embodiments, the system may include a relatively high number of compression and/or expansion stages. If each stage has a pressure ratio of 1.1, a top pressure of 300 atmospheres would utilize about 60 stages. Examples of ranges of a number of stages in a turbine include, but are not limited to, 1-10, 1-20, 1-30, 1-40, 1-50, or 1-60 or more.

In order to optimize the efficiency of such systems, various rotors may be coupled to a plurality of concentric shafts rotating at different velocities.

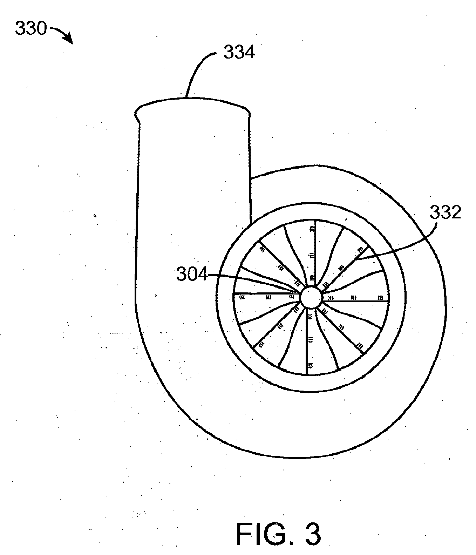

Another form of turbine that may be used to compress gas in an energy storage system according to various embodiments, is a centrifugal turbine. A simplified view of an embodiment of a centrifugal turbine is shown in FIG. 3.

The centrifugal turbine 330 includes a shaft 304 disposed at the center of the turbine. The shaft is coupled to a rotor 332, which has a three-dimensional geometry optimized to move gas radially through the chamber, perpendicular to the axis of rotation of shaft 304. For example, the turbine shown in FIG. 3 may have an inlet port disposed towards the shaft 304 where gas enters the chamber. A spinning shaft 304 turns rotor 332 so that the system acts as a centrifuge, forcing gas to the outer sides of the chamber. The gas then passes through outlet 334 disposed in a sidewall of the chamber as a compressed gas.

Various combinations of axial and centrifugal turbines are possible in compression and/or expansion. A plurality of centrifugal and axial turbines may be coupled to one another in series to optimize the efficiency of the process at different pressures.

In some embodiments, a turbine may be operated in a unidirectional manner for compression and expansion. For example, gas flows in one direction through a centrifugal turbine.

According to certain embodiments, a bi-directional turbine structure may be used. For example, an axial turbine can be operated in a bidirectional manner.

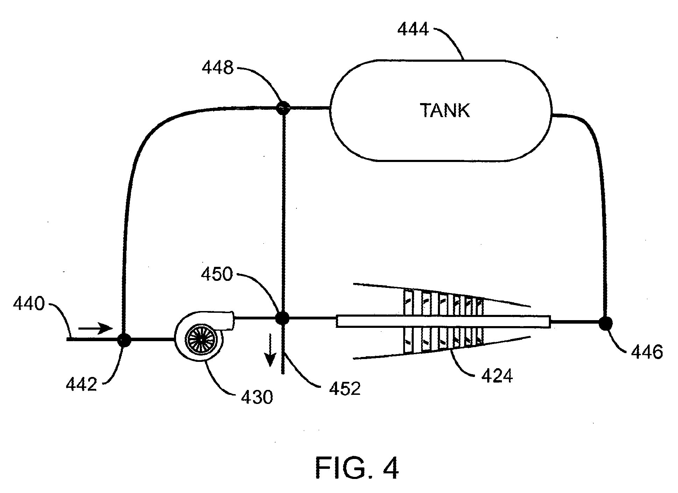

Particular embodiments may employ both unidirectional and bidirectional turbine structures. An example is shown in the multi-stage embodiment of FIG. 4.

Under operation in the compression mode, the inlet 440 takes in low pressure gas and delivers it to centrifugal turbine 430. At this time, a valve 442 is closed to the compressed gas storage unit 444, but open between the inlet and the centrifugal turbine. Electricity is delivered to rotate centrifugal turbine 430 so that it compresses gas and sends it through multi-way valve 450 to a low pressure side of axial turbine 424. In some embodiments, there may be a plurality of axial turbines connected in series. A valve 446 is open between the high pressure side of the axial turbine and the compressed gas storage unit 444, so that the tank is filled with compressed gas.

An expansion process can be achieved by altering the valve states. Specifically, valve 446 is opened to allow fluid communication between the compressed gas storage unit and the high pressure side of the axial turbine. The flow of gas through the axial turbine 424 drives it to generate electricity.

The gas expanded by this stage, is then flowed through valves 450, 448, and 442 to the inlet of the centrifugal turbine. The further expanding gas drives the centrifugal turbine to generate even more electricity. The expanded gas is then routed through multi-way valve 450 to exhaust port 452.

In the embodiment of FIG. 4, the valve 448 is in selective communication with the storage unit 444. This allows a single-stage mode of operation in both compression and expansion, utilizing just the centrifugal compressor.

Although the particular embodiment of Figure 4 uses centrifugal turbine 430 as a first stage, this is not required. Other embodiments may use another type of turbine arranged in series, in the compression and/or expansion process.

In some embodiments, a system may include one or more bypasses. This allows only selected turbines out of a total plurality of available turbines, to be used for either compression or expansion processes.

For example, in a compression process, valve 442 may be open between inlet 440 and valve 448, while valve 448 is open between valve 442 and valve 450, and valve 450 is open between valve 448 and the axial turbine 424. This configuration bypasses centrifugal turbine 430 in a compression process. Similarly, in an expansion process, valve 452 can be configured to exhaust expanded gas directly to the outlet, bypassing centrifugal turbine 430.

Multiple turbines may be disposed on a single shaft with one or more motor/generators, or on separate shafts with separate motor/generators. For example, in the multi-stage embodiment of Figure 4, the centrifugal turbine will always turn in the same direction, while the axial turbine will turn one way during compression and in the opposite direction during expansion. Thus the centrifugal turbine 430 may be coupled to a first motor/generator, and axial turbine 424 may be coupled to a second motor/generator. Alternatively, both turbines may be in communication with one motor-generator, with a mechanical reversing linkage used on either the axial or the centrifugal turbine to keep the shafts rotating in the same direction as each other.

In various embodiments, the same turbine(s) may be used for both the gas compression and gas expansion processes. In certain embodiments, separate turbine(s) may be dedicated to performing these gas compression or expansion functions.

A property of certain embodiments is to maintain gas within a desired temperature range during compression and/or expansion. In some embodiments this temperature range provides for isothermal or near-isothermal energy transfer.

Operation of embodiments according the present disclosure may be characterized by a magnitude of temperature change of the gas being compressed or expanded. According to one embodiment, during a compression cycle the gas may experience an increase in temperate of 100 degrees Celsius or less, a temperature increase of 60 degrees Celsius or less, a temperature increase of 50 degrees Celsius or less, a temperature increase of 40 degrees Celsius or less, a temperature increase of 30 degrees Celsius or less, a temperature increase of 20 degrees Celsius or less, a temperature increase of 10 degrees Celsius or less, or a temperature increase of 5 degrees Celsius or less.

In some embodiments, during an expansion cycle the gas may experience a decrease in temperature of 100 degrees Celsius or less, 15 degrees Celsius or less, or 11 degrees Celsius or less.

In order to achieve isothermal compression and expansion, embodiments of the present disclosure may use liquid for heat exchange with gas in the system. The liquid may be introduced into the gas itself as a heat exchange medium.

In a compression process, liquid may be added to a gas which is heated during compression, thereby absorbing heat from the gas. Conversely, in an expansion process, liquid may be introduced into the gas which is cooled during expansion, thereby contributing heat to the system. System performance may be improved by introducing liquid at a lower temperature during compression and at a higher temperature during expansion.

In embodiments utilizing injected liquid as a heat exchange medium, the temperature change experienced by the expanding gas may near the freezing point of the liquid from an initial point of room temperature. In certain embodiments, the liquid that is injected for heat exchange may comprise water having a freezing point of 0 degrees Celsius.

In general, liquid introduced to accomplish heat exchange according to embodiments of the present disclosure, is not expected to undergo combustion within that chamber. Thus while the liquid being injected to perform heat exchange may be combustible (for example an oil, alcohol, kerosene, diesel, or biodiesel), in many embodiments it is not anticipated that the liquid will combust within the chamber. In at least this respect, liquid introduction according to embodiments of the present disclosure may differ from cases where liquids are introduced into turbines and motors for combustion.

A system according to embodiments of the present disclosure may include a thermal energy storage component. For example, a system may retain in an insulated vessel, liquid that has been heated during a compression process. This stored heated liquid may be used later for adding heat to an expansion process and thereby increase energy efficiency.

Conversely, a system may retain in an insulated vessel, liquid that has been cooled by an expansion process. This stored cooled liquid may be later used to absorb heat during a compression process.

In some embodiments, a thermal storage medium may comprise the same liquid that is introduced to the gas for heat exchange. In certain embodiments, the thermal storage medium may comprise a different liquid that has itself exchanged heat with the introduced liquid. An example is where water is introduced to compressed/expanding gas for heat exchange, and then the water exchanges heat with an oil that is stored in an insulated vessel.

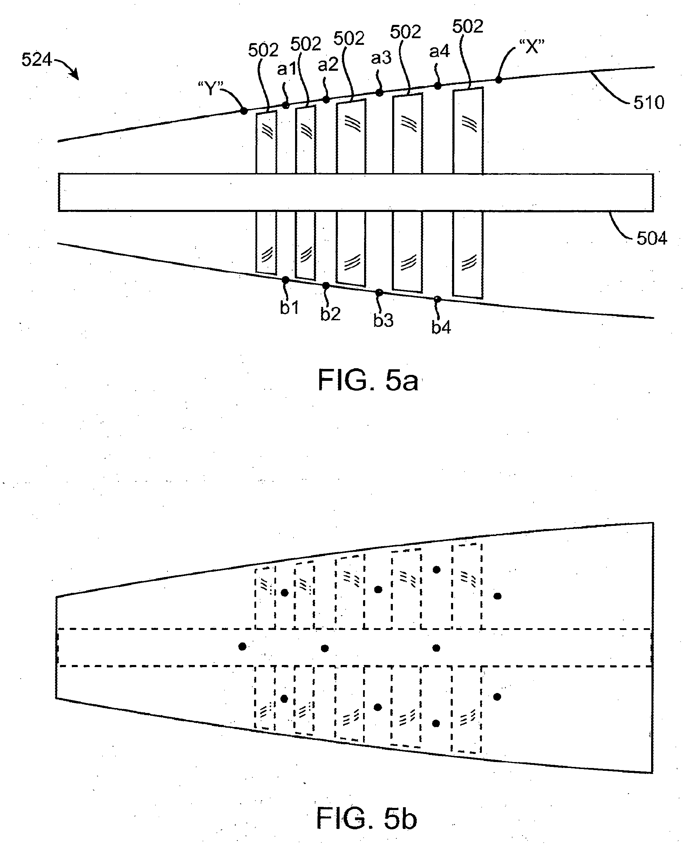

FIG. 5(a) is a cross-sectional view of an embodiment of an axial turbine 524 including a shaft 504, a housing 510, and five rotors 502. The turbine may include a plurality of liquid orifices disposed in sidewalls of housing 510 between the rotors 502 at locations b1-b4 and a1-a4. A liquid orifice may be disposed between each rotor as shown. Alternatively, an orifice may be disposed between every other rotor 502, such as locations a1 and a3.

Various embodiments may determine the number and spacing of orifices depending upon certain factors. One example of such a factor is a number of rotors in a particular turbine.

The orifices may be disposed in a single row along a sidewall of the housing 510, as shown by orifices a1-a4. Alternatively, the orifices may be diametrically opposed to one another, as shown by orifices a1-a4 and b1-b4. In some embodiments, the orifices may be arranged in a particular pattern, such as an alternating pattern as shown by FIG. 5(b).

Returning to FIG. 5(a), one or more orifices may be disposed upstream or downstream to rotors 502 at the inlet or outlet of the turbine, as indicated by orifice locations X and Y. There may be a plurality of orifices X and Y along both axial and circumferential planes in various embodiments. The orifices may be configured to discharge either hot or cold liquid depending on whether a compression or expansion process is being conducted.

Orifices at only one end of the turbine may be active during a particular process. For example, in a compression process, orifice X may be active to introduce lower temperature liquid into the gas stream while orifice Y is inactive.

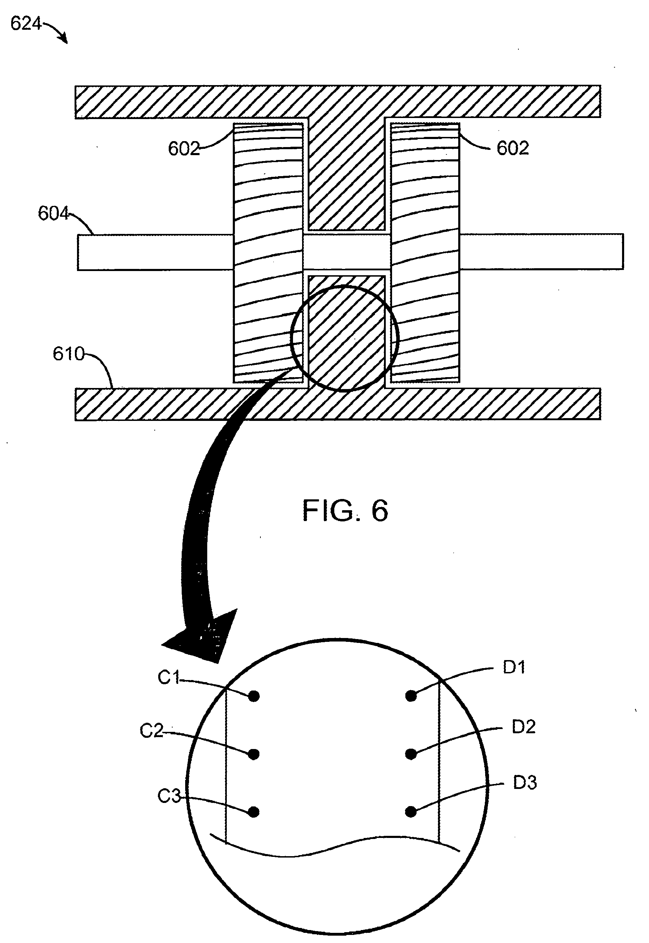

As discussed above with respect to FIG. 2a, an axial turbine may have a stator 226 disposed next to a rotor 202. FIG. 6 shows an axial turbine 624 with two rotors 602 coupled to shaft 604, and a stator disposed between the rotors.

As shown by section "A" in the figure, an orifice may be located directly on the stator. A plurality of orifices may be disposed on various surfaces of the stator to optimize desired characteristics, such as atomization and liquid concentration. As shown in section A, orifices C1-3 and D1-3 may be mounted, for example, on leading and trailing edges of stator blade 628.

In such an embodiment, liquid may be delivered to multiple orifices simultaneously with either high temperature or low temperature liquid during compression and expansion stages. In some embodiments, liquid may only be delivered to selected orifices during a particular process. A single orifice, or a plurality of orifices, may be disposed on every stator in the turbine, on every other stator, every third stator, or any combination of stators or stator blades.

The inclusion of orifices between stages of certain embodiments, may increase the length of the turbine. For example, the inclusion of inter-stage orifices may involve increasing the distance between the stages. Moreover, in some embodiments a structure may be present between stages to separate the introduced liquid from the airflow.

The stator and other components of the turbine may be fitted with fluid channels to change the temperature of the components of the turbine itself. This may further enhance a desired heat transfer. For example, in certain embodiments the stator and/or rotor blades could be cooled.

Possible benefits of including a liquid component in the system may extend beyond controlling thermal properties of the compressed/expanding gas. For example, when water and air are used for the liquid and gas, the increased density of the flowing fluid due to humidity and the presence of liquid water, may help to transfer momentum to the turbine. In particular, the liquid contributes mass to the gas-liquid mixture. As momentum is dependent upon mass, more momentum may be transferred from a given volume of an air-water droplet mixture, than from the same volume of air. This may increase the power density as a result.

In addition, the presence of water may affect interwarming in certain embodiments. For example, where liquid is not separated out between stages, during expansion the presence of liquid water may serve to transfer heat to cool air between stages.

The pressure ratio of any given stage in a gas turbine, is typically low. Accordingly, desired thermal performance of a turbine could be achieved using intercoolers and/or interwarmers. A heat exchange mechanism could be present between each stage or between groups of stages. For example, this heat exchange mechanism could comprise a liquid spray oriented to substantially avoid entrainment into the main airflow (e.g. by being sprayed crosswise to the gas flow), thus minimizing the amount of droplets impinging on turbine blades.

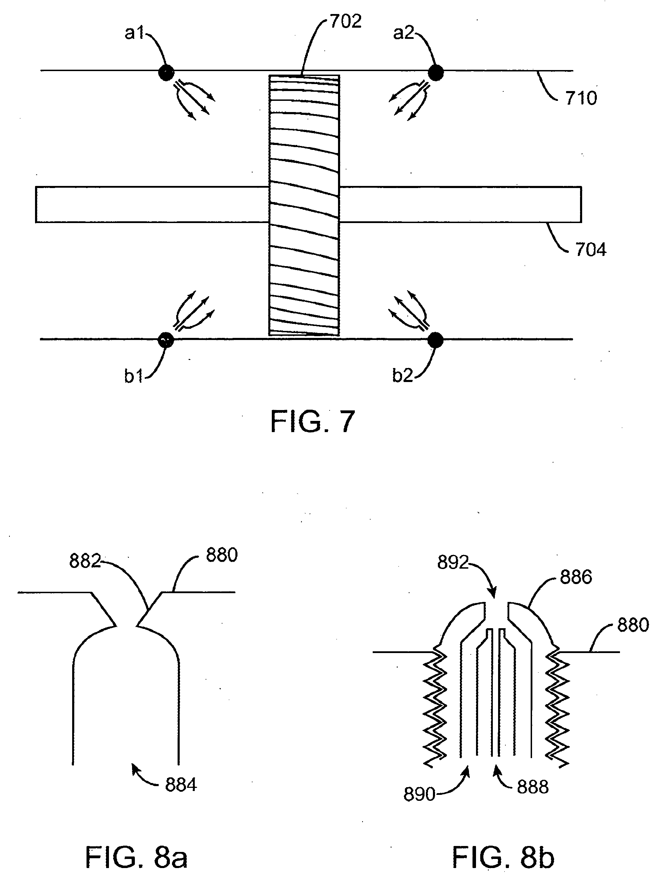

In some embodiments, a plurality of spray orifices may be arranged to function as a stator. For example, FIG. 7 shows orifices a1, a2, b1, and b2, disposed in sidewalls of housing 710, and directed towards rotor 702. Although FIG. 7 only shows four orifices, a plurality of orifices may be disposed around a circumference of a housing as shown, for example, in FIG. 5b.

In an embodiment, when the rotor is turning to move gas from the left side of the figure to the right side of the figure, liquid may be forced through orifices a2 and b2. The force of the spray interacts with the gas, directing the gas towards shaft 704 to maintain an axial gas flow.

Although the orifices shown in FIG. 7 are disposed at an angle towards rotor 702 this is not required. In certain embodiments the orifices may be disposed perpendicular to shaft 704, or angled in a direction away from the operative rotor.

When an axial turbine includes a plurality of rotors, orifices acting as stators may be divided into sets, with only one set operative for each of a compression and expansion process. For example, one set of orifices may be disposed to act as a stator when the flow of gas through the turbine is from right to left, and another set of orifices may act as a stator when the flow of gas through the turbine is from left to right.

The orifices through which liquid enters a turbine chamber or a mixing chamber can be configured differently from other orifices of the same embodiment, or from the orifices present in other embodiments.

For example, as shown in FIG. 8a, an orifice may be formed by shaping the material of the surface in which it is disposed. Surface 880 may thus be a surface of a sidewall in a turbine.

An orifice may be formed in surface 880 by forming a notch 882, and forming a cavity 884 coupled to the notch. Pressurized liquid, or a combination of pressurized liquid and gas, are delivered to the cavity 884 and pass through notch 882 to form a spray plume within the turbine. The surface 880 can be any interior surface of a turbine, such as a surface of a housing, a stator, a rotor, or a shaft.

As shown in FIG. 8b, an orifice can be present in a replaceable nozzle installed in surface 880. The nozzle 886 shown in FIG. 8b includes a liquid channel 888, a gas channel 890, and an outlet 892. Liquid is delivered through the liquid channel and meets with pressurized gas, which atomizes the liquid to deliver a spray plume into the turbine chamber. The gas may be included to boost the pressure under which the liquid is delivered into the turbine in order to overcome the pressure in the turbine chamber.

The nozzle 886 of FIG. 8b is detachably coupled to surface 880 so that a particular design of nozzle can be separately fabricated and installed in the storage system. The detachable coupling may allow for off-the-shelf or custom nozzles to be installed in a particular surface, as well as ease of maintenance and easy replacement.

A variety of different orifices may be formed within a single turbine, mixing chamber, and/or in different turbines and/or mixing chambers within an energy storage system. For example, the pressure within a turbine may increase from one side to another. Such a turbine may have a first type of orifice disposed at the low pressure side that is designed to operate under lower pressures, and a second type of orifice disposed at the high pressure side that is designed to operate under higher pressures.

The orifices may be selected to optimize spray characteristics at particular stages of the compression and expansion processes. For example, some orifices are better suited to higher pressure spray applications. Such orifices may be disposed closer to portions of an energy system with higher internal pressures, while orifices better suited to lower pressure applications may be located at low pressure portions of the system.

In addition, different orifices can be selected for different spray characteristics. Examples of such characteristics include but are not limited to atomization, velocity of the spray plumes, breakup length, spray pattern, spray cone angle, fan angle, angle to surface (for fan sprays), and droplet spatial distribution.

One specific performance characteristic is droplet size. Droplet size may be measured using DV50, Sauter mean diameter (also called SMD, D32, $d_{32}$ or D[3, 2]), or other measures. Embodiments of orifices/nozzles may produce liquid droplets having SMD's within a range of between about 10-200 um. Examples of droplet sizes produced by orifice/nozzle embodiments include but are not limited to those having a SMD of about 200 microns, 150 microns, 100 microns, 50 microns, 25 microns, and 10 microns.

Another performance characteristic is flow rate. Embodiments may produce a flow rate of between about 20 and 0.01 liters per second. Examples of flow rates of embodiments of orifices/nozzles of the present disclosure are 20, 10, 5, 2, 1, 0.5, 0.25, 0.1, 0.05, 0.02, and 0.01 liters per second.

Another performance characteristic is breakup length. Liquid output by embodiments of nozzles may exhibit a breakup length of between about 1-100 mm. Examples of breakup lengths of sprays of liquid from nozzles according to the present disclosure include 100, 50, 25, 10, 5, 2, and 1 mm.

Embodiments of orifices/nozzles may produce different types of spray patterns. Examples of spray patterns which may be produced by various embodiments include but are not limited to, hollow cone, solid cone, stream, single fan, and multiple fans.

Embodiments of orifices/nozzles may produce spray cone angles of between about 20-180 degrees. Examples of such spray cone angles include but are not limited to 20°, 22.5°, 25°, 30°, 45°, 60°, 90°, 120°, 150°, and 180°.

Embodiments of orifices/nozzles may produce spray fan angles of between about 20-360 degrees. Examples of such fan angles include but are not limited to 20°, 22.5°, 25°, 30°, 45°, 60°, 90°, 120°, 150°, 180°, 225°, 270°, 300°, 330°, or 360°. Examples of fan spray angles to surfaces include but are not limited to 90°, 80°, 60°, 45°, 30°, 22.5°, 20°, 15°, 10°, 5°, or 0°.

Droplet spatial distribution represents another performance characteristic of liquid spray orifices/nozzles. One way to measure droplet spatial distribution is to measure the angle of a sheet or cone cross-section that includes most of the droplets that deviate from the sheet. In orifice/nozzle designs, this angle may be between 0-90 degrees. Examples of such angles possibly produced by embodiments include but are not limited to 0°, 1°, 2°, 5°, 7.5°, 10°, 15°, 20°, 25°, 30°, 45°, 60°, 75°, or 90°.

According to certain embodiments, it may be important to control the amount of liquid introduced into the chamber to effect heat exchange. The ideal amount may depend upon a number of factors, including the heat capacities of the gas and of the liquid, and the desired change in temperature during compression or expansion.

The amount of liquid to be introduced may also depend on the size of droplets formed by the spray orifice/nozzle. One measure of the amount of liquid to be introduced, is a ratio of the total surface area of all the droplets, to the number of moles of gas in the chamber. This ratio, in square meters per mole, could range from about 1 to 250 or more. Examples of this ratio which may be suitable for use in embodiments of the present disclosure include 1, 2, 5, 10, 15, 25, 30, 50, 100, 125, 150, 200, or 250.

Certain designs may facilitate the fabrication of individual orifices/nozzles. Certain designs may also permit the placement of a plurality of orifices/nozzles in a given surface proximate to one another, which can enhance performance.

A variety of different types of spray structures can be employed. Examples of spray structures which may be suited for use according to various embodiments, include but are not limited to impingement nozzles, rotating disk atomizers, electrostatic atomizers, pressure swirl nozzles, fan nozzles, impact nozzles, air-assisted nozzles, jets, and rotating cup atomizers.

In certain embodiments, a plurality of sprayers may be configured to interact with one another to produce a spray having the desired character. For example, the spray of one nozzle may fill a vacant portion of the spray pattern of an adjacent nozzle.

Certain characteristics of an energy storage system may prompt different orifice locations and types. The liquid that is sprayed through the nozzles will have different physical characteristics depending on the temperature of the liquid, so different orifices may be disposed within a system to optimize spray characteristics based on liquid temperature. When the liquid has a different temperature for a compression process than for an expansion process, a single system may have two sets of orifices, with only one set operative for each process. In addition, the direction and type of orifice may vary between the sets, and within particular areas of a system within a particular set.

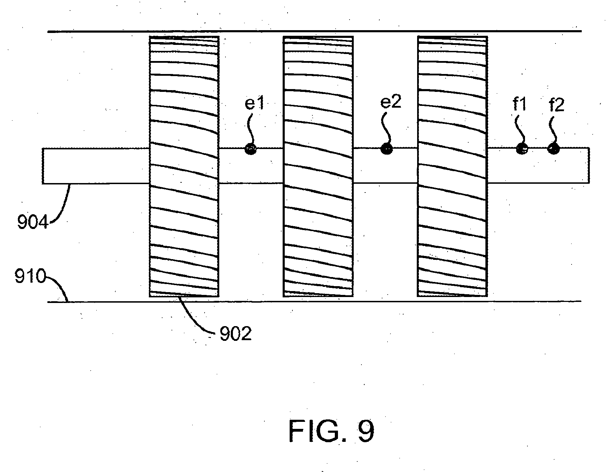

As shown by the embodiment of FIG. 9, orifices may be disposed in outer surfaces of the turbine shaft 904. In such an embodiment, liquid is fed into channels within the shaft, and the centrifugal force of the spinning shaft acts to supply force to the liquid so that it is sprayed though the orifices. The spinning shaft 904 thus acts to pump liquid out through the orifices. This pump action can reduce the need to supply pressure to the liquid through some other mechanism, such as an actively powered pump device.

As shown in FIG. 9, orifices may be disposed at a plurality of positions along the shaft, including between rotors 902 such as orifices e1 and e2, and at an end of the shaft, such as orifices f1 and f2. A plurality of orifices may be disposed around a circumference of the shaft. As discussed with respect to FIG. 8a and 8b, different embodiments may have different orifices and nozzles, and only selected orifices may be active for a compression or expansion process. For example, two sets of nozzles could be fed through two different channels through the shaft, so that one channel or the other could be supplied with liquid during compression or expansion.

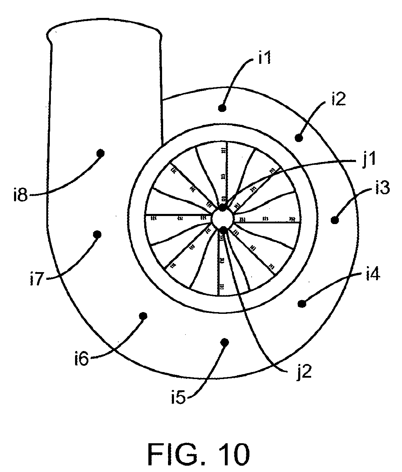

When a centrifugal turbine is used in an energy storage system, different types and configurations of orifices and nozzles may be disposed at different locations, in a manner similar to an axial turbine. For example, with reference to the embodiment of FIG. 10, orifice locations i1-i8 may be disposed in sidewalls of the housing, and orifices may be disposed towards the entrance to the turbine chamber as indicated by locations j1 and j2.

In a manner similar to embodiments utilizing the axial turbine, different types of orifices and nozzles can be disposed at these locations to optimize spray characteristics for different liquid temperatures, chamber pressures, orifice locations, and compression and expansion processes.

A centrifugal turbine may comprise a plurality of blades shaped to move gas from the inlet to an outlet disposed in a sidewall of the housing.

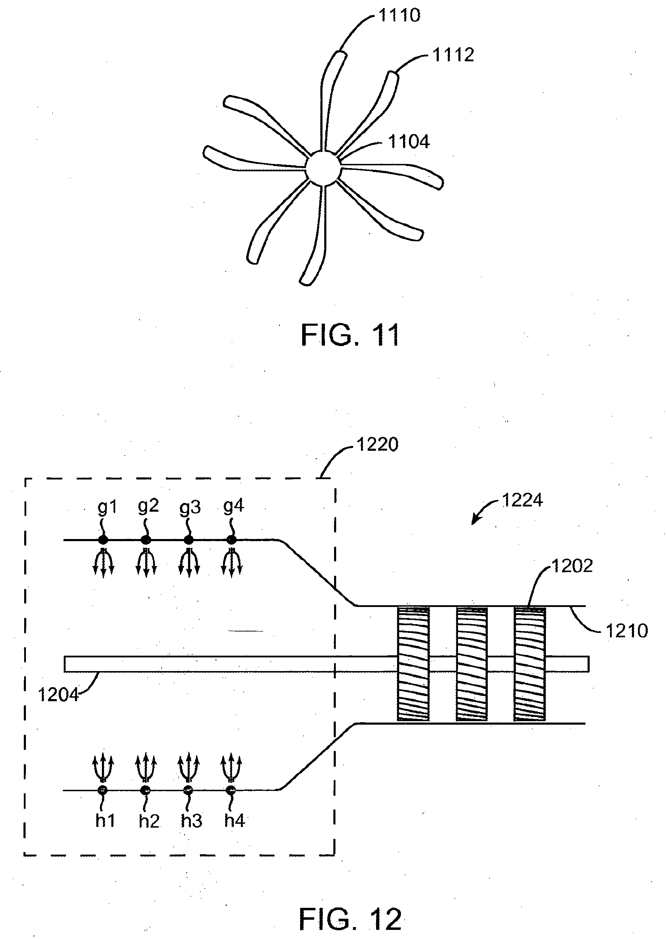

In an embodiment, some of the blades in the rotor may be shaped differently from one another. For example, as shown in FIG. 11, a blade 1110 mounted to shaft 1104 is shaped with a curvature that is opposite to adjacent blade 1112. In such a configuration, the turbulence in the turbine is increased, thereby keeping more of the liquid entrained.

Thus according to certain embodiments, the turbine blades may be designed to accomplish multiple purposes. While their main purpose may be to compress (or expand) flowing gas, the aerodynamic surfaces of the blades may impart additional motion to the air/water mixture. This motion may maintain separation of the water droplets, allowing them to be passed on while retaining a large gas-liquid interface surface and hence effective heat exchange properties.

Although the blades in FIG. 11 are mirror images of one another, the differences between blade shapes may be less drastic. For example, alternating blades may be curved and flat, or only a portion of adjacent blades may be different from one another. Every other blade may be different, or every third or fourth blade, etc. In an embodiment, only one blade may be differently shaped from the others.

Due to the relatively high velocity at which a turbine rotor spins, the presence of liquid droplets in the gas stream may damage the spinning rotors on impact. Although the damage caused by a single collision is minimal, the cumulative damage imparted by many collisions over time may shorten the useful life of an ordinary rotor. Embodiments of the present disclosure may use one or more techniques to minimize damage to the rotors.

The energy in a particular collision is proportional to the masses of the colliding objects. Accordingly, one technique to minimize rotor damage is to introduce a highly atomized liquid spray. Higher levels of atomization results in smaller individual liquid droplets, so that the energy in each collision between a liquid droplet and a rotor is reduced.

The above approach reduces energy of collision by reducing mass, as the energy in a collision is proportional to the mass of the droplet. In addition, smaller droplets are more quickly entrained in the air, following streamlines which are generally tangential near the surface of a turbine blade. This reduces the normal component of the droplet velocity. Energy is proportional to the square of that velocity.

The type of orifice, or nozzle, through which the liquid is sprayed may be selected to increase atomization. For a nozzle similar to the nozzle shown in FIG. 8b, the gas pressure in gas channel 890 may be increased to improve atomization. In addition, smaller orifice sizes can cause higher degrees of atomization, so a larger quantity of small nozzles may be used in a particular system.

Further techniques for mitigating damage to the turbine, include the design and materials of the turbine blades and rotors themselves. For example, the blades of a rotor in an energy storage system may be thin and flexible to better absorb energy and locally deflect under the impact of the droplets.

Moreover, while many conventional gas turbine designs require cooling through channels embedded in the blades to prevent excessive temperatures, operating near isothermally according to embodiments of the present disclosure allows for thin blades (without cooling channels) to be used. Such thin blades can be more aerodynamically efficient, lighter weight, and less expensive.

Another possible benefit of using thin, lightweight blades in a turbine, is that lighter blades must withstand lower stresses resulting from rotating at high speed. This, in turn, allows less material to be used in the blades.

Still another potential benefit of using thin, inexpensive turbine blades is the possibility of replacement during regular maintenance. Even if some pitting occurs due to liquid droplets hitting the blades, a blade lifetime of one year or so is practical for a regular replacement schedule.

Significant levels of centrifugal and pneumatic force are experienced by an operating turbine blade, so flexible blades may be configured so that they assume a shape optimized to convey gas when they are spinning. Examples of flexible materials include metals such as titanium alloy and nitinol.

Suitable materials also include thermosetting composites such as carbon fiber with an epoxy matrix or fiberglass with a polyester matrix. The material may also include a thermoplastic material such as polyurethane, polyamide, polyether-ether-ketone, polyetheramide, polycarbonate, or another suitable engineering thermoplastic, that is reinforced with a fiber such as glass, carbon, carbon nanotubes, or other commercially available materials.

In some embodiments non-reinforced polymers may be used for the blades, or for a portion of the blades, to enhance the elasticity of impacted surfaces. A blade may comprise a substrate, such as a metal, over which a polymer is formed to make the surface more elastic, thereby preventing damage from impacts with liquid droplets.

A blade may be coated with an elastic material for the same reason. The material may be a low modulus rubber or a high modulus polymer such as polyamide. In an embodiment, the blade coating may be stripped and replaced periodically to extend the life of the blades.

In certain embodiments, the rotor blades may comprise a high-hardness material, such as a ceramic including alumina, zirconia, or silicon glass. The high-hardness material may be a coating over a substrate, for example diamond-like carbon (DLC).

In some embodiments, the blade material may be a hydrophilic material. A fully wetted hydrophilic surface may serve as a cushion between the droplets and the blades, and may distribute the impact force between blade and droplet over a larger area than a non-hydrophilic surface.

In certain embodiments, the blade material may be a hydrophobic material. The use of hydrophobic materials for exposed surfaces within the turbine may prevent or reduce wetting. This may maintain more droplets entrained in the gas by causing droplets to bounce off of the surface rather than wetting it.

The blades of a turbine rotor are typically disposed as close to sidewalls of a housing as possible in order to create a seal, or near-seal, between the rotor and the housing. Both the blades and housing expand and contract as a function of their coefficient of thermal expansion (CTE).

A traditional turbine design may be configured to operate at high temperatures or over broad temperature ranges. Thus, a material may be used for the turbine blade having a CTE compatible with the housing or other components, to optimize efficiency while preventing contact/abrasion between the rotor and the housing.

By contrast, certain embodiments of the present disclosure may introduce liquid to effect gas-liquid heat exchange during gas compression and/or expansion. This allows gas compression and/or expansion to occur under isothermal or near-isothermal conditions, and/or within a predetermined temperature range. Expected operation under this relatively narrow temperature range, allows materials with relatively high CTE's to be employed for turbine components, including the turbine blades.

Moreover, another potential problem faced by traditional turbines operating at high temperatures and/or across broad temperature ranges, is the difference in CTE between different materials. For example, mismatch in CTE between components of different materials can cause leaks or cracks when joints expand or contract, and can cause fasteners to loosen over time. However, because certain embodiments are expected to operate over a limited temperature range, the effects CTE differential for turbine components is not as pronounced, allowing a broader variety of materials to be used.

In an embodiment, the liquid spray may be configured to accumulate continuous liquid over sidewalls of the housing. This may desirably create a viscous seal between the rotors and the housing.

In a manner analogous to the sealing mechanism of a liquid ring compressor, the liquid introduced for gas-liquid heat exchange may fill the small gap between the turbine rotor and the housing. In some embodiments this gap may be increased to reduce viscous drag forces.

Although the above embodiments are described with orifices disposed within a turbine chamber, this is not required. In some embodiments, liquid can be sprayed into an upstream mixing chamber in addition to, or in place of, spraying into the turbine itself.

As shown by FIG. 12, a plurality of orifices g1-g4 and h1-h4 may be disposed along sidewalls of mixing chamber 1220, which is coupled to axial turbine 1224. Such a configuration allows the spray droplets to disperse evenly through the gas stream before entering a turbine.

In another embodiment, a mixing chamber may be coupled to a centrifugal turbine. The sidewalls of the mixing chamber 1220 may have a larger diameter than sidewalls of turbine housing 1210, as shown in FIG. 12. In other embodiments, the sidewalls may have the same diameter, or a smaller diameter, than housing 1210.

In general, liquid introduced to a gas compression or expansion chamber to accomplish heat exchange according to embodiments of the present disclosure, is not expected to undergo combustion within that chamber. Thus while the liquid being injected to perform heat exchange with a compressed or expanding gas may be combustible (for example an oil, alcohol, kerosene, diesel, or biodiesel), in many embodiments it is not anticipated that the liquid will combust within the chamber. In at least this respect, liquid introduction according to various embodiments may differ from cases where liquids are introduced into turbines for combustion.

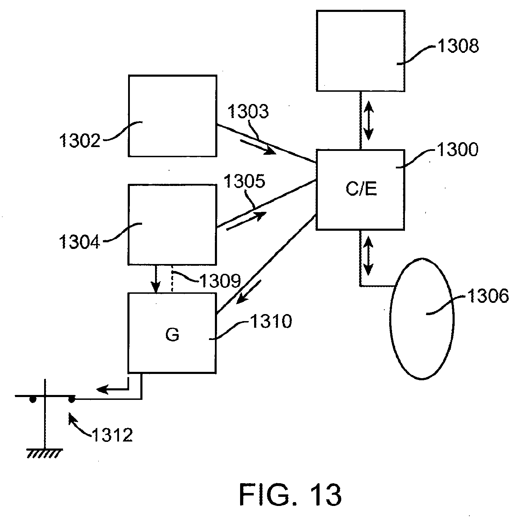

Figure 13 is a schematic view illustrating the relationship between a reversible compressor/expander apparatus and various other system elements. In particular, the reversible compressor/expander apparatus 1300 is in selective fluid communication with compressed gas storage unit 1306. The reversible compressor/expander apparatus may also be in selective thermal communication with thermal storage unit 1308.

In a storage mode of operation, the reversible compressor/expander apparatus 1300 is configured to operate as a compressor. Power received from first power source 1302 (which may be based upon the combustion of fossil fuel) through a linkage 1303 and/or power received from second power source 1304 (which may be based upon an intermittent renewable energy) through a linkage 1305 is used to compress gas for storage in compressed gas storage unit 1306.

In certain embodiments one or more linkages may be mechanical in nature (for example a rotating shaft). Alternatively, this received power may be communicated through other types of linkages, including but not limited to electrical, magnetic, electro-magnetic, hydraulic, pneumatic, or thermal.

In an energy generation mode of operation, the reversible compressor/expander apparatus 1300 is configured to operate as an expander. Compressed gas is flowed from storage unit 1306 to apparatus 1300, where its expansion drives generator 1310 to output electrical power, for example to grid 1312.

In certain embodiments this generator 1310 may also have a link 1309 with the energy source 1304 in order to generate power directly therefrom. Thus embodiments could leverage the use of a generator already present in an existing power source (for example the generator of a wind turbine).

In certain embodiments, the reversible compressor/expander 1300 may operate based upon reciprocation of a moveable member (e.g. a piston) within a chamber. According to other embodiments, the reversible compressor/expander 1300 may operate based upon rotation of a moveable member within a chamber. For example, the reversible compressor/expander may comprise a turbine whose blades are rotated to compress gas, and whose blades are in turn driven to rotate by expanding gas.

As is described extensively in the Publication, the reversible compressor/expander may operate in conjunction with the introduction of liquid for gas-liquid heat exchange with the gas that is being compressed or expanding. Such gas-liquid heat exchange allows the gas compression and/or expansion to take place within a limited temperature range, which may be close to ambient temperature.

By avoiding large temperature changes in the compression or expansion of gas, embodiments employing gas-liquid heat exchange allow energy to be stored and recovered under thermodynamically favorable conditions. Moreover, gas compression and expansion under a limited temperature regime close to ambient, may offer additional benefits.

Specifically, traditional combustion turbines typically employ thick blades. These blade thicknesses can accommodate internal channels for carrying a cooling fluid, allowing the blades to cope with high temperatures. For example, blades of combustion turbines may be exposed to temperatures as high as 1100-1700°C.

Such conventional turbine blades may be made from corrosion-resistant materials exhibiting relatively low coefficients of thermal expansion such as stainless steel, and are designed to be rigid in order to maintain tight clearance with the inner wall of the turbine housing. The complex structure and stringent temperature requirements required for conventional turbine blades can render them relatively expensive and difficult to replace.

By contrast, gas compression/expansion for energy storage in conjunction with gas-liquid heat exchange, may take place within a limited temperature range that is close to ambient. Gas undergoing compression or expansion may experience temperature change within a range between ambient and a phase change temperature of a liquid being introduced for heat exchange.

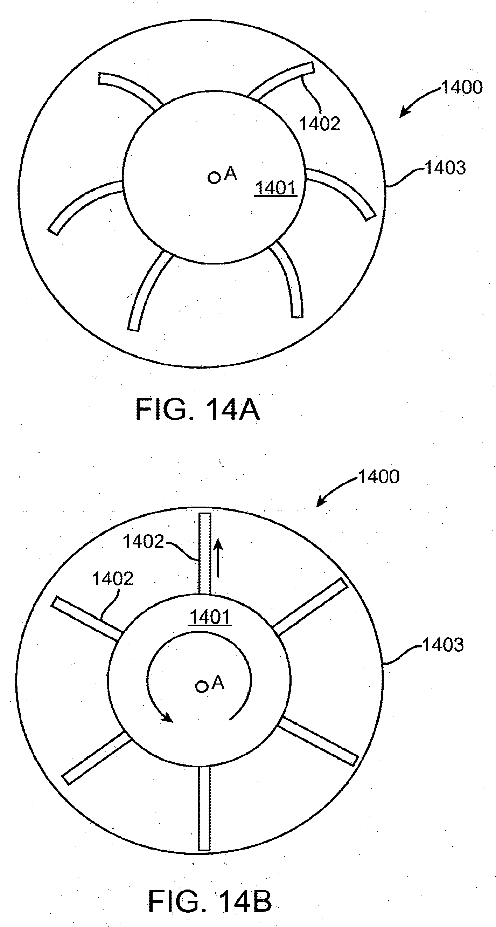

Accordingly, Figure 14A shows a partial simplified view of a turbine 1400 comprising rotor 1401 and attached blades 1402 according to an embodiment. The rotor and blades are configured to rotate about an axis A within housing 1403.

In this embodiment, the turbine blades are fashioned out of a smaller amount of material in order to reduce their cost. Hence when the rotor of the turbine is stationary or moving at a low speed as shown in Figure 14A, the blades do not necessarily assume a position optimal to be driven by expanding gas (or to be driven to efficiently compress gas).

Once the turbine rotor turns at a certain rate about the axis A, however, Figure 14B shows that the resulting centripetal force F causes flexion in the blades to assume this optimal profile. In this manner, inherent energy of rotation in the turbine is relied to impart a structural feature (rigidity) and thereby reduce the cost of replaceable components (i.e. the blades). This characteristic is allowed by the expected operation of the turbine over a relatively narrow temperature range.

One potential benefit of the use of flexible turbine blades, is the possibility of regular replacement over the lifetime of a turbine. That is, the reduced mass of the blades may reduce their replacement cost and facilitate handing for regular insertion/removal from the turbine (e.g. as a cartridge or other modular form factor). Such regular replacement of turbine blades can address issues relating to wear of the blades resulting from regular introduction of liquid droplets into the turbine. Thus even if some pitting of the blades is attributable to the impact of liquid droplets, replacement of the reduced mass blades at low cost according to a regular schedule, could avoid future failures.

Examples of materials from which flexible blades may be fashioned (in whole or in part), include metals such as aluminum, stainless steel, titanium alloy, and nitinol. Other examples of suitable materials also include thermosetting composites such as carbon fiber with an epoxy matrix, or fiberglass with a polyester matrix. The blade material may also include a thermoplastic material such as polyurethane, polyamide, polyether-ether-ketone, polyetheramide, polycarbonate, or another suitable engineering thermoplastic, that is reinforced with a fiber such as glass, carbon, carbon nanotubes, or other commercially available materials.

Particular embodiments could employ a bimetallic material, such as a sandwich of two metals. Certain such embodiments could bend more or less depending upon the temperature and materials' coefficients of thermal expansion.

In some embodiments non-reinforced polymers may be used for the blades, or for a portion of the blades, to enhance the elasticity of impacted surfaces. A blade may comprise a substrate, such as a metal, over which a polymer is formed to make the surface more elastic, thereby preventing damage from impacts with liquid droplets.

A blade may be coated with an elastic material for the same reason. The material may be a low modulus rubber or a high modulus polymer such as polyamide. In an embodiment, the blade coating may be stripped and replaced periodically to extend the life of the blades.

In certain embodiments, the rotor blades may comprise a high-hardness material. According to various embodiments the material of the blades may be selected from carbon composites, aluminum, titanium, stainless steel, other alloys, various plastics, or ceramics including alumina, zirconia.

In some embodiments, the blade material may be a hydrophilic material. A wetted hydrophilic surface may serve as a cushion between the droplets and the blades, distributing impact force between blade and droplet over a larger area than a non-hydrophilic surface.

In certain embodiments, the blade material or a coating of the blade may be hydrophobic. The use of hydrophobic materials for exposed surfaces within the turbine may prevent or reduce wetting. This may maintain more droplets being entrained in the gas by causing droplets to bounce off of the surface rather than wetting it.

Figures 14A-B show an embodiment of a turbine that is simplified. In many embodiments, a turbine may feature a relatively high number of compression and/or expansion stages. If each stage has a pressure ratio of 1.1, a top pressure of 300 atmospheres would utilize about 60 stages. Examples of ranges of a number of stages in a turbine include, but are not limited to, 1-10, 1-20, 1-30, 1-40, 1-50, or 1-60 or more. In order to optimize the efficiency of such systems, various rotors may be coupled to a plurality of concentric shafts rotating at different velocities.

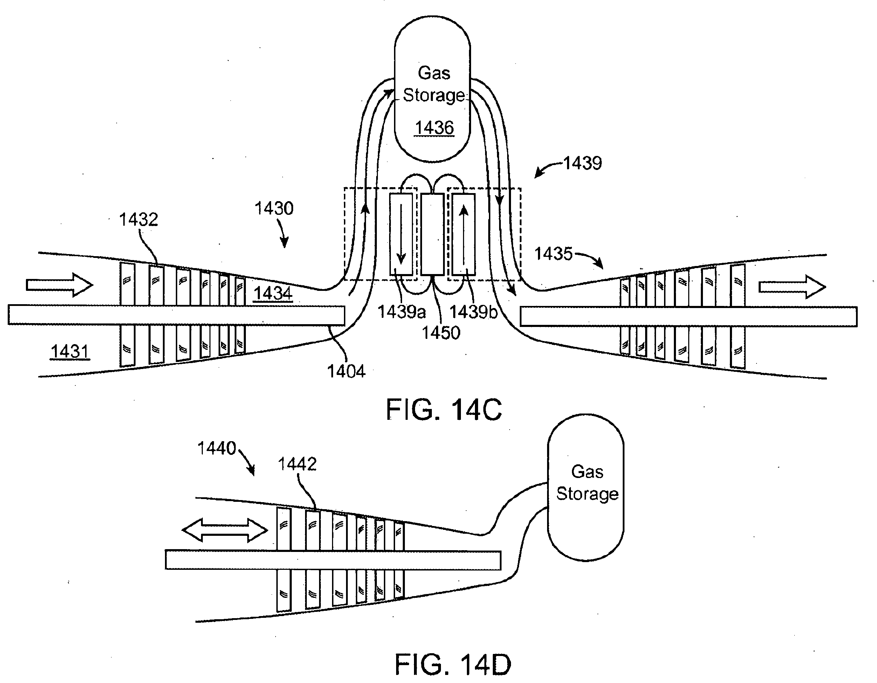

Figure 14C shows an embodiment of a multi-stage turbine 1430 that is unidirectional in nature. That is, the turbine blades 1432 are configured with an airfoil profile that allows the flow of gas from low pressure region 1431 to high pressure region 1434 to create a dedicated compressor.

As further indicated in the Figure 14C, such a unidirectional turbine could be thermally coupled via the technique of counter-flow heat exchange, with another unidirectional turbine 1435 acting as a dedicated expander, to create an apparatus capable of storing energy in the form of compressed gas within compressed gas storage unit 1436.

In the particular embodiment of Figure 14C, a counter-flow heat exchanger 1439 actually comprises two counterflow heat exchangers 1439a and 1439b, each in selective thermal communication with a common thermal storage unit 1450. The first counterflow heat exchanger could be configured to move heat from the output of the gas compressor to the thermal storage unit (e.g. water or oil at 1 atm pressure) at a given time, and the second counterflow heat exchanger could be configured to move heat back from that thermal store into the gas feed of the expander at a later time.

Other configurations are possible, including one utilizing a single counterflow heat exchanger between simultaneous-flows of gases. Such an embodiment could be employed, for example, in a heat engine mode of operation.

Other embodiments, however, could employ a reversible (bidirectional) turbine. Figure 14D is a simplified view of such an embodiment of a reversible turbine 1440. For compression, the gas enters at low pressure on the left and leaves at a higher pressure (but lower volume) on the right to flow to a compressed gas storage unit. For expansion, the gas would flow in the opposite direction from the compressed gas storage unit.

For such a reversible turbine to work efficiently, the airfoil shape of the turbine blades 1442 could be symmetrical with regard to the left (low pressure) or right (high pressure) side. Relatively thin airfoils can be made symmetrical to right and left leading edges owing to their low mass. Blades made of carbon composite could be strong yet lightweight. They could be rotated at high RPMs and not tear themselves apart.

As discussed at length in the Publication, certain embodiments of energy storage systems may be in selective communication with renewable energy sources that are intermittent in nature, such as a wind turbine or a solar energy harvesting apparatus (e.g. based upon thermal solar or photovoltaic principles). In order to meet demand that is continuous (rather than intermittent) in nature, embodiments may be configured to selectively operate based upon alternative sources of energy.

In some embodiments, a reversible compressor/expander (or dedicated expander) may be configured to operate based upon thermal energy provided by the combustion of fossil fuels. For example, the combustion of fossil fuel could be used to heat water that is injected into a gas for heat exchange. Subsequent expansion of the heated gas within the reversible compressor/expander, could be used to drive a generator and provide output power where none is available from the intermittent energy source or from a stored supply of compressed gas.

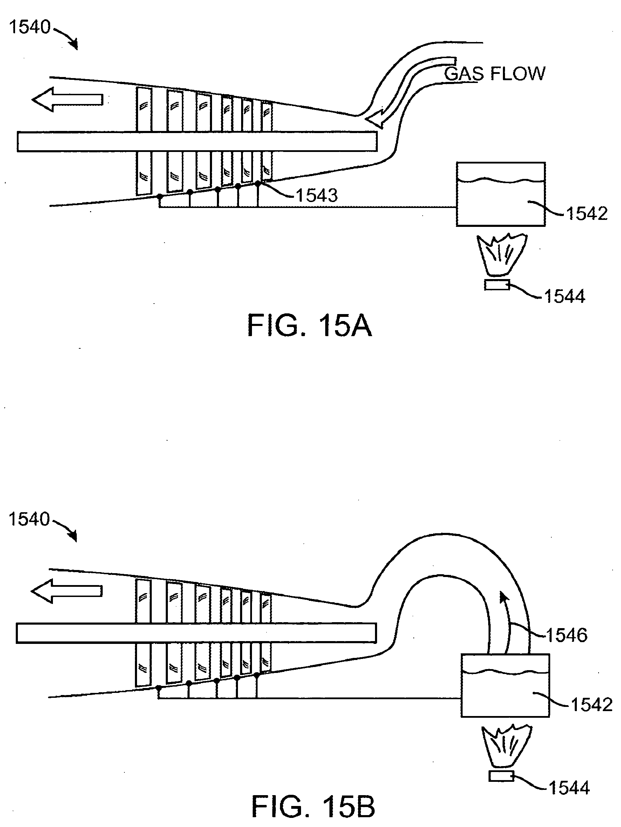

Figure 15A shows a simplified view of such an embodiment, wherein the reversible compressor/expander 1540 is in communication with a source of compressed gas. The reversible compressor/expander is also in liquid communication through spray nozzles 1543 with liquid 1542 (e.g. water) heated from fossil-fuel combustion energy source 1544. In this manner, the reversible compressor/expander could thus be selectively configured to operate as a heat engine.

Moreover, in certain embodiments the combustion of fossil fuel could be used to heat water into a gas itself for expansion (e.g. steam). Such steam could then be introduced directly into the reversible compressor/expander for expansion.

Figure 15B shows a simplified view of such an embodiment, wherein the reversible compressor/expander 1540 is in selective fluid communication with input steam 1546, which may result from heating by fossil-fuel combustion energy source 1544. Such steam may be generated as part of operation of a steam turbine. In some embodiments, the steam could be derived from a natural source, for example geothermal activity.

While Figures 15A-B show the use of an apparatus comprising a rotating member in the form of a turbine rotor that is configured to selectively operate based upon steam expansion, this is not required. Other examples of moveable members which may experience rotational motion from steam expansion include but are not limited to screws, lobes, vanes, scrolls, gerotors, and quasi-turbines.

And while Figures 15A-B show the use of an apparatus comprising a rotating member configured to selectively operate based upon steam expansion, this is also not required. Alternative examples could comprise a reciprocating member configured to selectively operate based upon steam expansion.

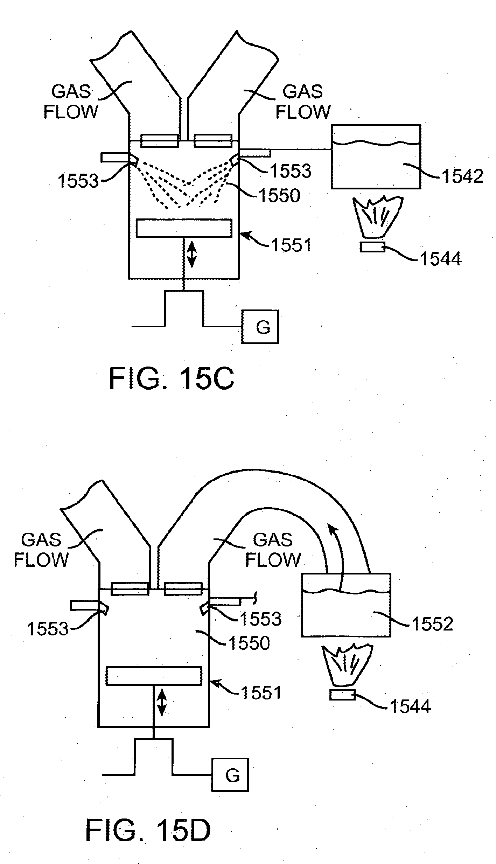

Accordingly, Figure 15C shows a simplified view of such an example, wherein the chamber 1550 of the reciprocating-type reversible compressor/expander 1551 is in liquid communication through spray nozzles 1553 with liquid 1552 heated from fossil-fuel combustion energy source 1554. In this manner, the reversible compressor/expander could thus be selectively configured to operate as a heat engine.

Moreover, in certain examples the combustion of fossil fuel could be used to heat water into a gas itself for expansion (e.g. steam). Such steam could then be introduced directly into the reversible compressor/expander for expansion.

Figure 15D shows a simplified view of such an example, wherein chamber 1560 of reciprocating-type reversible compressor/expander 1561 is in selective fluid communication with input steam 1562, which may result from heating by fossil-fuel combustion energy source 1564. Such steam may be generated as part of operation of a steam turbine. In some examples, the steam could be derived from a natural source, for example geothermal activity.

The selective fluid communication between the steam could be achieved by operation of valving. In certain examples the valving could comprise a network of two way valves and/or a multi-way valve. In this manner, the reversible compressor/expander could be selectively configured to operate as a steam engine.

It is noted that the specific example of Figure 15D retains spray nozzle elements 1563 allowing communication of a liquid to the chamber. While not employed in the particular operational mode of Figure 15D, such nozzles could be used in other operational modes. In some examples the nozzles could be used to communicate a thermal input from a heat source (not shown in Figure 15D) in the form of hot water, causing expansion of gas within the chamber (and/or reducing a magnitude of a temperature drop experienced by gas being expanded within the chamber). The nozzles could also be used to communicate a thermal input from a heat sink to reduce a magnitude of a temperature change (increase) of gas being compressed within the chamber.

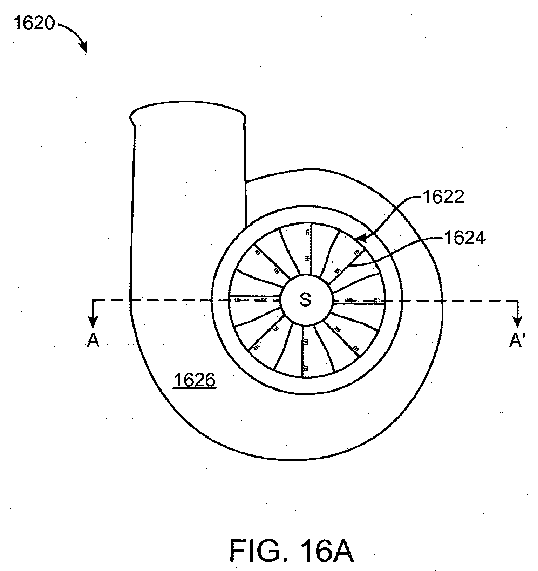

While certain of the examples described above have related to introduction of a heat exchange liquid as droplets within a gas, this is not required. Particular examples could employ gas-liquid heat exchange between bubbles of gas within in the heat exchange liquid. Figures 16A-16C show various views of an example which may be used for this purpose.

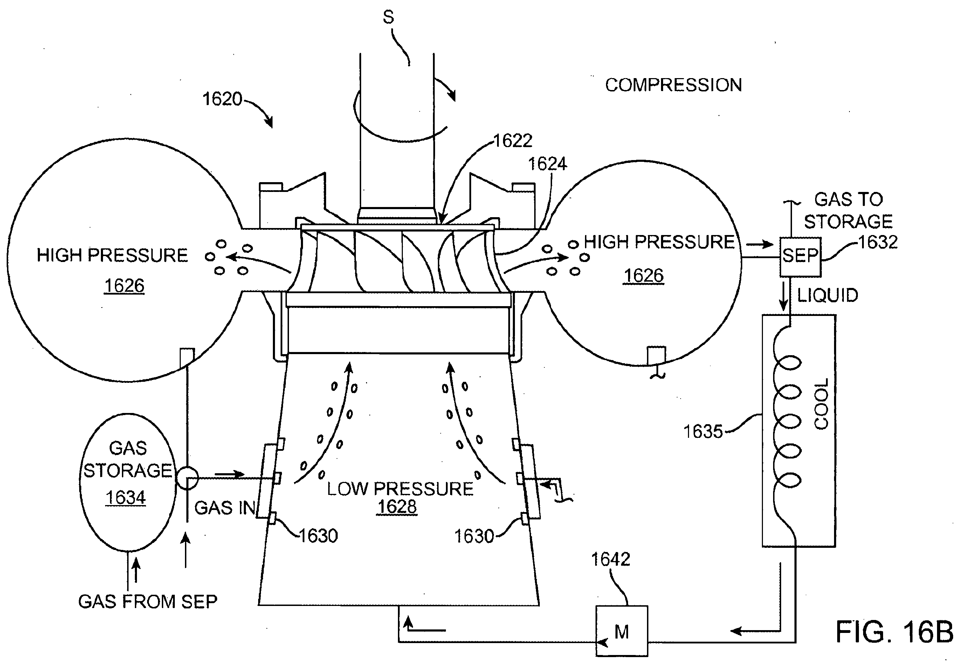

Specifically, Figure 16A is a simplified top view of a portion of an example of a reversible Francis turbine 1620 that is configurable to operate either as a compressor or as an expander. Francis turbine 1620 comprises rotor 1622 and blades 1624 between a high pressure liquid side 1626 and a low pressure liquid side (shown as 1628 in Figures 16B-16C). Shaft S is in physical communication with the rotor 1622, and may be in physical communication with a generator, motor, or motor-generator (not shown).

Figure 16B is a cross-sectional view along the line A-A' of Figure 16A, showing that example configured to operate as a compressor. In particular, the shaft S is driven to rotate (for example by a motor or motor-generator), thereby causing rotation of the rotor and the blades attached thereto. This driven rotation causes liquid to flow from the low pressure portion to the high pressure portion.

Gas is introduced through bubbler(s) 1630 to the liquid in the low pressure portion. This gas introduction could be passive via venturi-type action, and/or could be active in combination with a gas pump (for example to overcome the pressure drop through the bubblers and the water head). The gas bubbles entrained within the liquid flowing through the turbine are compressed by rotation of the blades, with heat exchange between gas and the surrounding liquid taking place over the large surface area of the bubble-liquid interface.

Following this gas compression, the gas and liquid on the high pressure side are separated in separator 1632, with the gas being flowed to the compressed gas storage unit 1634. The separated liquid is in turn flowed through the heat exchanger 1635 to remove heat, and then to pump/motor 1642 operating as a motor, for liquid depressurization and recovery of energy therefrom. The depressurized liquid then flows back to the low pressure side to again receive bubbles of gas bubbles for compression.

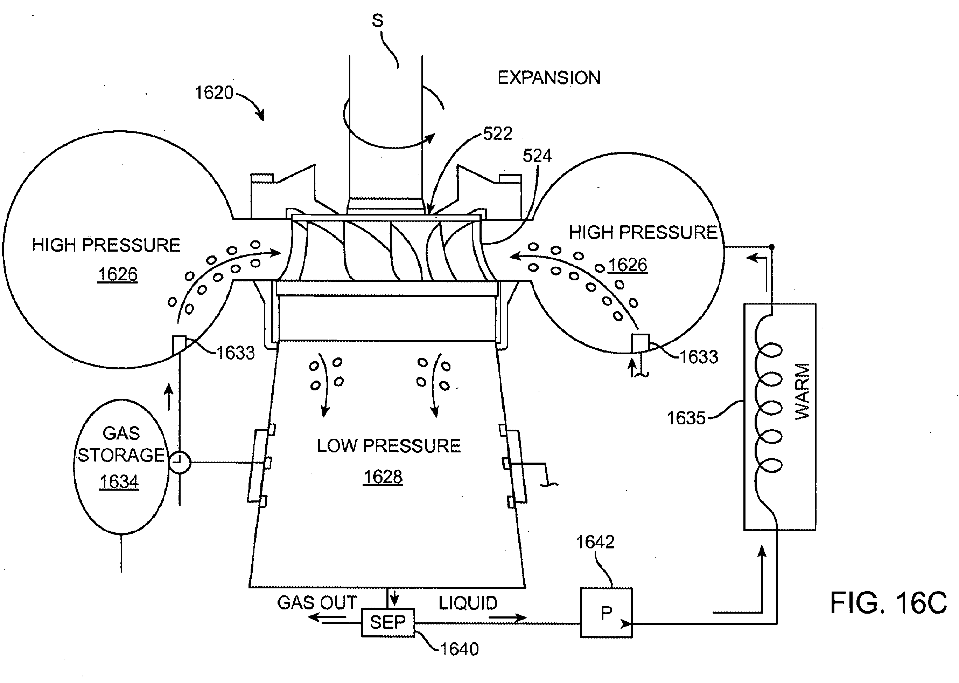

Figure 16C is a cross-sectional view along the line A-A' of Figure 16A, showing that example configured to operate as an expander. In particular, compressed gas is introduced through bubbler(s) 1633 from the compressed gas storage unit as bubbles into the liquid on the high pressure side. The pressurized air will drive the Francis turbine, with the pump 1642 supplying some of the power, since it pressurizes the water to the same pressure as that of the gas storage.

The high pressure liquid and gas bubbles entrained therewith, flows through the Francis turbine in the direction shown, driving rotation of the blades, attached rotor, and shaft, in a direction opposite to that during compression. Heat exchange between the expanding gas and the surrounding liquid takes place over the large surface area of the bubble-liquid interface.

Following expansion, the gas and liquid are separated in separator 1640, with the expanded gas being flowed out of the system. The separated liquid is in turn pumped by pump/motor 1642 through the heat exchanger to add heat, and then to the high pressure side to receive further gas bubbles for additional expansion.

While this particular example shows the introduction of gas upstream of the turbine, this is not necessarily required. According to certain examples it may prove beneficial to introduce the bubbles somewhere directly into the turbine, for example to minimize bubble coalescence and thereby maintain small bubbles with lots of surface area for heat exchange. Such bubble introduction directly into the turbine could be through the housing and/or through the blades themselves.

And while the particular example of Figures 16A-16C describes a Francis turbine device exhibiting a centrifugal orientation, this is not required. Alternative examples could have other orientations, including but not limited to an axial orientation. Kaplan- or Deriaz-type turbines can be reversible to operate in compression or expansion.

Furthermore, while the particular example of Figures 16A-16C describes a Francis turbine device that is reversible to be driven as a pump, this is not required. Alternative examples could employ separate apparatuses dedicated to performing gas expansion or compression. Dedicated compressors could employ centrifugal or radial impellers. Dedicated expanders could employ Pelton wheels.

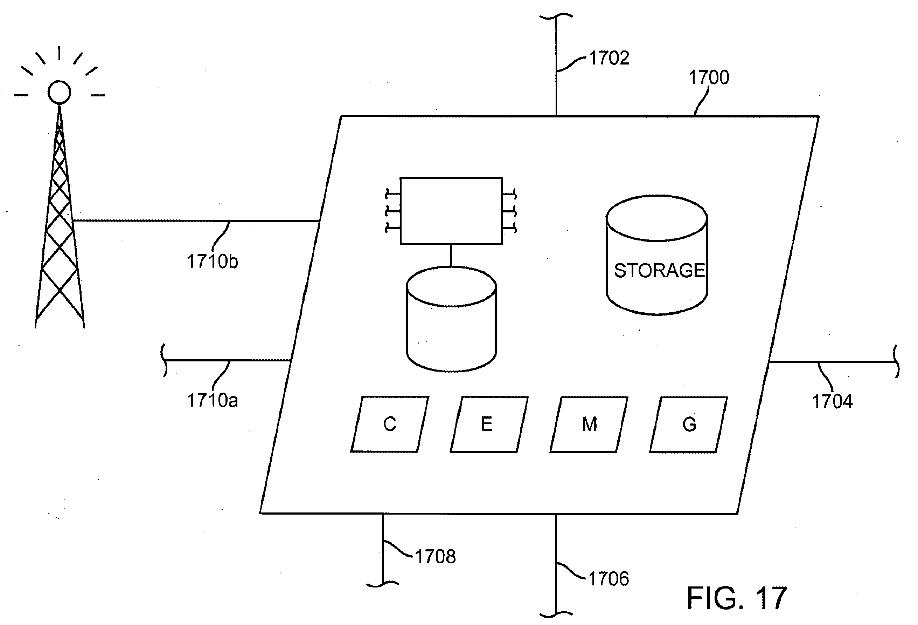

As described above, elements of compressed gas systems according to the present disclosure may be in communication with other structures through one or more linkages, as generically depicted in Figure 17. Such linkages between a compressed gas energy system 1700 and external elements can include physical linkages 1702 such as mechanical linkages, hydraulic linkages, magnetic linkages, electro-magnetic linkages, electric linkages, or pneumatic linkages.

Other possible types of linkages between examples of systems according to the present disclosure include thermal linkages 1704, which may comprise conduits for liquid, gaseous, or solid materials, conduits, pumps, valves, switches, regenerators, and heat exchangers, including cross-flow heat exchangers.

As further shown in Figure 17, other possible types of linkages between examples of systems according to the present disclosure and outside elements, include fluidic linkages 1706, and communications linkages 1708. Examples of the former include flows of material in the gas or liquid phase, and may include conduits, valves, pumps, reservoirs, accumulators, bottles, sprayers, and other structures.

Examples of communications linkages include wired or optical fiber linkages 1710a and wireless communications networks 1710b, that are locally active or which operate over a wide area. Examples of communications networks which may be suited for use by examples in accordance with the present disclosure include, but are not limited to, Ethernet, CAN, WiFi, Bluetooth, DSL, dedicated microwave links, SCADA protocols, DOE's NASPInet, DoD's SIPRNet, IEEE 802.11, IEEE 802.15.4, Frame Relay, Asynchronous Transfer Mode (ATM), IEC 14908, IEC 61780, IEC 61850, IEC 61970/61968, IEC 61334, IEC 62056, ITU-T G.hn, SONET, IPv6, SNMP, TCP/IP, UDP/IP, advanced metering infrastructure, and Smart Grid protocols.

An amount of stored work that is present in a volume of air at a given pressure, and hence an amount of work that is stored in system 1700 of Figure 17, may be calculated as follows.

The quantity $\dfrac{W}{V_0}$ represents the amount of work stored per unit volume in a storage vessel. This is the storage energy density. This energy density can be determined utilizing the following formula:

$$\frac{W}{V_0} = P_a \cdot \left[ 1 + \left( \frac{P_0}{P_a} \right) \left[ \ln \left( \frac{P_0}{P_a} \right) - 1 \right] \right];$$

where:

W = stored work;
$V_0$ = volume of the storage unit; and
$P_a$ = ambient pressure in an open system, or the low pressure in a closed system; and
$P_0$ = pressure in the tank.

Expression of this energy density from volume in units of liters (L) and from pressure in units of atmospheres (atm), requires the use of a conversion factor:

$$\frac{W}{V_0} = 101.325 \cdot P_a \cdot \left[ 1 + \left( \frac{P_0}{P_a} \right) \left[ \ln \left( \frac{P_0}{P_a} \right) - 1 \right] \right] \left( \frac{Joule}{L} \right),$$

where:

W = stored work (Joule);
$V_0$ = volume of storage unit (L);
$P_a$ = ambient pressure in an open system, or low pressure for a closed system (atm); and
$P_0$ = pressure in the tank (atm).

So, under standard conditions where:

$V_0$ = 1 L;
$P_a$ = 1 atm; and

$$\frac{P_0}{P_a} \equiv r :$$

$$W/V_0 = 101.325 \left[ 1 + r (\ln r - 1) \right] \left( \frac{Joule}{L} \right),$$

or

$$W/V_0 = 0.101325 \left[ 1 + r (\ln r - 1) \right] \left( \frac{kJoule}{L} \right)$$

The inverse of $W/V_0$ represents the volume of a tank required to store a given amount of energy. This formula may be expressed in units of L / kW·h according to the following:

$$V_0/W\left(\frac{L}{kW\cdot h}\right) = 3600/(W/V_0),$$

where:

1 Joule = 1 W·s;
3600 Joule = 1 W·h; and
3600 kJoule = 1 kW·h

This yields the following results at the given exemplary pressures:

| $P_0$ | $W/V_0\left(\dfrac{kJoule}{L}\right)$ | $V_0/W\left(\dfrac{L}{kW\cdot h}\right)$ |
|---|---|---|
| 300 atm | 143 | 25.16 |
| 310 bar | 146.5 | 24.57 |
| 10 atm | 1.42 | 2533 |
| 8 atm | 0.976 | 3687 |

Consideration of efficiency results in alteration of the above equation as follows:

$$\frac{W}{V_0} = 101.325 \cdot P_a \cdot \left[1 + \left(\frac{P_0}{P_a}\right)\left[\ln\left(\frac{P_0}{P_a}\right) - 1\right]\right] \cdot e \quad \left(\frac{kJoule}{L}\right),$$

where: e = one-way efficiency of the system.

So in a system recovering compressed air to a final pressure ($P_a$) of 1 atm from a storage pressure ($P_0$) of 300 atm with an efficiency (e) of 0.8, the quantity $V_0/W = 31.45 \left(\dfrac{L}{kW\cdot h}\right)$.

The ability of systems according to examples of the present disclosure, to rapidly recover energy stored in the form of compressed gas, may render such systems potentially suitable for a variety of roles. Several such roles involve the energy system's placement within the network responsible for providing electrical power to one or more end-users. Such a network is also referred to hereafter as a power grid.

Incorporated by reference in its entirety herein for all purposes, is the following document: "Energy Storage for the Electricity Grid: Benefits and Market Potential Assessment Guide: A Study for the DOE Energy Storage Systems Program", Jim Eyer & Garth Corey, Report No. SAND2010-0815, Sandia National Laboratories (February 2010).

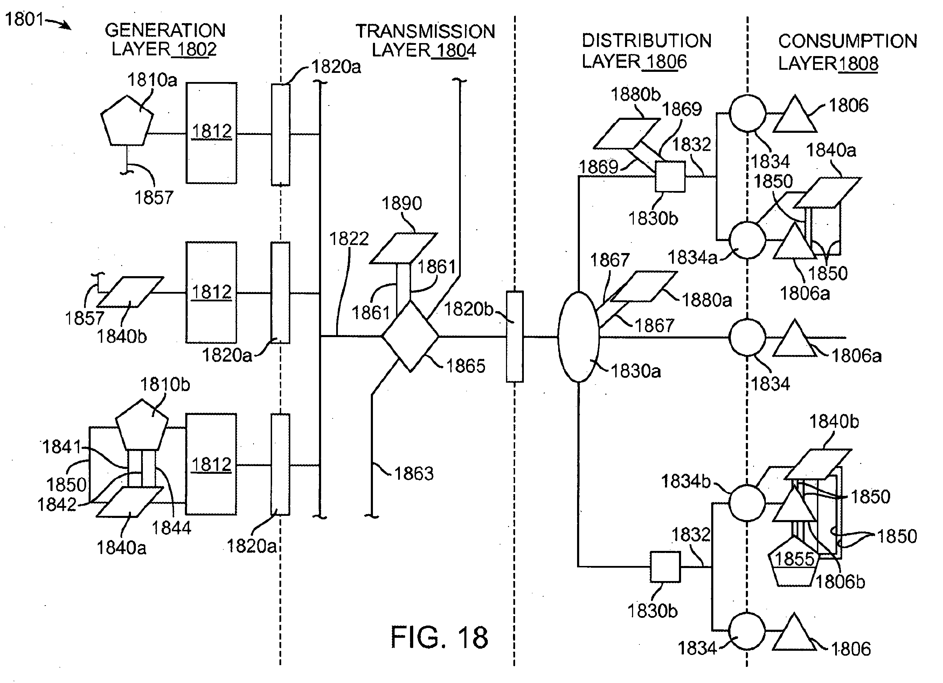

Figure 18 presents a generic description of an example of a network for the generation, transmission, distribution, and consumption of electrical power. The example shown in Figure 18 represents a substantial simplification of an actual power network, and should not be understood as limiting the present disclosure.

Power distribution network 1801 comprises a generation layer 1802 that is in electrical communication with a transmission layer 1804. Power from the transmission layer is flowed through distribution layer 1805 to reach the individual end users 1806 of the consumption layer 1808. Each of these layers of the power distribution network are now described in turn.

Generation layer 1802 comprises a plurality of individual generation assets 1810a, 1810b that are responsible for producing electrical power in bulk quantities onto the network. Examples of such generation assets 1810a, 1810b can include conventional power plants that burn fossil fuels, such as coal-, natural gas-, or oil-fired power plants. Other examples of conventional power plants include hydroelectric, and nuclear power plants that do not consume fossil fuels. Still other examples of generation assets include alternative energy sources, for example those exploiting natural temperature differences (such as geothermal and ocean depth temperature gradients), wind turbines, or solar energy harvesting installations (such as photovoltaic (PV) arrays and thermal solar plants).

The assets of the generation layer generally deliver electrical power in the form of alternating current at relatively low voltages (<50kV) compared to the transmission layer. This electrical power is then fed to the transmission layer for routing. Specifically, the interface between a generation asset and the transmission layer is hereafter referred to as a busbar 1812.

The transmission layer comprises respective transformer elements 1820a and 1820b that are positioned at various points along a transmission line 1822. The step-up transformer 1820a is located proximate to the generation assets and corresponding busbars, and serves to increase the voltage of the electricity for efficient communication over the transmission line. Examples of voltages in the transmission layer may be on the order of hundreds of kV.

At the other end of the transmission line, a step-down transformer 1820b serves to reduce the voltage for distribution, ultimately to individual end users. Power output by step-down transformers of the transmission layer may be in the voltage range of low tens of kV.

Figure 18 presents the transmission layer in a highly simplified form, and transmission of power may actually take place utilizing several stages at different voltages, with the stages demarcated by transmission substation(s) 1865. Such a transmission substation may be present at the point of interface between transmission line 1822 and second transmission line 1863.

The distribution layer receives the power from the transmission layer, and then delivers this power to the end users. Some end users 1806a receive relatively high voltages directly from primary substation 1830a. The primary substation serves to further reduce the voltage to a primary distribution voltage, for example 12,000 V.

Other end users receive lower voltages from the secondary substations 1830b. Feeder lines 1832 connect the primary substation with the secondary substation, which further reduces the primary distribution voltage to the final voltage delivered to end users at a meter 1834. An example of such a final voltage is 120 V.

Figure 18 provides a general description of the physical elements of a power network which may be used in the generation, transmission, distribution, and consumption of electric power. Because it forms a vital part of the public infrastructure, and requires cooperation from a multitude of distinct geographic and political entities, such power networks are highly regulated at many levels (local, national, international).

Figure 18 thus also provides a framework for classifying the regulation of various network elements by different regulatory agencies. For example, an element of the power network may be regulated based upon its classification as an asset of the generation layer, transmission layer, distribution layer, or consumption layer, of the power network. Such regulatory classification can play an important role in determining properties of an energy storage system that is integrated within a power network.

According to certain examples of the present disclosure, a compressed gas system may be incorporated within a generation layer of a power supply network. In certain examples energy recovered from the compressed gas may supply stable electricity over a short term period of time. According to some examples, energy recovered from the compressed gas may supply electricity to smooth or levelize variable output from a generation asset comprising a renewable energy source, for example a wind farm.

The various assets of the generation layer of the power network of Figure 18, may be categorized in terms of the types of power that are to be produced. For example, baseload generation assets typically comprise apparatuses that are configured to produce energy at the cheapest price. Such baseload power generation assets are generally operated continuously at full power in order to afford a highest efficiency and economy. Examples of typical baseload generation assets include large power plants, such as nuclear, coal, or oil-fired plants.

Load following generation assets generally comprise apparatuses that are more capable of responding to changes in demand over time, for example by being turned on/off or operating at enhanced or diminished capacities. Examples of such load following generation assets include but are not limited to steam turbines and hydroelectric power plants.

A load following generation asset may be called upon to provide additional power to meet shifting demand, with as little advance notice as 30 minutes. Because load following generation assets typically do not operate continuously at full capacity, they function less efficiently and their power is in general more expensive than that available from baseline generation assets.

A third type of generation asset are the peak generation assets. Peak generation assets are utilized on an intermittent basis to meet the highest levels of demand. Peak generation assets are capable of operating on relatively short notice, but with reduced efficiency and correspondingly greater expense. A natural gas turbine, is one example of an apparatus that is typically employed as a peak generation asset. Another is a diesel generator.

While they are capable of providing power on relatively short notice, even peak generation assets require some lead time before they are able to produce power of the quantity and quality necessary to meet the requirements of the power network. Examples of such power quality requirements include stability of voltage within a given tolerance range, and the necessity of synchronizing frequency of output with the frequency that is already extant on the network.

One potential feature of compressed gas energy storage and recovery systems, is their availability on short notice, to provide energy stored in relatively stable form. Specifically, the compressed gas may be maintained at an elevated pressure within a storage unit having a large volume. Examples of such storage structures include but are not limited to man-made structures such as tanks or abandoned mines or oil wells, or naturally-occurring geological formations such as caverns, salt domes, or other porous features.

Upon demand, the energy stored in the form of compressed gas may be accessed by actuating a gas flow valve to provide fluid communication between the storage unit and an expander apparatus. This simple valve actuation allows rapid conversion of the energy in the compressed gas into mechanical or electrical form.

For example, as described below expansion of the compressed gas within a chamber may serve to drive a turbine blade also disposed therein. A shaft associated with a rotor of the turbine may be in mechanical communication with a generator to create the electricity. Such a configuration allows for stable power to be rapidly generated because no warm-up period characteristic of a combustion engine is required. The energy in the air is available immediately, and need only overcome the system's inertia in order to deliver full power. A few seconds is sufficient.

Such ready availability of energy stored in the form of compressed gas, stands in marked contrast to combustion-type apparatuses, where stable power output may only be achieved upon regulation of multiple flows of material. For example, stable operation of a natural gas turbine may only occur by exercising precise control over flows of air and natural gas, the mixing of these flows, and the ignition of the mixture under substantially unvarying conditions. Operation of a gas turbine to produce stable, reliable output also requires careful management of the heat resulting from the combustion, to produce expanding gas that is converted to mechanical energy in the form of spinning turbine blades.

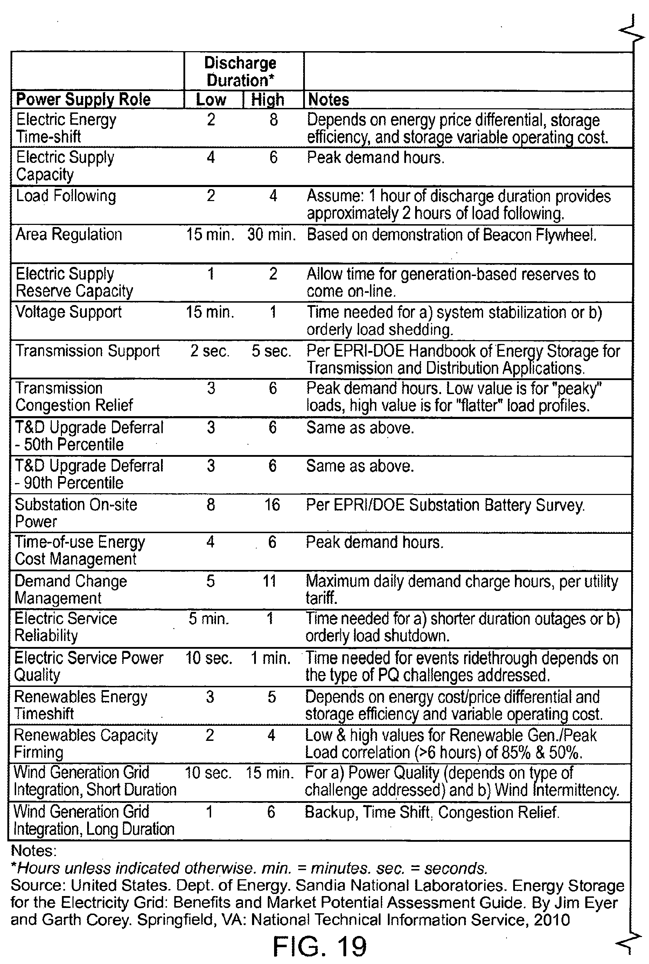

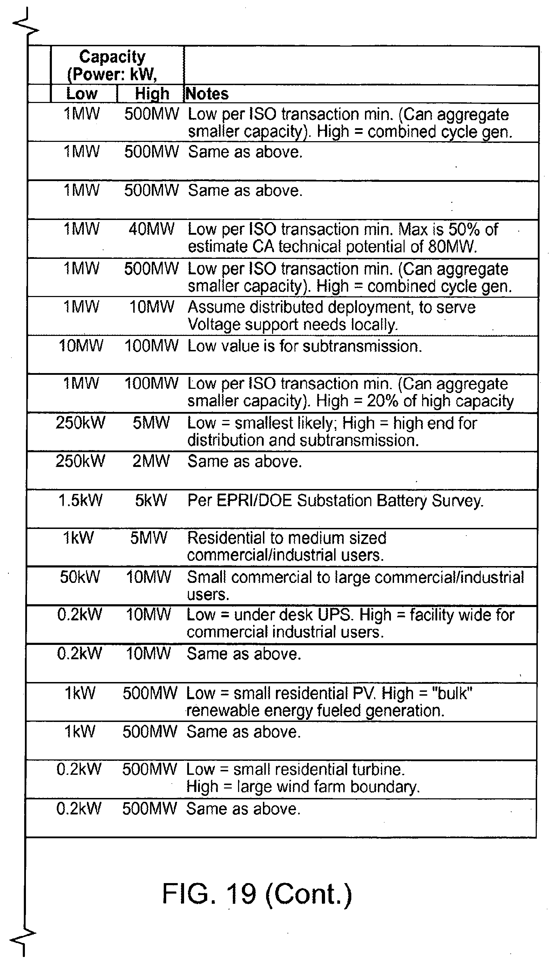

Depending upon the particular role upon which it is called upon to perform, a generation asset may operate with certain performance characteristics. Certain such characteristics are described in the table of Figure 19.

According to certain examples, the compressed gas energy storage and recovery system may be physically co-situated with the generation asset, and may be in electrical communication with the power network through a common busbar. Alternatively, the generation asset and the energy storage and recovery system may be in electrical communication with the power network through a same transmission line.

Compressed gas energy storage and recovery systems according to the present disclosure, may be incorporated into the generation layer of a power network to levelize output of renewable energy sources that are variable in nature. For example, the output of a wind turbine is tied to the amount of wind that is blowing. Wind speed can rise or fall over relatively short periods, resulting in a corresponding rise and fall in the power output. Similarly, the output of a solar energy harvesting apparatus is tied to the amount of available sunshine, which can change over relatively short periods depending upon such factors as cloud cover.

Conventionally however, power networks have relied upon energy sources such as fossil fuel power plants, that exhibit an output that is substantially constant and controllable over time. This difference between renewable energy sources and those traditionally relied upon by power networks, may pose a barrier to the adoption renewable energy sources such as solar and wind power that are intermittent and/or variable in nature.

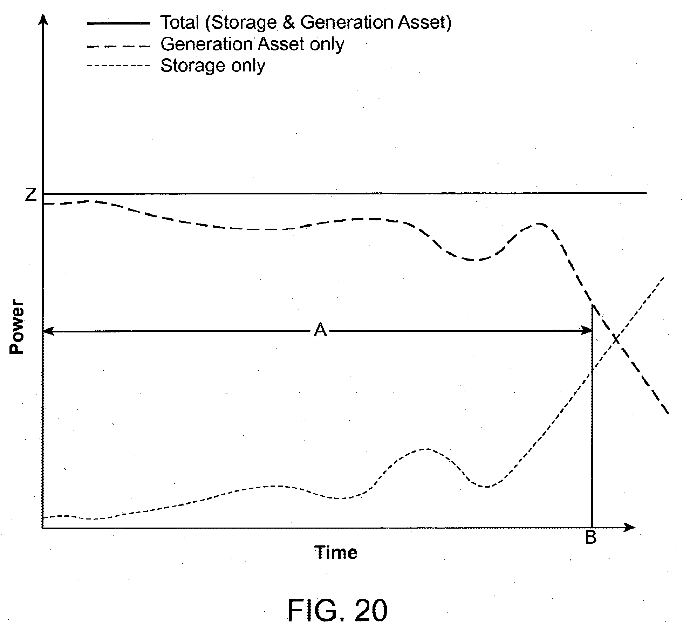

Accordingly, examples of compressed gas energy storage and recovery systems of the present disclosure may be coupled with renewable energy sources, in order to levelize their output onto the power network. Figure 20 shows a simplified view of such a levelizing function.

For example, over the time period A shown in Figure 20, the compressed gas energy storage and recovery system provides sufficient output to make up for differences between the variable output of the renewable alternative energy resource and a fixed value Z. This fixed value may be determined, for example, based upon terms of a contract between the owner of the generation asset and the network operator.

Moreover, at the time period starting at point B in Figure 20, the energy provided by the renewable generation asset falls off precipitously, for example based upon a complete loss of wind or an approaching storm front. Under such circumstances, the compressed gas energy storage and recovery system may be configured to supply energy over a time period following B, until another generation asset can be ramped up to replacement energy coverage over the longer term.

Accordingly, certain examples compressed gas energy storage and recovery systems may be utilized to provide stable electrical power over a short term period, thereby covering the time period required to ramp-up a power generation asset. In a particular example, a compressed gas energy storage and recovery system may supply stable power with advance notice of ten minutes or less, to cover a ramp-up period of one hour to two hours or less of a gas turbine peak generation asset.

The following provides a listing the characteristic time constants in which a generation asset is required to act under various circumstances. These times, in reality are a function of the desired service required, as well as the characteristics of the specific generator, and thus should be considered as guidelines rather than binding limitations. The capacities and outputs are situational, and can vary from hundreds of kw to tens of Mw with time durations ranging from minutes to hours.

- Peak

       Time to Ramp - 1+ hour
       Output - Situational 1- 100 Mw

Capacity - 2-200 Mwh

- Load Following

    Time to ramp - continuous in steps of 1-5 seconds
    Output -1 to 100 Mw
    Capacity - 0.5 to 50 Mwh

- Spinning Reserve

    Time to ramp - 1 to 10 minutes
    Output - 10 to 100 Mw
    Capacity - 20 to 500 Mwh

- Standby Non-Spinning Reserve

    Time to ramp - 1 hour
    Output - 10 to 100 Mw
    Capacity - 20 to 500 Mwh

According to certain examples, electricity recovered from the storage of compressed gas, may be used to supply stable electrical power to cover the period required for a generation asset to ramp-up. Accordingly, close proximity between the energy storage system and the generation asset may help to facilitate a seamless transition from electricity being output onto the network from the storage system, to electricity being output onto the network from the generation asset.

While desirable under certain circumstances, it is not required that the compressed gas energy storage system according to the present disclosure be physically co-situated with a power generation asset. In particular, the increased reliability of communication over wide area networks such as the internet, or utility Supervisory Control and Acquisition (SCADA) systems, has reduced the need for close proximity between different elements of the network.

In certain examples, the compressed gas energy storage and recovery system could be configured to transmit a message to the replacement generation asset to begin the ramp-up process. Such a message could be carried by a wide area network such as the internet or a smart grid, where the compressed gas energy storage and recovery system is not physically co-situated with the replacement generation asset.

Specifically, incorporation of examples of compressed gas storage and recovery systems into a power network, is also shown in Figure 18. According to certain examples, a compressed gas energy storage and recovery system 1840b may be incorporated in the generation layer located along the same transmission line as a power generation asset 1810a or 1810b. In other examples, a compressed gas energy storage and recovery system 1840a according to the present disclosure may be physically co-situated with the power generation asset, possibly behind the same busbar.

Locating a compressed gas energy storage and recovery system with a power generation asset, may confer certain benefits. One such potential benefit is a cost advantage afforded by allowing more efficient operation.

For example, in certain examples the compressor element of the compressed gas energy storage and recovery system could be in physical communication with a moving member of a power generation asset through a physical linkage 1841. Thus, as described above, in a particular example, the spinning blades of a gas or wind turbine could be in physical communication with the compressor of a compressed gas energy storage system through a mechanical, hydraulic, or pneumatic linkage.

The direct physical communication afforded by such a linkage may allow power to be transferred more efficiently between these elements, thereby avoiding losses associated with having to convert the power into electrical form. In this manner, power from an operating gas or wind turbine could be utilized to store compressed gas for later recovery in an output levelizing or ramp-up coverage role.

Moreover, co-situation of the compressed gas storage and recovery system with a generation asset, may allow efficient communication between them of other forms of energy flows. For example, certain examples of an energy storage system may be in thermal communication through a thermal link 1842, with a co-situated generation asset. Thus in some examples, an efficiency of expansion of compressed gas by the compressed gas energy storage system, could be enhanced utilizing heat that is communicated from the generation asset.

In this manner, waste heat from a thermal solar power plant could be leveraged to enhance gas expansion in the chamber of an energy storage system. Under certain circumstances, the system and thermal solar plant could be co-situated. In other examples, the compressed gas could be brought to the generation asset through an elongated conduit.

Siting of an energy storage system with a generation asset may also afford actual fluid communication between these elements through a fluid link 1844. For example, where an energy storage system is co-situated with a gas turbine generator, the fluid link could allow compressed gas stored by the system to be flowed directly to such a gas turbine for combustion, thereby enhancing the efficiency of operation of the gas turbine.

Another possible benefit which may be realized by co-situation of the energy storage system with a power generation asset, is the ability to leverage off of existing equipment. For example, an existing generation asset typically already includes a generator for converting mechanical energy into electrical power. A compressed gas energy storage and recovery system according to the present disclosure could utilize the same generator element to convert motion from gas expansion into electrical power. Similarly, a compressed gas energy storage and recovery system could utilize a power generation asset's existing interface with the network (busbar), in order to communicate power to the network.

Yet another possible benefit which may be realized by locating an energy storage system behind the busbar in the network's generation layer, is the resulting form of regulatory oversight. As part of the generation layer, an energy storage system's contact with the network is relatively simple and limited. In particular, the energy storage system would contact the network through a single interface, and the magnitude and direction of flows of power through the interface would be based upon expected operation of the generator and the energy storage system.

Co-situation of the energy storage system with a power generation asset, may further enhance coordinated action between the two elements. In particular, the communication link 1850 between the compressed gas energy storage system 1840a and the co-situated generation asset may be local in nature, and hence potentially faster and more reliable than a larger area network.

Such close proximity between the energy storage system and the generation asset may help to facilitate a seamless transition between power being output onto the network from the storage system, to power being output onto the network from the generation asset. In the output levelizing role, close proximity between the energy storage system and the alternative source of intermittent energy may facilitate rapid and smooth intervention by the storage system to produce power in the face of rapidly changing conditions.

While desirable under certain circumstances, it is not required that the compressed gas energy storage and recovery system according to the present disclosure be physically co-situated with a power generation asset. In particular, the increased reliability of communication over wide area networks such as the internet, has reduced the need for close proximity between different elements of the network.

Accordingly, Figure 18 also shows an example of a compressed gas energy storage and recovery system 1840b that is located along the same transmission line as a power generation asset 1810a. System 1840b and power generation asset 1810a may effectively communicate over wired or wireless network link 1857.

For example, one potential role for a compressed gas energy storage and recovery system according to examples of the present disclosure, is to provide a governor response mechanism that may otherwise be lacking from certain forms of alternative energy sources. Specifically, conventional power generators involving the flows of fluids (such as steam turbines), include a governor device linking measured speed of the generator with a fluid flow valve. The governor may be operated in a manner to provide negative feedback, for example opening the valve to promote fluid flow when operational speed is too low, and closing the valve to restrict fluid flow when operational speed is too high.

Such generators may be designed to have Automatic Generation Control (AGC) capability. Where additional power is needed to stabilize frequency, voltage, or for other ancillary purposes, AGC allows a message from the system operator requesting an increase or decrease in output to be forwarded directly to the governor. This signal takes precedence over the governor's own determination of speed and other conditions.

However, certain power generation assets lack inherent AGC capability. For example, the amount of power output by a wind turbine is based upon a speed of rotation of the turbine blades by the wind. Such rotation cannot be accelerated in the conventional manner by action of a governor, in order to provide additional voltage.

Certain forms of solar energy may also lack an intrinsic governor response mechanism. For example, the amount of energy available from an array of photovoltaic cells or thermal solar system is typically dictated by sunshine, and may not necessarily be readily augmented in order to meet a demand for additional power.

Accordingly, some examples of compressed gas energy storage and recovery systems according to the present disclosure may be coupled with such non-governor generation assets of the power network. Such a storage system could essentially take the place of a governor, endowing the generation asset with AGC capability, and automatically outputting more power on short notice in response to a request for voltage stabilization by the system operator. Such a configuration would facilitate integration of an alternative energy source within the existing power grid infrastructure, and would not necessarily require physical co-situation of the energy storage system with alternative power generation asset.

Such positioning of the energy storage system in a location different from the generation asset, may be beneficial under certain circumstances. For example, the site of a renewable energy source is largely dictated by the availability of natural resources such as wind or sunlight. As a result, such alternative generation assets may be situated in remote areas, increasing the expense of inspection and maintenance of any co-situated elements such as a compressed gas energy storage and recovery system. Additional costs may be associated with transmitting the power from a remote area to where it is needed. Accordingly, providing the energy storage system in a more accessible location may improve the cost effectiveness of its operation.

Positioning a compressed gas energy storage and recovery system in a different location than a generation asset, may also endow it with greater flexibility. Specifically, operation of such a remotely located energy storage system would not necessarily be tied to any particular generation asset. Thus, the compressed gas energy storage and recovery system 1840b of Figure 18 could readily supply power onto the network in order to provide coverage over the ramp-up period for generation asset 1810a, generation asset 1810b, or both of these.

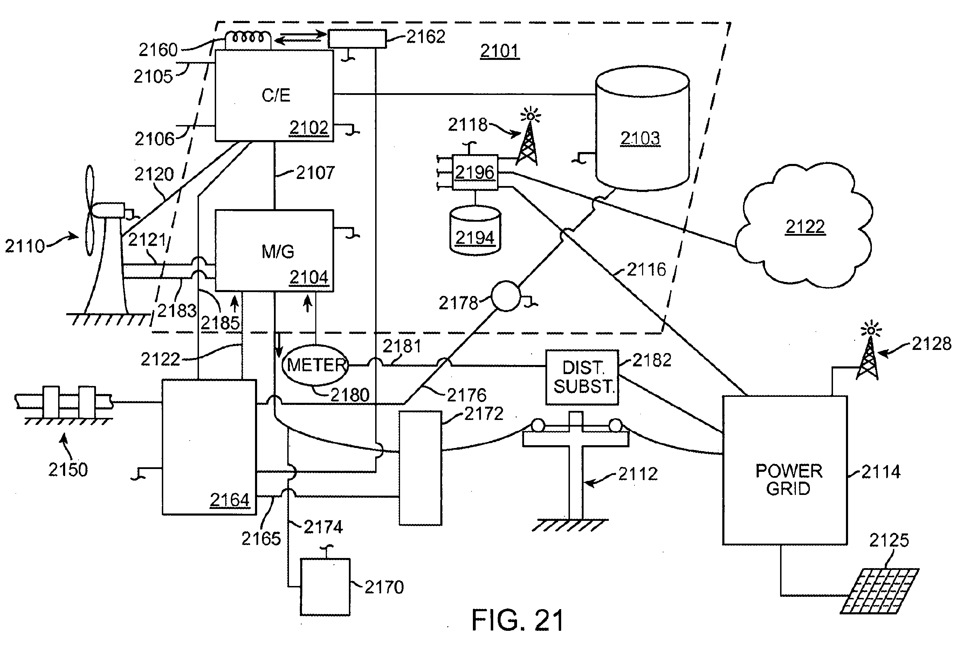

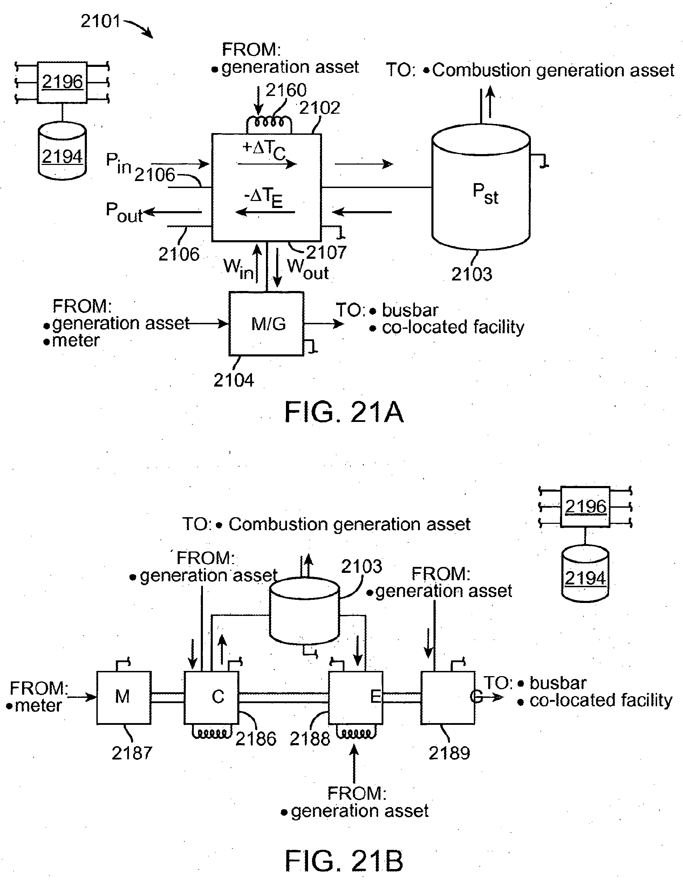

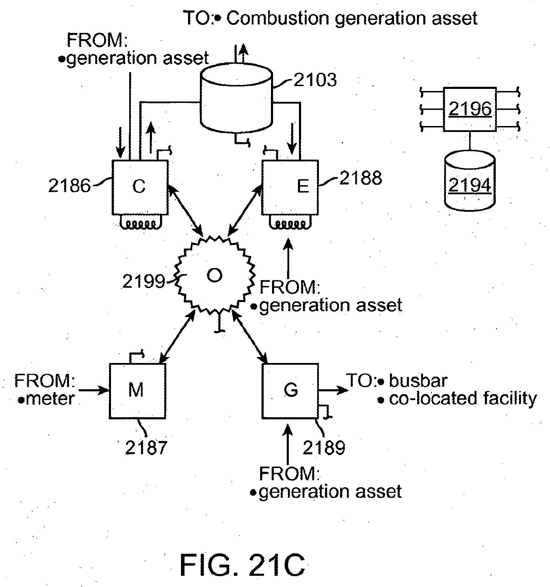

Figure 21 shows a simplified block diagram of one example of a compressed gas storage and recovery system in accordance with an example of the present disclosure. In particular, compressed gas storage and recovery system 2101 comprises compressor/expander (C/E) 2102 in fluid communication with gas inlet 2105, and in fluid communication with compressed gas storage unit 2103.

Figure 21 shows that compressor/expander 2102 is in selective physical communication with /generator (M/G) 2104 through linkage 2107. In a first mode of operation, motor/generator 2104 operates as a motor to allow energy to be stored in the form of a compressed gas (for example air). Motor/generator 2104 receives power from an external source, and communicates that power to cause compressor/expander 2102 to function as a compressor. One possible source of power for the motor/generator 2104 is the meter 2180 that is in electrical communication through line 2181 with substation 2182 of the distribution layer of the power grid 2114. As described further in detail below, the power grid 2114 may be a smart grid containing information in addition to power.

In compression, motor/generator 2104 in turn communicates power to compressor/expander 2102 through linkage 2107, allowing compressor/expander 2102 to function as a compressor. Compressor/expander 2102 receives the gas from inlet 2105, compresses the gas, and flows the compressed gas to the storage unit 2103.

Figure 21 also shows that the system 2101 may also be configured to receive energy from a first (variable) alternative source 2110 such as a wind turbine. Here, the compressor/expander 2102 is shown as being in physical communication with the wind turbine 2110 through a linkage 2120. This linkage may be mechanical, hydraulic, or pneumatic in nature.

The direct communication between the rotating blades of the wind turbine and the compressor/expander, afforded by linkage 2120, may allow for the efficient storage of energy as compressed gas with little energy loss. Examples of a combined wind turbine-compressed gas storage system are described in the co-pending U.S. Nonprovisional Patent Application No. 12/730,549, which is incorporated by reference in its entirety herein for all purposes. In certain examples, the energy storage system and the alternative energy source may share a common generator, as indicated by the physical linkage 2121.

In certain examples, the alternative energy storage source may include a separate generator and provide energy in electrical form through linkage 2183 to power motor/generator 2104 that is functioning as a motor. In certain examples a separate generator in the wind turbine may be in electrical communication with motor/generator 2104 through linkage 2183.

Figure 21 further shows that the compressed gas energy storage and recovery system 2101 may also be configured to receive energy from a second (dispatchable) source 2150, such as a pipeline of oil or natural gas. The system may draw upon this dispatchable energy source 2150 to meet contractual commitments to supply power, for example where previous operation has exhausted the stored compressed gas supply.

In particular, the energy from the dispatchable source 2150 may be consumed by an element 2164 such as a natural gas turbine, diesel motor, or gas motor, to drive motor/generator 2104 through linkage 2122 to operate as a generator, and thereby produce electricity for output onto the grid (for example during peak demand periods). Energy from the alternative energy source 2150 may also be consumed by element 2164 to drive compressor/expander 2102 through linkage 2185 to operate as a compressor, and thereby compress gas for energy recovery, for example during off-peak demand periods.

The element 2164 may also be in thermal communication with a heat source 2162 through heat exchanger 2160. In this manner, thermal energy resulting from operation of element 2164 may improve the efficiency of expansion during recovery of energy from compressed gas.

Where element 2164 is a turbine (such as a gas turbine), in certain examples it may utilize expansion of compressed gas from the storage unit during a combustion process. Accordingly, Figure 21 shows element 2164 in selective fluid communication with compressed gas storage unit 2103 through a fluid conduit 2176 and a valve 2178. Utilizing the compressed gas for combustion in this manner may allow high efficiency recovery of the energy stored in that compressed gas.

In certain examples compressor/expander 2102 may comprise a separate compressor and a separate expander that are configurable to be arranged to operate together as a heat engine. In such an example, heat from heat source 2162 may be used to drive motor/generator 2104 even after gas storage unit 2103 has been depleted.

In certain examples, the energy storage and recovery system 2101 may also be co-situated with another facility 2170, which may be a large consumer of electricity. Examples of such facilities include but are not limited to, manufacturing centers such as factories (including semiconductor fabrication facilities), data centers, hospitals, ports, airports, and/or large retail facilities such as shopping malls.

The facility 2170 and the energy storage and recovery system 2101 may share a common interface (such as a meter) with the power grid, although power may be routed between system 2101 and facility 2170 through a separate channel 2174. Power may be communicated directly from the energy storage and recovery system to the facility through channel 2174 to serve as an uninterruptible power supply (UPS), or to allow the facility to satisfy objectives including but not limited to peak shaving, load leveling, and/or demand response. Other links (not shown here), such as thermal, fluidic, and/or communication, may exist between the facility and the energy storage system, for example to allow temperature control.

In a second mode of operation, energy stored in the compressed gas is recovered, and compressor/expander 2102 operates as an expander. Compressor/expander 2102 receives the compressed gas and allows this compressed gas to expand, driving a moveable member in communication through linkage 2107 with motor/generator 2104 that is functioning as a generator. The resulting power from the motor/generator may be output onto the power grid via the busbar 2172 and the transmission line 2112 for consumption.

As previously described, gas undergoing compression or expansion will tend to experience some temperature change. In particular, gas will tend to increase in temperature as it is compressed, and gas will tend to decrease in temperature as it expands.

The processes of compressing and decompressing the gas as described above, may experience some thermal and mechanical losses. However, these processes will occur with reduced thermal loss if they proceed at near-isothermal conditions with a minimum change in temperature. Such near-isothermal compression and/or expansion may be achieved utilizing one or more techniques, including but not limited to injection of liquid to perform heat exchange.

Accordingly, the compressor/expander apparatus 2102 of the system 2101 is in fluid communication with one or more heat exchanger(s) 2160 that may be selectively in thermal communication with a heat sink or a heat source 2162. In a compression mode of operation, the heat exchanger is placed into thermal communication with a heat sink, for example the atmosphere, where a fan that blows air to cool the heat exchanger. In an expansion mode of operation, the heat exchanger is placed into thermal communication with a heat source, for example an environmental air temperature or a source of waste heat. The heat source may be a structure such as a pond that is configured to receive and store heat generated by element 2164 drawing upon energy source 2150.

While the particular example of Figure 21 shows an energy storage and recovery system in the form of a system utilizing compressed gas, the present disclosure is not limited to such a system. Alternative examples of the present disclosure could utilize other forms of energy storage and recovery systems located behind the same busbar, or in communication with the same transmission line, as a generation asset of a power supply network. Examples of such other types of energy storage and recovery systems include but are not limited to: pumped hydroelectric, flywheels, batteries, ultracapacitors, thermal storage, chemical storage, osmotic pressure storage, or superconducting rings.

The various elements of the system 2101 are in communication with a central controller or processor 2196, that is in turn in electronic communication with a computer-readable storage medium 2194. The central controller or processor 2196 may also be in communication with a power grid 2114 (for example a smart grid) through a wired connection 2116 and/or a wireless link between nodes 2118 and 2128. The central controller or processor 2196 may also be communication with other sources of information, for example the internet 2122.

Based upon instructions in the form of computer code stored on computer-readable storage medium 2194, the controller or processor 2196 may operate to control various elements of the system 2101. This control may be based upon data received from various sensors in the system, values calculated from that data, and/or information received by the controller or processor 2196 from various sources, including co-situated sources or external sources.

In certain examples, the controller of the system may be configured to commence operation based upon an instruction received from a generation asset. For example, a compressed gas storage and recovery system may be engaged to provide power to levelize intermittent output from a renewable energy generation asset. In such circumstances, the controller could then be configured to receive a signal indicating the variable or intermittent output from the renewable energy generation asset, and in response generate a sufficient amount of power.

In certain examples, the compressed gas energy storage and recovery system may transmit signals to a generation asset. For example, a system engaged in the levelizing function may receive an indication of long term loss of output from a renewable energy generation asset (due to cloudiness or of loss of wind). Upon detection of such an event, the system controller could be configured to transmit a signal instructing another generation asset to provide sufficient power coverage over longer time frame.

Figure 21A is a simplified block diagram showing the various system parameters of operation of a combination compression/expansion system in accordance with an example. Figure 21A shows that under compression, motor/generator 2104 receives power from an external source, and communicates that power ($W_{in}$) to cause compressor/expander 2102 to function as a compressor. Compressor/expander 2102 receives uncompressed gas at an inlet pressure ($P_{in}$), compresses the gas to a greater pressure for storage ($P_{st}$) in a chamber utilizing a moveable element such as a piston, and flows the compressed gas to the storage unit 2103.

Figure 21A also shows that in a second mode of operation, energy stored in the compressed gas is recovered, and compressor-expander 2102 operates as an expander. Compressor/expander 2102 receives the compressed gas at the stored pressure $P_{st}$ from the storage unit 2103, and then allows the compressed gas to expand to a lower outlet pressure $P_{out}$ in the chamber. This expansion drives a moveable member which is in communication with motor/generator 2104 that is functioning as a generator. Power output ($W_{out}$) from the compressor/expander and communicated to the motor/generator 2104, can in turn be input onto a power grid and consumed.

Figure 21A also shows the existence of possible physical, fluidic, communications, and/or thermal linkages between the compressed gas storage and recovery system, and other elements.

While Figures 21 and 21A have shown an example of a compressed gas storage and recovery system having a combined compressor/expander (C/E) and a combined motor/generator (M/G), this is not required by the present disclosure. Figure 21B shows an alternative example which utilizes separate, dedicated compressor and expander elements 2186 and 2188, respectively, that are in communication with separate, dedicated motor and generator elements 2187 and 2189 respectively. In certain examples these elements may be in physical communication through a single common linkage. In other examples, these elements may be in physical communication through a plurality of linkages. In still other examples, motor 2187 and generator 2189 may be combined into a single motor/generator unit.

In this example as well as others, energy recovered from expansion of compressed gas need not be routed out of the system as electrical energy. In certain modes of operation the full amount of the energy derived from expanding gas may be consumed for other purposes, for example temperature control (such as heating or cooling) and/or the compression of more gas by a compressor.

Figure 21C shows a simplified block diagram of an alternative example of a compressed gas storage and recovery system in accordance with an example of the present disclosure. In the example of Figure 21C, the dedicated compressor (C) 2186, the dedicated expander (E) 2188, a dedicated motor (M) 2187, and a dedicated generator (G) 2189, are all in selective physical communication with one another through a multi-node gear system 2199. An example of such a gear system is a planetary gear system described in U.S. Nonprovisional Patent Application No. 12/730,549, which is incorporated by reference herein for all purposes.

A multi-node gearing system such as a planetary gear system may permit movement of all of the linkages at the same time, in a subtractive or additive manner. For example where the wind is blowing, energy from the turbine linkage may be distributed to drive both the linkage to a generator and the linkage to a compressor. In another example, where the wind is blowing and demand for energy is high, the planetary gear system permits output of the wind turbine linkage to be combined with output of an expander linkage, to drive the linkage to the generator.

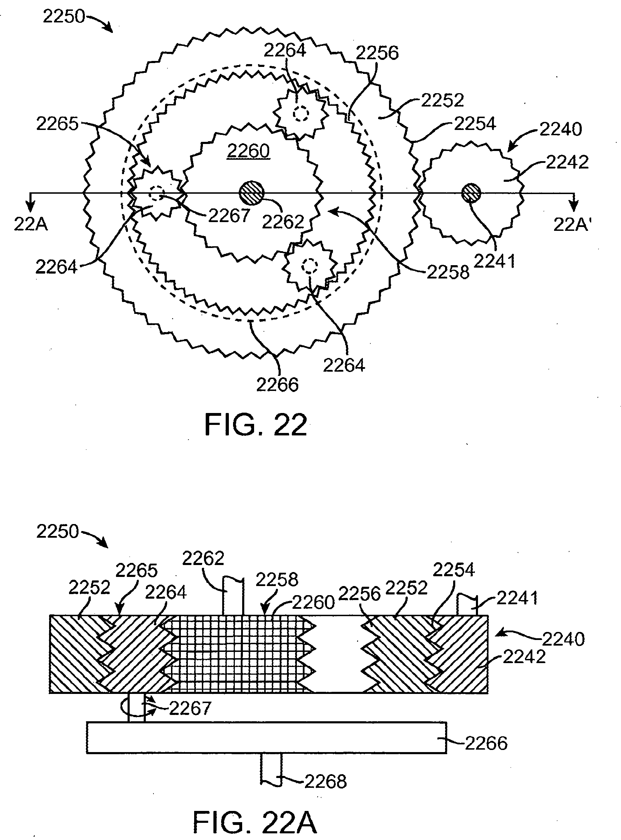

Moreover, a multi-node gear system may also be configured to accommodate movement of fewer than all of the linkages. For example, rotation of shaft 2241 in Figures 22-22A may result in the rotation of shaft 2262 or vice-versa, where shaft 2268 is prevented from rotating. Similarly, rotation of shaft 2241 may result in the rotation of only shaft 2268 and vice-versa, or rotation of shaft 2262 may result in the rotation of only shaft 2268 and vice-versa. This configuration allows for mechanical energy to be selectively communicated between only two elements of the system, for example where the wind turbine is stationary and it is desired to operate a compressor based upon output of a motor.

Certain examples of the present disclosure may favorably employ a planetary gear system to allow the transfer of mechanical energy between different elements of the system. In particular, such a planetary gear system may offer the flexibility to accommodate different relative motions between the linkages in the various modes of operation.

While Figure 21C shows an example having a multi-node gear system, this is not required by the present disclosure. In alternative examples, various elements of the system could be in physical communication with each other through individual physical linkage or through physical linkages shared with fewer than all of the other elements.

In certain examples, a compressed gas energy storage and recovery system may utilize injection of liquid to facilitate heat exchange during compression and/or expansion. Such heat exchange may allow temperature controlled (such as near-isothermal) conditions to be maintained during the compression and/or expansion processes, thereby improving efficiency of the corresponding storage and recovery of energy.

Incorporation of compressed gas energy storage and recovery systems into the generation layer of a power network, may allow existing generation assets to be utilized in roles from which they might otherwise be precluded by virtue of their ramp-up times. For example, a potential role for generation assets may be to sell power onto energy markets.

One such market is for the sale of energy to balance supply with demand over time frames of greater than one hour. Such an example may dispatch power from storage systems in near-real time in order to allow an existing generation asset to meet short-term fluctuation in demand. These fluctuations can result from natural causes, for example a change in an amount of power supplied by a variable renewable energy source (such as a wind farm). The fluctuations can also be of an artificial origin, for example changes in rate scheduling by energy markets.

Certain examples of compressed gas energy storage and recovery systems may be configured to facilitate the ramp-up of generation assets to sell power onto wholesale energy markets over longer time frames, for example within a day. Thus another potential role for energy storage systems of the present disclosure, may be to facilitate bulk intraday arbitrage by a generation asset.

In such a role, a generation asset would function to ramp-up and provide energy for sale when wholesale power is expensive. The presence of a compressed gas energy storage system would allow a generation asset to respond on short notice to opportunities for such bulk intraday arbitrage.

Power from the storage system (and later replaced by power from the generation asset after ramp-up), could be sold onto the wholesale energy market. Such a compressed gas energy storage and recovery system could be owned and operated by an Independent Power Producer (IPP), a generation utility, or some other Load Serving Entity (LSE).

Another potential role for generation assets whose ramp-up is covered by compressed gas energy storage and recovery systems, may be to perform diurnal renewable levelizing. Specifically, the fast response time of such a generation asset would allow demand to quickly be shifted from variable renewable energy sources in order to better match load and transmission availability. For example, where winds die down, energy from compressed gas could tide over the power network until a gas turbine is ramped-up to cover the loss of the renewable supply. This would increase the reliability, and hence value, of the renewable energy.

While the above description has related to systems classified as belonging to the generation layer whose recovered power is sold onto wholesale energy markets, the present disclosure is not limited to performing such roles. In accordance with alternative examples, energy storage and recovery systems could sell energy to other types of markets and remain within the scope of the present disclosure.

An example of such an alternative market for selling power recovered from compressed gas, is the ancillary services (A/S) market. Broadly speaking, the ancillary services market generally represents the sale of electrical power to the network for purposes other than consumption by end users. Such purposes include maintaining integrity and stability of the network, and the quality of the power provided thereon.

The ability (capacity) to provide energy to the ancillary services market, is usually sold for periods of less than one day, at a market price. The Independent System Operator (ISO) pays the capacity cost for reserving such capacity.

The actual energy itself, is sold in response to a call from the network to provide the power for a duration. When this happens, the owner of the system would be paid the market value of the energy sold.

One ancillary market exists for maintaining the capacity to provide necessary reserves needed to operate the network. That is, the operator of the network is required to be able to supply an amount of power above and beyond an existing demand, in order to ensure that the network is able to meet future demand. Such reserves are typically calculated as a percentage in excess of a supply.

One form of reserves are contingency reserves. Contingency reserves are summoned by the power network at relatively short notice in response to certain events (contingencies) that are unexpected but need to be planned for. Examples of such possible contingencies include the failure of an element of the transmission layer (such as a transmission line), an unanticipated surge in demand, or the need to shut down or reduce output of a generation element on short notice.

One form of contingency reserves are spinning reserves. Such spinning reserves are typically available on extremely short notice. Spinning reserves have traditionally taken the form of an increase in output from generating units that are operating at less than capacity, or by interruption of service to certain customers. Such reserve is referred to as "spinning" because in order to satisfy the demand on short notice, the generation asset may already be on-line and operating in a synchronous manner ("spinning") with the rest of the network.

Another form of contingency reserves are standing reserves. Standing reserves are available with a longer lead time than spinning reserves, as the generation element is not yet synchronously on-line. Standing reserves may also take the form of an interruption of service to certain customers, with a correspondingly longer notice period.

In certain examples, existing generation assets whose ramp-up times are covered by compressed gas energy storage and recovery systems according to the present disclosure, may be able to function to provide contingency reserves. Such generation assets would have the capacity to provide the necessary amount of contingency power for a duration required by the service provider. Various possible roles for ramp-up coverage are summarized above.

A compressed gas energy storage and recovery system may be incorporated within a power supply network, with an end user behind the meter. Such an energy storage and recovery system could function in power supply and/or temperature control roles. In certain examples, the energy recovered from expansion of compressed gas may be utilized to cool an end user. According to some examples, heat generated from compression of the gas could be utilized for heating. In functioning as a power supply, the compressed gas energy storage and recovery system could serve as an uninterruptible power supply (UPS) for the end-user, and/or could function to provide power to allow the end user to perform peak shaving and/or participate in demand response programs.

According to examples of the present disclosure, a compressed gas energy storage and recovery system may be incorporated within a power supply network behind the meter of an end user. In certain examples energy produced by compression of the gas, or energy recovered from expansion of the gas (and possibly supplemented from other heat sources), may be utilized to provide temperature control (for example cooling and/or heating) of the end user.

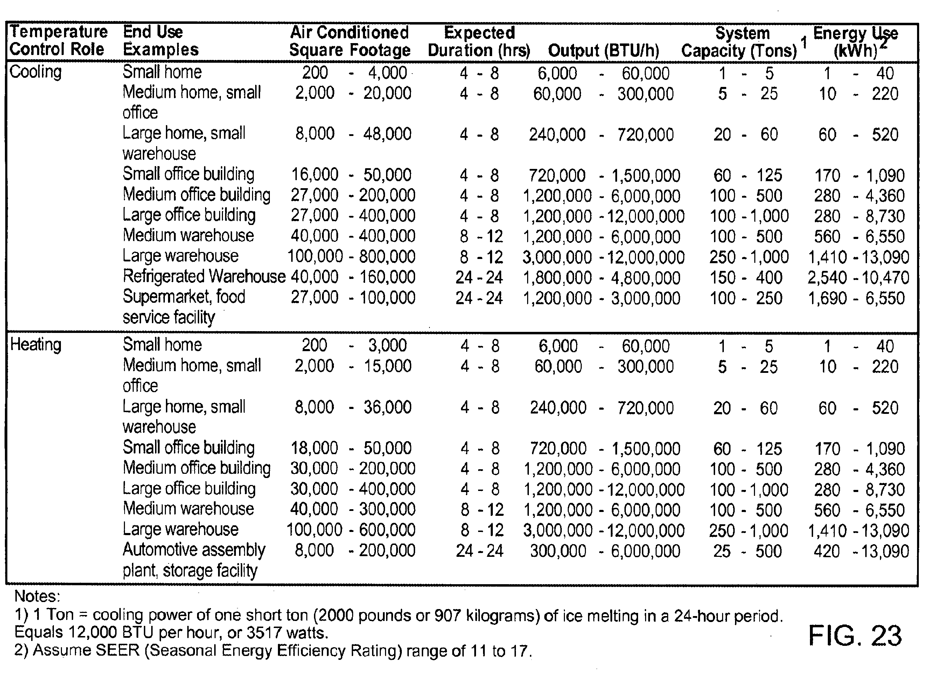

Examples of some parameters for such temperature control roles are listed in the table shown as Figure 23.

In certain examples, compressed gas energy storage systems that are located within the consumption layer, may provide a supply of power to meet the full or partial needs of the end user. Examples of such power supply roles include but are not limited to functioning as an uninterruptible power supply (UPS), as a power supply allowing the end user to engage in daily arbitrage (i.e. the daily purchase of power from the network at times of lower price), as a power supply allowing the end user to participate in demand response programs, as a power supply allowing the end user to reduce consumption below historic peak levels, and/or as a power supply furnishing power during periods of varying or intermittent supply from a renewable energy source, such as a wind turbine or photovoltaic (PV) array.

Examples of some parameters for such power supply roles are listed in the table shown as Figure 19.

An example of a small end user includes an individual residence or a small business. Examples of a medium-sized end users include those with greater demands for power and/or temperature control, for example hospitals, office buildings, large stores, factories, or data storage centers. A large end user may include ones made up of a plurality of individual entities, for example a shopping mall, a residential subdivision, an academic or administrative campus, or a transportation node such as an airport, port, or rail line.

Figure 18 shows incorporation of various examples of compressed gas storage systems into a power network. Figure 18 shows that in certain examples, a compressed gas energy storage and recovery system 1840a may be incorporated in the consumption layer behind a meter 1834a with an end user 1806a. In such a configuration, a plurality of different types of linkages 1850 (including but not limited to physical, thermal, electrical, fluidic, and/or communication) may be present between the end user and the energy storage and recovery system.

Figure 18 also shows that in other examples, a compressed gas energy storage and recovery system 1840b according to the present disclosure may be co-situated behind a meter 1834b with both the end user 1806b and with one or more local power sources 1855. Examples of such local power sources include but are not limited to wind turbines and solar energy harvesting apparatuses such as a rooftop photovoltaic (PV) arrays and/or thermal solar systems. In such a configuration, a plurality of different types of linkages 1850 (including but not limited to physical, electronic, communication, thermal, and/or fluidic) may be present between the end user and the energy storage and recovery system, between the end user and the local generator, and/or between the energy storage and recovery system and the local power source.

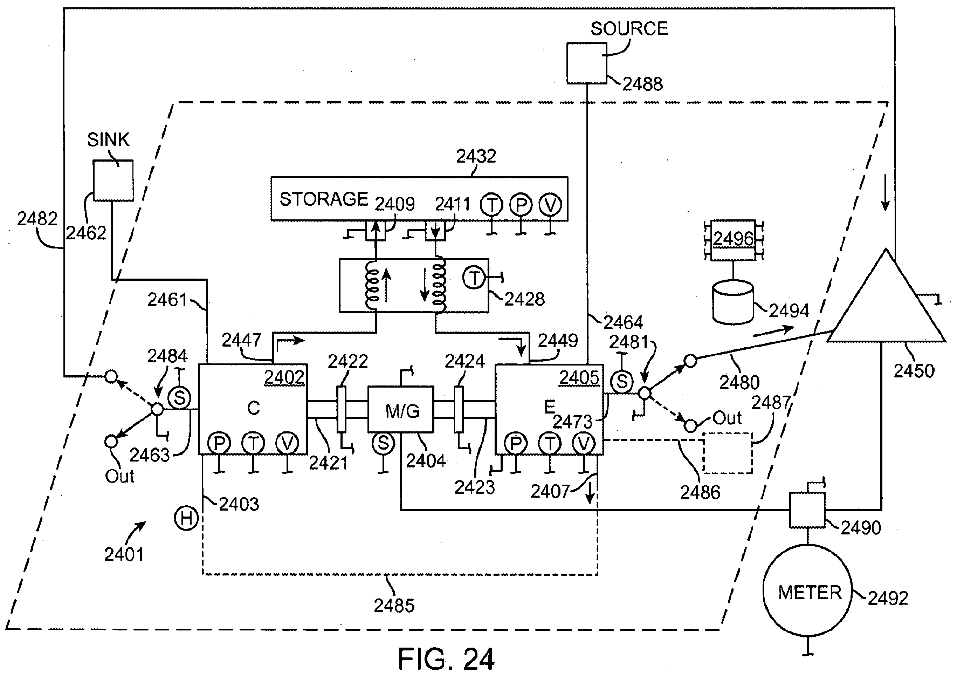

Figure 24 shows a simplified block diagram of one example of a compressed gas storage and recovery system in accordance with an example of the present disclosure. In particular, compressed gas storage and recovery system 2401 comprises a motor/generator (M/G) 2404 configured to be in electrical communication with an end user 2450 and with a meter 2492.

Motor/generator (M/G) 2404 is in selective physical communication with dedicated compressor (C) 2402 through physical linkage 2421 and clutch 2422. Motor/generator (M/G) 2404 is also in selective physical communication with dedicated expander (E) 2405 through linkage 2423 and clutch 2424.

The dedicated compressor (C) 2402 is in selective fluid communication with gas inlet 2403. A gas outlet 2447 of the dedicated compressor is in selective fluid communication with compressed gas storage unit 2432 through counterflow heat exchanger 2428 and one-way valve 2409.

In certain examples, the compressed gas storage unit 2432 may be in selective communication with a heat source. For example, the compressed gas storage unit could be positioned in thermal communication with the sun, such that during the daylight hours it absorbs solar energy. In certain examples the storage unit could be coated with a material that promotes the absorption of thermal energy, for example a dark colored paint.

In certain examples the compressed gas storage unit could be positioned in thermal communication with the sun behind an optically transparent barrier, such as glass. The barrier could serve to trap infrared (IR) radiation from the sun's rays, thereby further enhancing heating of the compressed gas during daylight hours.

A gas inlet 2449 of the dedicated expander (E) is in selective fluid communication with compressed gas storage unit 2432 through the counterflow heat exchanger 2428 and one-way valve 2411. The dedicated expander is in selective fluid communication with gas outlet 2407.

As mentioned above, examples of the present disclosure employ heat exchange with introduced liquid to achieve efficient energy storage and recovery utilizing gas compression and expansion under conditions of controlled temperature change. In certain examples, these controlled temperature conditions may result in near-isothermal gas compression or expansion.

Thermal energies extant within the system may be communicated through a variety of thermal linkages. A thermal linkage according to examples of the present disclosure may comprise one or more elements configured in various combinations to allow the transfer of thermal energy from one physical location to another. Examples of possible elements of a thermal linkage include but are not limited to, liquid flow conduits, gas flow conduits, heat pipes, heat exchangers, loop heat pipes, and thermosiphons.

For example, the dedicated compressor may be in selective thermal communication with thermal sink 2462 through a thermal linkage 2461. This thermal linkage may allow the transfer of thermal energy in the form of heat from the compressed gas.

The dedicated expander may be in selective thermal communication with thermal source 2488 through thermal linkage 2464. This thermal linkage may allow the transfer of thermal energy in the form of coolness from the expanded gas.

The dedicated compressor includes a thermal linkage 2463 that is configured to communicate thermal energy in the form of heat from the compressed gas. This thermal energy in the form of heat may be selectively flowed through switch 2484 out of the system, or through thermal linkage 2482 to the end user. In certain examples, thermal linkage 2482 may convey heat in the form of the compressed gas itself. In certain examples, the thermal linkage may convey the heat in the form of a fluid that has exchanged heat with the compressed gas.

The dedicated expander includes a thermal linkage 2473 that is configured to communicate thermal energy in the form of coolness from the expanded gas. This thermal energy in the form of coolness may be selectively flowed through switch 2481 either out of the system, or through thermal linkage 2480 to the end user. In certain examples, thermal linkage 2473 may convey coolness in the form of the expanded gas itself. In certain examples, the thermal linkage may convey the coolness in the form of a fluid that has exchanged heat with the expanded gas.

In certain examples, the thermal links 2480 and 2482 may be configured to interface with an existing Heating, Ventilation, and Air-Conditioning (HVAC) system in the end user. Examples of such standard HVAC systems include but are not limited to available from the following manufacturers: AAON, Addison Products Company, Allied Thermal Systems, American Standard, Armstrong, Bard, Burnham, Carrier, Coleman, Comfortmaker, Goodman, Heil, Lennox, Nordyne, Peake Industries Limited, Rheem, Trane, and York International.

Exemplary types of residential HVAC systems may comprise air conditioners, heat pumps, packaged gas electric, packaged heat pumps, packaged air conditioners, packaged dual fuel, air handlers, and furnaces. Exemplary types of commercial HVAC systems may comprise packaged outdoor units, including packaged rooftop units using Puron® refrigerant, packaged rooftop units using R-22 refrigerant, and 100% Dedicated outdoor air units. Commercial HVAC systems packaged indoors include indoor self-contained units, water source heat pumps, and packaged terminal air conditioners.

Commercial HVAC systems may also be in the form of packaged split-systems. Examples include split systems (6 to 130 tons), split systems (1.5 to 5 tons), condensers, duct free systems, furnaces, and coils.

Examples of chillers include but are not limited to air-cooled chillers, water-cooled chillers, condenserless chillers, and may include condensers and other chiller components.

Airside equipment may include but is not limited to air handlers, air terminal coils, fan coils, heat/energy recovery units, induction units, underfloor air distribution systems and unit ventilators. Examples of heating equipment include but are not limited to boilers and furnaces.

In many examples the thermal linkages may comprise fluidic conduits that are part of a loop or circuit of fluid flow. In certain examples, fluid(s) cooled by direct or indirect heating of the end user (or heated by direct or indirect cooling of the end user) may be returned to the system.

Thus in certain examples, heated liquid outlet from the compressor, may be circulated back to the compressor after exposure to a heat sink (which may be an end user requiring heating). Similarly, cooled liquid outlet from the expander may be circulated back to the expander after exposure to a heat source (which may be an end user requiring cooling). In both cases, the thermal exposure could occur through one or more heat exchanger structures.

In certain examples, cooled gas outlet from the expander, may be circulated back to the compressor after exposure to a heat source in the form of an end user requiring cooling. Similarly, heated gas outlet from the compressor may be circulated back to the expander after exposure to a heat sink in the form of an end user requiring heating. In such cases, the thermal exposure could occur through one or more heat exchanger structures.

Again, the thermal linkages need not comprise a single element. Thermal energy could be transferred from a liquid flowing through a liquid conduit, to a gas flowing through a gas conduit (and vice-versa), utilizing heat exchangers of various types. Such heat exchangers may be positioned in a variety of different locations, ranging from the site of the original heat exchange, to inside of the end user. In certain examples, one or more components of a thermal linkage could comprise a heat pipe, in which a fluid changes phase between gas and liquid.

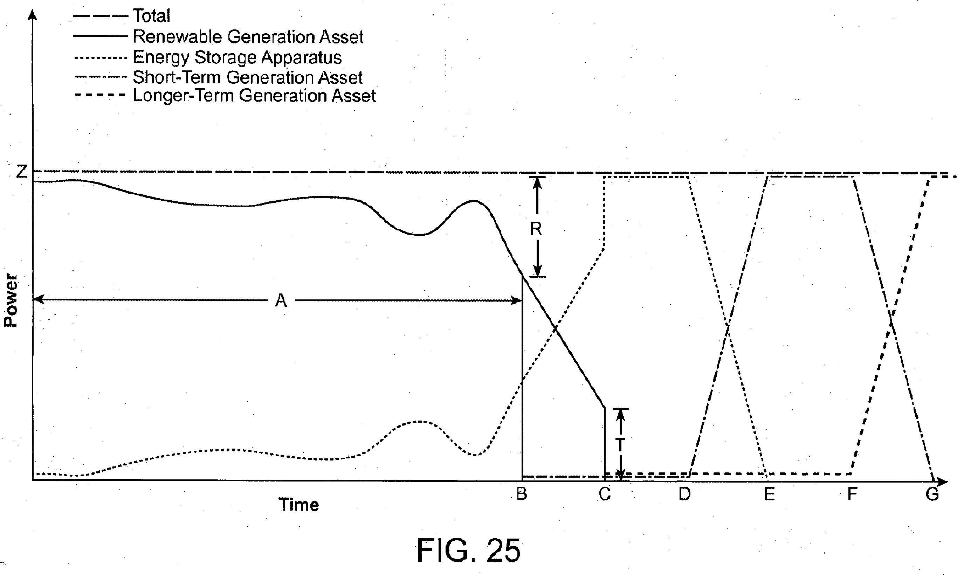

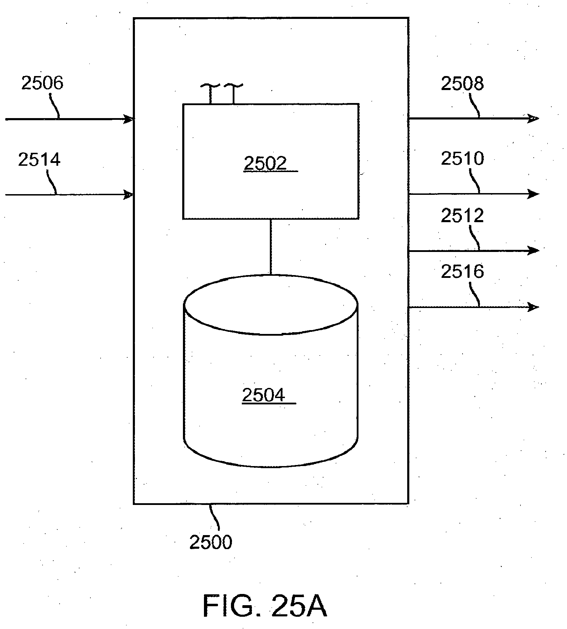

Operation of an example of a system according to the present disclosure with a power grid could be coordinated by a central processor receiving inputs and producing outputs based upon a control algorithm. An example of such operation is now described in connection with Figures 25-25A.

Figure 25 plots power output over time, of various elements of a power supply network. A first element is a renewable energy source (such as wind farm), whose output is variable depending upon natural forces. A second element is a system according to an example of the present disclosure.

A third element whose power output is shown in Figure 25, is a short-term generation asset. Such a short-term generation asset may be configured to provide power on short notice, but at low efficiency and/or relatively high cost. An example of such a short-term generation asset is a diesel generator, or even another energy storage apparatus.

A fourth element whose power output is shown in Figure 25, is a longer-term generation asset. Such a longer-term generation asset may be configured to provide efficient power at relatively low cost, but requiring longer term notice. An example of such a longer-term generation asset is a natural gas turbine.

Operation of these various elements may be coordinated by a central processor, in order to maintain a stable supply of power on the network while ensuring efficient utilization of available resources. Figure 25A shows a simplified view of an example of a system 2500 comprising a processor 2502 in electronic communication with a power supply network and with an energy storage apparatus, the system further comprising a computer-readable storage medium 2504 in electronic communication with the processor and having stored thereon code configured to cause the processor to:

- receive an input 2506 relating to a predicted change in a load of the power supply network, or a change in generation capacity available to the power supply network,
- process the input according to a control algorithm,
- communicate a first signal 2508 either automatically causing the energy storage apparatus to operate to output electrical power, or recommending a human operator to instruct the energy storage apparatus to operate to output electrical power, and
- communicate a second signal 2510 either automatically causing ramp-up of a generation asset of the power supply network, or recommending the human operator to instruct ramp-up of a generation asset of the power supply network.

According to certain examples, the input may originate from the power supply network, for example a demand response command). In some examples, the input may originate from the meter, for example indicating consumption approaching or exceeding a historic peak.

In certain examples, the input may be a predicted change in wind or solar energy at a renewable generation asset of the power supply network. The input may comprise an environmental temperature change indicative of the changed load, or may comprise a weather disturbance predictive of disruption of the power supply network.

In certain examples, the energy storage apparatus may be configured to output the electrical power directly to a consumer located behind a meter of the power supply network. According to particular examples, the energy storage apparatus may be configured to output the electrical power onto the power supply network, for example to a distribution or transmission layer through a transformer, or to a generation layer through a busbar.

In certain examples the energy storage system may store energy in electrical form, for example a battery or capacitor bank. In some examples, the energy storage apparatus is configured to generate the electrical power from expansion of compressed gas in a presence of a liquid to drive a physical linkage such as a crankshaft. Particular examples may introduce the liquid by spraying with a rotational motion followed by impingement upon a deflection surface.

According to some examples, the computer readable storage medium may further include code stored thereon to cause the processor to communicate a signal 2512 either automatically halting operation of the energy storage apparatus, or recommending the human operator to instruct halting of operation of the energy storage apparatus, in response to a signal 2514 indicating completion of the ramp-up of the generation asset.

A system according to particular examples may have the computer readable storage medium further including code stored thereon to communicate a signal 2516 either automatically causing replenishment of the energy storage apparatus, or recommending the human operator to instruct replenishment of the energy storage apparatus.

Returning to the particular example shown in Figure 25, over the time interval A the renewable energy source provides a power output that varies within an expected range R. Over this same time interval A, the system according to an example provides sufficient power to compensate for this variable power output and thereby maintain power at a level Z. Here, Z may represent the total power on the grid, or a portion of that total power (for example a power commitment from the wind farm established by contract). Accordingly, over the time period A neither the short-term nor the long-term generation assets are required to be used.

At a time B, the central processor receives information indicative of a long term loss of power from the renewable generation asset. For example, the renewable generation asset may communicate information indicating a pattern of changed wind velocity conforming to historical trends of substantial wind loss. Such historical trends may also be influenced by other factors, such as the time of year, the time of day, the particular geographic location of the wind turbine, and meteorological models of current and future weather activity. One possible source of predictive wind modeling is True Wind Solutions LLC of Albany, New York.

Accordingly, at time B the processor sends a signal to the short-term generation asset, instructing its ramp-up to begin to supply power replacing that of the renewable generation asset. As such ramp-up is not instantaneous, the processor also notifies the compressed gas storage system to expect to maintain or even increase its output in order to cover the ramp-up period of the short-term generation asset.

As predicted at time C the wind velocity drops below a threshold T, below which no power is generated from the wind turbine. At this point C the compressed gas energy storage system assumes the entire load Z.

The ability of the system according to an example of the present disclosure to provide power, may ultimately be limited by one or more factors, including the size of its generator, the size of its storage capacity, and the current state of its existing storage capacity. In addition, the system may provide power at a certain cost that may be higher than that available from the long-term generation asset. These pieces of information are available as inputs to the processor. In response, at time C the central processor notifies the longer-term generation asset to prepare to come on-line to meet the load over the longer term.

At time D the short-term generation asset has warmed up and comes on-line, and rapidly begins to generate power to meet the full demand by time E. Over the period from D to E, the compressed gas storage system correspondingly ramps down its output.

By time F, the prolonged ramp-up period for the long-term generation asset has been reached, and that asset also now comes on-line and begins to provide increasing power to meet the load. Over the period from F to G, the short-term generation asset correspondingly ramps down its output.

The transition of Figure 25 (from the grid receiving power primarily from the renewable energy source, to its receiving power from a longer-term generation asset), is coordinated by the central processor based upon information received from various sources. This transition is accomplished with desirable efficiency from available resources, without imperiling the stability of power on the network.

The particular transition shown in Figure 25, represents a highly simplified case. For example, at any given time multiple generation assets of different types (i.e. variable (renewable), baseline, peak, load following) would be contributing power to meet demand. Moreover, multiple storage apparatuses would be deployed at different points in the network, with more than one storage apparatus being used to satisfy demand at any given point in time.

The specific scenario shown in Figure 25 is also simplified in that it shows only the activation of resources to meet demand. In a variant of these events, the wind speed could unexpectedly pick back up in a manner indicating continued dependable supply. In such a scenario, based upon this newly received information the processor could instruct/recommend suspension of ramp-up of generation assets, or other steps accommodating the now-available dependable supply of renewable energy.

The scenario shown in Figure 25 is simplified in that the overall load is shown as unchanging. In reality, the load on the grid will experience changes over time in ways that are both predictable (e.g. daily patterns, scheduled maintenance) and unpredictable (storm damage, unscheduled maintenance). The ability of the processor to rapidly respond to such changing conditions (in the form of varying inputs), can aid a human operator in the decision-making process.

The scenario of Figure 25 is simplified in that it presents only one particular chain of events (loss of generation capacity available from a renewable resource). A myriad of other events is of course possible, influenced by factors including but not limited to:

- weather patterns;
- demand patterns;
- energy pricing structures/agreements;
- availability of transmission and/or distribution assets;
- conditions of other interconnected power grids.

Of course, the present invention is not limited to use with renewable energy sources, or with particular energy storage systems. Rather, examples of the present invention could employ a central processor to control (or recommend control decisions to a human user) various assets of a power supply network to coordinate activity with different types of energy storage, of which compressed gas is only one example. Thus according to alternative embodiments, a central processor could execute a control algorithm to integrate a storage system comprising a battery, with non-renewable generation assets of a grid, for example to meet changing demands.

Examples of inputs to such a control algorithm executed by a central processor, include but are not limited to:

- existing/expected future load;
- price of power from generation asset;
- ramp-up time of generation asset;
- available storage capacity;
- storage recharge requirements;
- status of generation asset (i.e. spinning, stand-by);
- market (wholesale, A/S) price for power;
- status of renewable power sources (i.e. current/future meteorological conditions);
- transmission capacity.

Examples of decisions made or recommended to a human operator based upon inputs to a control algorithm, include but are not limited to:

- activating/de-activating generation assets;

- discharging/charging storage apparatuses;
- altering transmission/distribution pathways; and
- purchasing power from wholesale or ancillary services markets.
- reducing/shifting demand;

In connection with reducing/shifting of demand, an energy storage apparatus could perform this function without actually outputting electricity onto the network through a busbar or transformer. Specifically, an energy storage apparatus positioned behind a meter with an end user, could output power (in electrical or other forms) directly to that end user. Such power output from the storage device would effectively replace the electricity drawn by the consumer from the grid, thereby reducing the load on the power supply network.

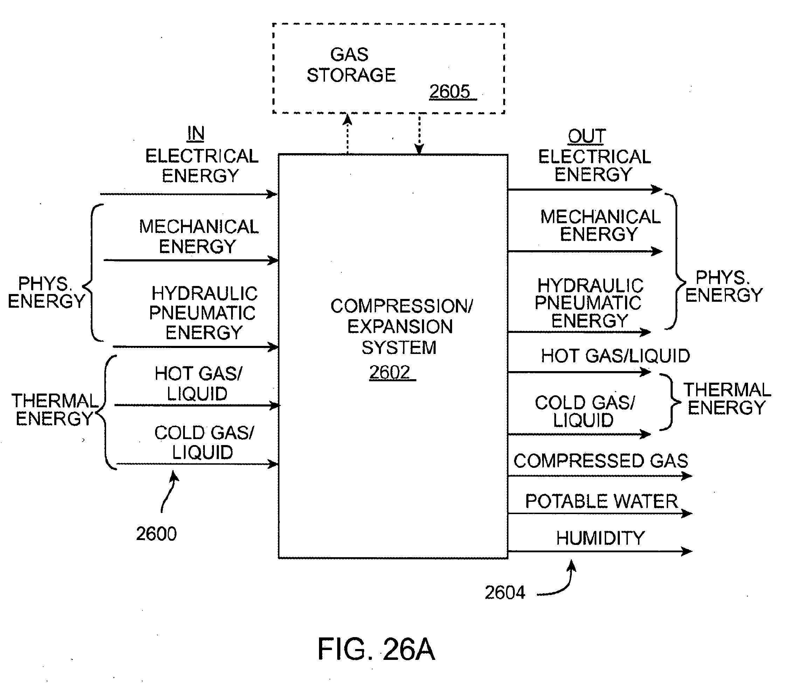

Examples of apparatuses, methods, and systems according to the present disclosure may allow the conversion between different forms of energy. For example, Figures 26A-B show views of an example of a system. Figure 26A shows the input 2600 of different energy types to an system 2602 having one or more characteristics as described herein. Figure 26A also shows the corresponding output 2604 of energy in various forms, from the system. Figure 26A further shows the optional storage of compressed gas in storage unit 2605, between the input and the output.

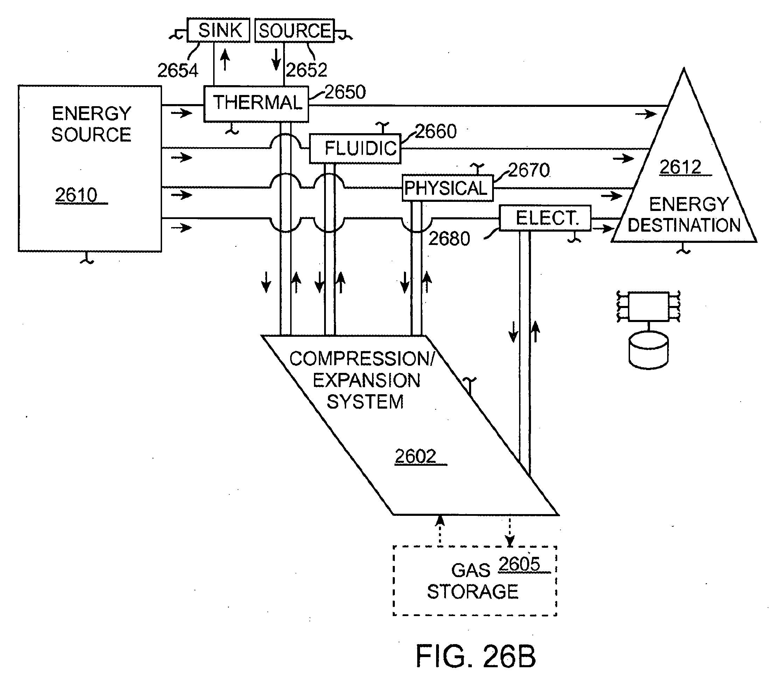

Particular examples of compression/expansion systems according to the present invention, have previously been shown and described. Figure 26B shows a generalized depiction of such a system 2602 (including the optional compressed gas storage 2605), in communication with an energy source 2610 and with an energy destination 2612.

Specifically, energy source 2610, system 2602, and energy destination 14412 are in thermal communication with thermal network 2650. Such a network transmits thermal energy, and may comprise elements such as liquid flow conduits, gas flow conduits, heat pipes, insulated vessels, heat exchangers (including counterflow heat exchangers), loop heat pipes, thermosiphons, heat sources, and heat sinks. Figure 26B particularly shows the thermal network as including heat source 2652 and heat sink 2654, which comprise a source of low grade heat and the external environment, respectively.

FIG. 26B also shows energy source 2610, system 2602, and energy destination 2612, as being in communication with fluidic network 2660. Such a network transmits fluids including gases, liquid, and/or mixtures thereof, and may comprise elements such as tanks or reservoirs, liquid flow conduits, gas flow conduits, pumps, vents, liquid flow valves, gas flow valves, switches, liquid sprayers, gas spargers, mixers, accumulators, and separators.

Various types of separators have been mentioned above. Gas-liquid separators and/or liquid-liquid separators may be employed, depending upon the particular embodiments. Examples of gas-liquid separator designs include vertical type, horizontal type, and spherical type. A liquid collector section of a separator may include elements such as inlet diverters including diverter baffles, tangential baffles, centrifugal, elbows, wave breakers, vortex breakers, defoaming plates, stilling wells, and mist extractors.

FIG. 26B further shows energy source 2610, system 2602, and energy destination 2612 as being in communication with physical network 2670. Such a network transmits physical energy, and may comprise mechanical elements configured to convert linear motion to/from rotational motion, such as shafts (including crankshafts). Other examples of mechanical components of physical networks include screws, pistons, gears (including multi-node gearing systems such as planetary gears), and motors.

Physical networks may also comprise hydraulic or pneumatic elements, including pistons, accumulators, gas chambers liquid chambers, gas conduits, liquid conduits, hydraulic motors, hydraulic transformers, pneumatic motors, and others known in the art.

FIG. 26B finally shows energy source 2610, system 2602, and energy destination 2612 as being in communication with electrical network 2680. Such a network transmits electrical energy, and may comprise elements such as resistors, transistors, capacitors, inductors, transformers, batteries, insulators, diodes, amplifiers, power sources, bus lines, meters, busbars, filters, power conditioning equipment, and any of the other myriad of electrical components as are known in the art.

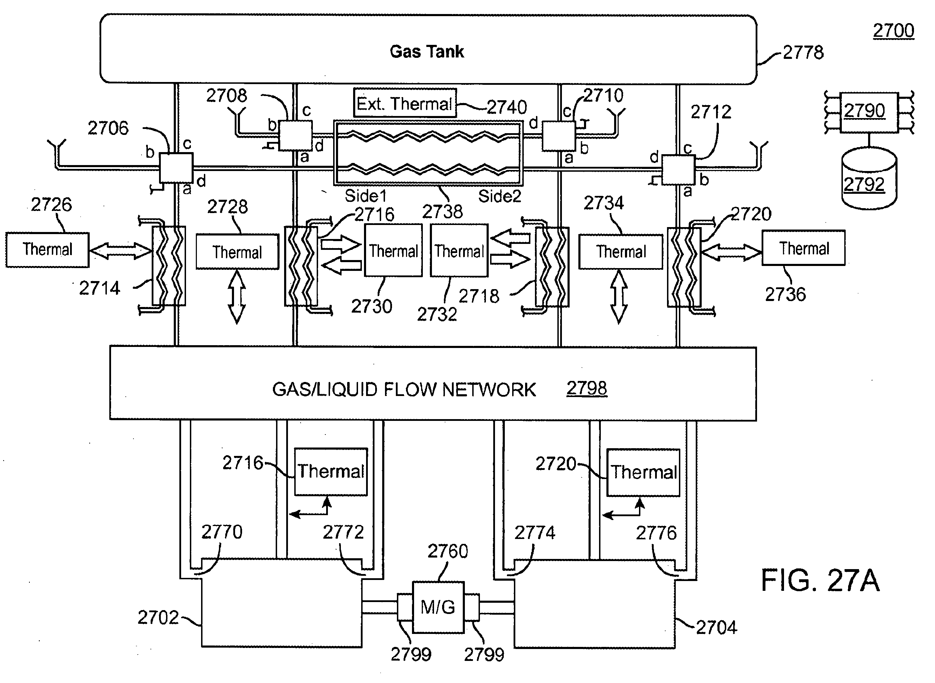

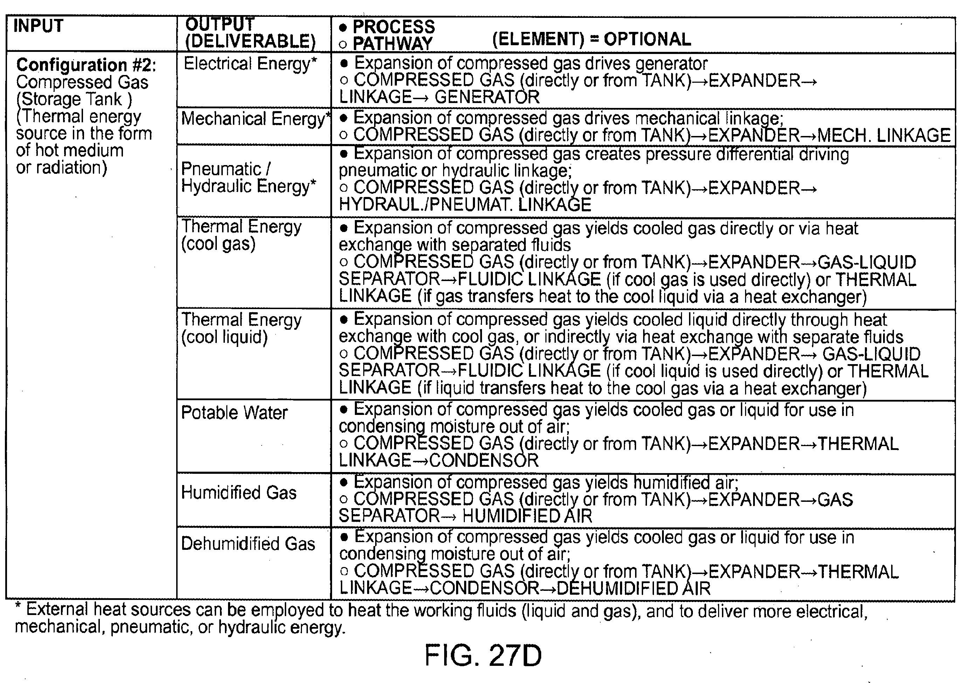

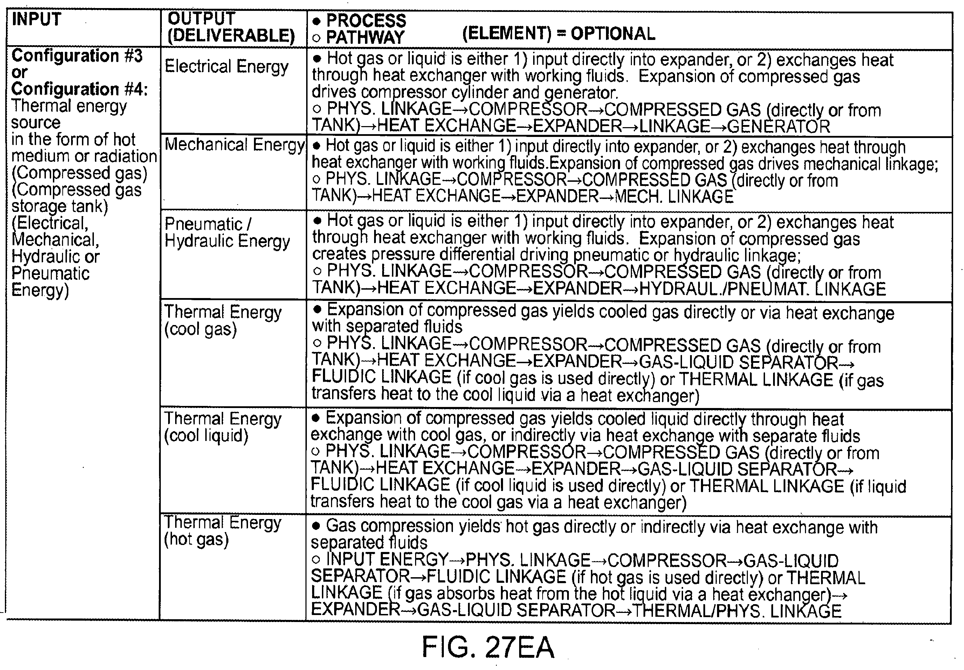

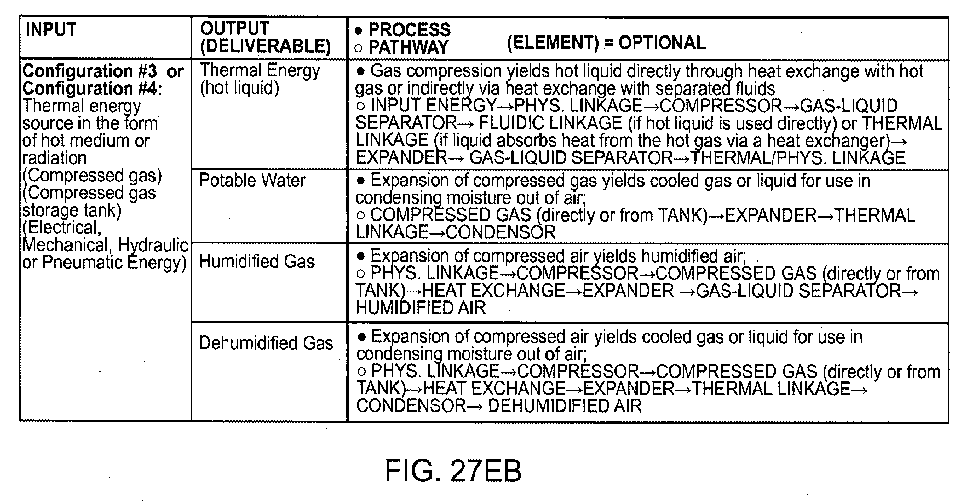

Figure 27A shows a simplified schematic diagram of an example of an apparatus in accordance with the present invention, that may be arranged in various configurations to provide different functions. In particular, Figure 27A shows a system 2700 comprising two chambers 2702, 2704 housing rotors and blades connected to shaft(s) coupled to a motor/generator 2760.

According to certain examples (e.g. where the rotation of the rotors is in the same direction for compression and for expansion), the shafts may be a common shaft. Alternatively, the shafts may be separate, and be connected to the motor/generator via one or more intermediate linkages 2799. Examples of such intermediate linkages include but are not limited to clutches, multi-node gear systems, and mechanical reversing linkages (e.g. where rotation of the rotors is in the opposite direction for compression and expansion).

Figure 27A shows each chamber having respective ports 2770, 2772, 2774, 2776, through which gas is flowed to/from the chamber via a gas/liquid flow network 2798 that may comprise elements including but not limited to such as gas flow conduits, liquid flow conduits, valves, pumps, accumulators, heat exchangers, pulsation dampener bottles, condensers, gas-liquid mixing chambers, and gas-liquid separators. Gas-liquid separators of the gas/liquid flow network may be in thermal communication with respective gas-gas heat exchangers 2716, 2720, and in fluid communication with a respective chamber to accomplish gas-liquid heat exchange therein.

Figure 27A further shows the chambers as being in selective fluid communication with each other, with the storage tank, and with various ports to the system, through a network of gas conduits and multi-way valves 2706, 2708, 2710, and 2712. Operation of such multi-way valves, in addition to operation of the gas/liquid flow network and 2798 and component valves thereof, may be coordinated by a central processor 2790 based upon code present in computer-readable storage medium 2792.

Figure 27A further shows various thermal nodes 2725, 2728, 2730, 2732, 2734, 2736, and 2740. Such thermal nodes can comprise one or more external heat sources, or one or more external heat sinks. Examples of such possible such external heat sources include but are not limited to, thermal solar configurations, geothermal phenomena, and proximate heat-emitting industrial processes. Examples of such possible such external heat sinks include but are not limited to, the environment (particularly at high altitudes and/or latitudes), and geothermal phenomena (such as snow or water depth thermal gradients). Thermal energy communicated to/from the system at these various thermal nodes, can affect the operation of the system.

The following table shows different configurations of the apparatus of Figure 27A.

| Config. | ID | 1 | 2 | 3 | 4 |
|---|---|---|---|---|---|
| | Description | Energy Storage | Energy Delivery | Heat Engine | Heat Engine |
| | Storage | to storage | from storage | No storage | No storage |
| | Gas Flow | Open System; Fig. 27BA; upward to storage | Open System; Fig. 27BB; downward from storage | Closed Circuit; Fig. 27BC; | Open System; Fig. 27BD |
| Chamber No. | 2702 | Compressor | Expander | Compressor | Compressor |
| | 2704 | Compressor | Expander | Expander | Expander |
| Valve No. Connection: Port a - port | 2706 | b | c | d | b |
| | 2708 | c | b | d | d |
| | 2710 | b | c | d | d |
| | 2712 | c | b | d | b |

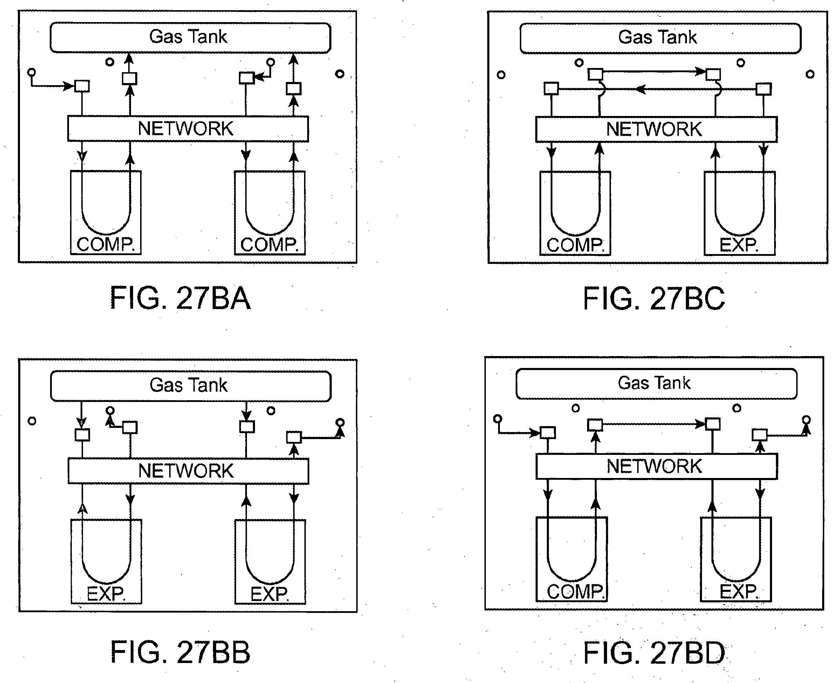

Figures 27BA-BF are highly simplified depictions of the flow of gases through the apparatus of Figure 27A in various configurations. For example, in configuration 1, (Figure 27BB) both chambers act as compressors. Gas is sucked in from ambient, a tank, or another, lower pressure stage. Gas is then compressed near-isothermally by spraying a liquid into the air during or before compression. An amount of liquid introduced into the chambers controls the discharge temperature of compressed gas. Heat can be extracted from the heated compressed gas before or after it enters the tank or a second stage.

In configuration 2 (Figure 27BB), both chambers act as expanders. Compressed gas is fed into the chambers from a tank and/or another source of compressed gas (such as a higher-pressure stage). Pressure of the compressed gas drives the physical linkages and/or electrical generator in communication therewith. This process produces cold gas and cool liquid that can be used, directly or indirectly, for air-conditioning, refrigeration, or cooling.

In configuration 3 (Figure 27BC), one chamber acts as a compressor and the other acts as an expander. The working gas is in a closed loop. Gas is compressed in the compressor, producing hot gas and hot liquid. The compressed gas is then fed into the expander. The liquid sprayed into the expander, or the compressed gas, can be preheated by external heat sources to generate a net deliverable mechanical energy. Expander produces the power required to derive the compressor, and to generate energy in various forms (e.g. electrical/mechanical/hydraulic/pneumatic energy).

In configuration 3, gas may be flowed through a counter flow heat exchanger. The counter flow heat exchanger may be used to preheat the compressed gas and cool down the expanded gas.

In configuration 4 (Figure 27BD), one chamber acts as a compressor and the other acts as an expander. Gas is sucked in from ambient, a tank, or another stage. The gas is then compressed near-isothermally. Heat may be extracted from the heated compressed gas, or additional heat may be added to the gas stream before it is fed into the expander. The liquid sprayed into the expander may be preheated with an external heat source. The expander produces the power required to derive the compressor, and to generate output energy in one or more forms (e.g. electrical/mechanical/hydraulic/pneumatic energy).

30

Certain examples may operate in any of the above configurations continuously, or may switch between configurations intermittently. For example, such intermittent operation between configurations could entail electronic control over the states of the multi-way valves, for example such that gas is flowed to and/or from the storage unit at particular times.

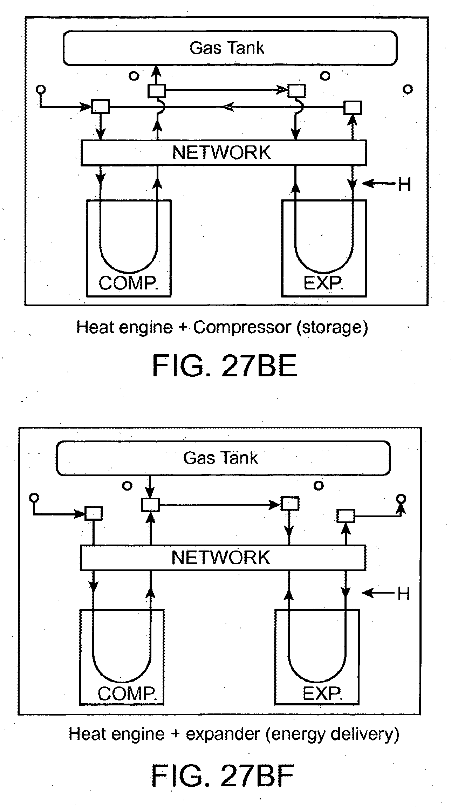

Moreover, systems according to examples could be operated in a combination of the above configurations. For example, Figure 27BE shows a simplified view of the flow of gases through the system of Figure 27A, in an alternative configuration combining compressor and heat engine functions.

In certain such combined configurations, the multi-way valves may be configured to combine multiple inputs, or to provide multiple outputs. In the combined configuration of Figure 27BE, one of the multi-way valves outputs compressed gas not only to the (righthand) chamber acting as an expander, but also to the storage tank.

Figure 27BF shows a simplified view of the flow of gases through the system of Figure 27A, in an alternative configuration combining expander and heat engine functions. In this configuration, one of the multi-way valves receives compressed gas not only from the (left-hand) chamber acting as a compressor, but also from the storage tank. The right hand chamber recovers energy from expansion of this combined amount of compressed gas.

While Figures 27BE-BF show combinations of configurations where the gas flow path is open, examples of the present invention are not limited to this approach. Alternative examples could employ the flow of compressed gas to/from storage, in combination with gas flow within a closed circuit, as in the manner of Figure 27BC.

In certain examples of configurations, a starter may be used to initiate the action of the compressor.

Examples of the present invention are not limited to expansion of compressed gas to atmospheric pressure, and under certain circumstances the gas may be expanded to above or below atmospheric. Moreover examples of the present invention are not limited to compressing gas from ambient temperature, and under some circumstances the inlet gas for compression may be above or below ambient temperature.

Furthermore, the present invention is not limited to the particular apparatus shown in Figure 27A, and variations are possible. For example, in some examples a system could be operated with additional heat exchanger(s), or without heat exchanger(s). In particular examples, the system could be operated in parallel or series with one or more similar systems.

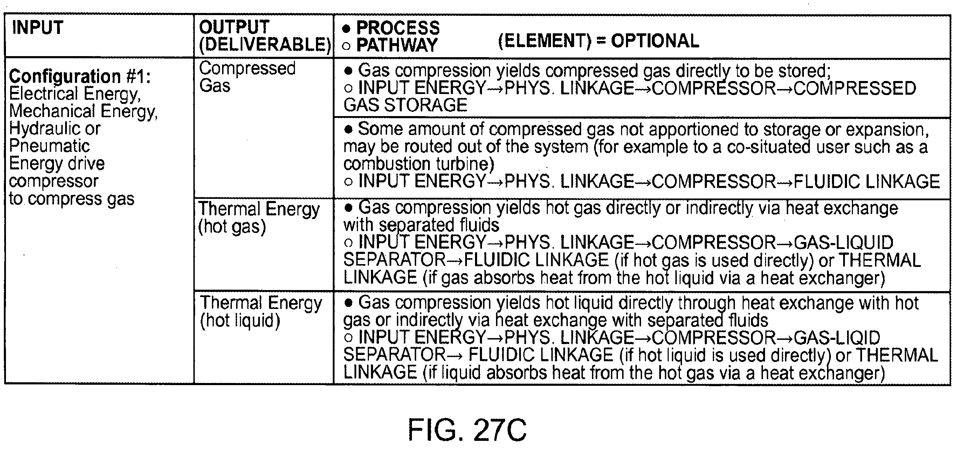

Connection of examples of a system to one or more of the various different networks, allows flows of energy between various sources and destinations to be converted into different forms. The tables of FIGS. 27C-EB show examples of the processes and pathways of such energy conversion.

Examples of the present invention operating as heat engines and receiving input in the form of thermal energy, may be used to substitute or supplement conventional regimes relying upon the Rankine cycle. For example, an example according to the present invention may be incorporated within a combustion- or nuclear-based power plant in lieu of, or in supplement to, a Rankine cycle steam turbine.

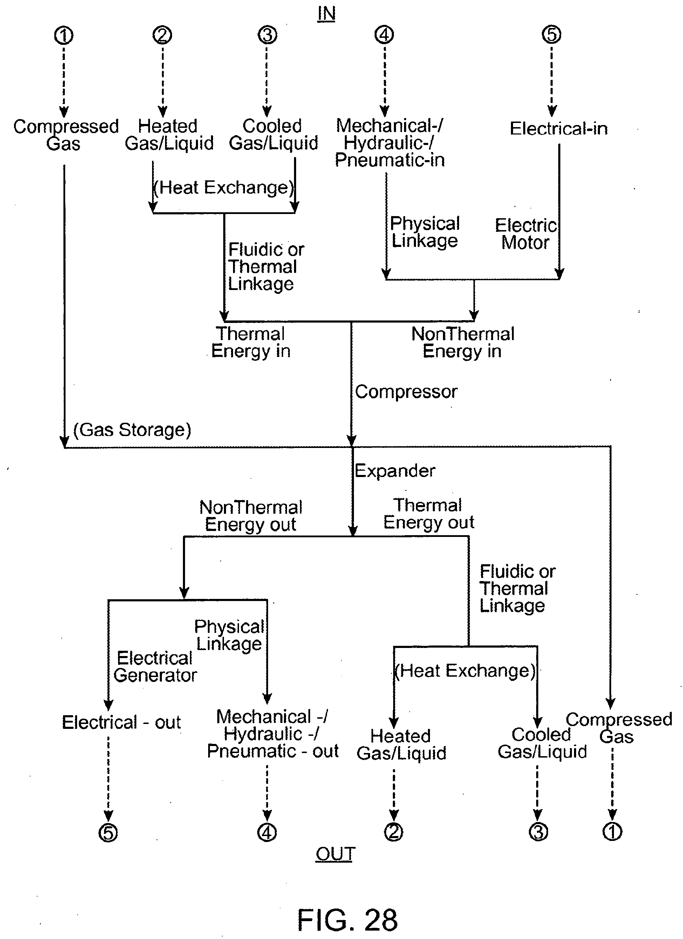

The system is not limited to receiving or outputting energy in any single form. Instead, the system may include an ability to combine different forms of input energy, and/or to apportion output energy into a multitude of different forms. Such apportioning is depicted in simplified form in FIG. 28.

Specifically, inputs in the form of compressed gas, heated gas/liquid, cooled gas/liquid, physical energy, and/or electrical energy, may be combined as shown to ultimately produce energy in the form of compressed gas. Optionally, this compressed gas may be stored for later recovery.

Upon expansion of the compressed gas (whether immediately or following storage for some period of time), the energy released therefrom may be apportioned between multiple forms of output. For example, apportioning may occur between energy released in thermal form versus non-thermal form. Such apportioning may be determined by controlling the magnitude of the temperature change experienced by the expanding gas, for example by an amount of liquid that is injected.

Under certain circumstances (such as a heat wave), a large amount of energy in thermal form may be desirable. Compressed gas could thus be expanded in a substantially non-isothermal manner, with the resulting cooled gas being used to absorb heat from a user. Such non-isothermal expansion could be realized by controlling an amount of liquid that is introduced into the expansion chamber for heat exchange.

Conversely, where a large amount of non-thermal output is desired, expansion could take place under isothermal or near-isothermal conditions. Such energy recovery would result in energy recovery at high efficiency. The transfer of heat between gas and injected liquid, would allow thermal energy to be output in the form of the liquid.

Still another apportioning is of the non-thermal energy. As shown in Figure 28, the non-thermal energy may be apportioned between output in electrical form and in mechanical/hydraulic/pneumatic form. For example, a rotating shaft or other physical linkage may be in communication with a gearing system (for example a multi-node gearing system such as a planetary gear system) allowing some of the non-thermal output energy to drive an electrical generator to produce electricity.

Figure 28 shows still another apportioning, here of the thermal energy. In particular, this thermal energy from the expanding gas may be apportioned between heated gas and/or liquid and/or cooled gas and/or liquid. Apportioning of energy resulting from gas expansion between different outputs, may be accomplished with reference to the various pathways presented in connection with Figures 27BA-EB.

While certain aspects of the above description have emphasized the storage, generation, and conversion of power, the primary emphasis of a system according to embodiments of the present invention could be on temperature control, with the added benefit of reduced consumption of power from the grid. Such savings could be achieved by 1) harnessing the cooling/heating power of the gas and/or separated liquid, and/or 2) time-shifting the storage and expansion of the gas to leverage economic factors such as price and demand.

Depending upon the particular example, a reversible compressor/expander apparatus incorporated within an energy storage system, could provide a number of potential benefits. For example, the electrical power generated by expansion of compressed gas could serve to firm the output of an intermittent renewable energy source to the grid. That is, compressed gas could be expanded to allow the generation of electricity when natural conditions are not conducive to the generation of power (e.g. the wind is not blowing, or clouds interfere with solar collection).

As mentioned above in connection with Figure 13, a reversible compressor/expander apparatus may be employed in conjunction with a power source having an existing electrical generator. In certain examples, use of a reversible compressor/expander apparatus may also serve to reduce a size and hence cost of an electrical generation resource and/or transmission resource associated with a renewable energy source.

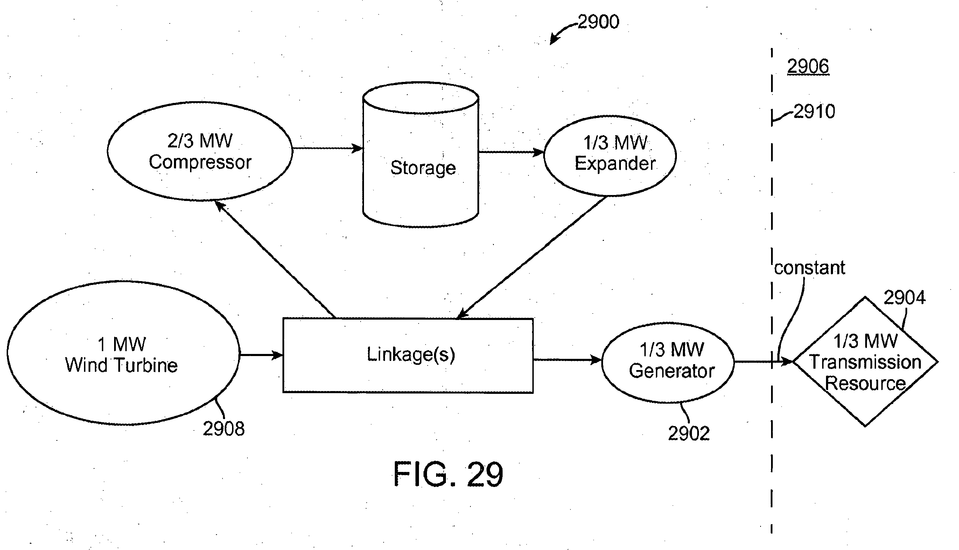

For example Figure 29 shows a schematic view of incorporation of an example of an energy storage system 2900 with generation resources 2902 and transmission resources 2904 of a power supply network 2906. As shown in Figure 29, the availability of energy storage allows a wind turbine 2908 having a maximum power output of 1 MW but a capacity factor of only 1/3, to utilize a generator of having an operating output of 1/3 MW to provide power to the grid over a continuous period. Such a smaller generator may be cheaper to purchase and more cost-effective to operate and maintain.

Moreover, the reduced size of the generator relative to the peak power output of the renewable resource, may allow reduced consumption of (potentially precious) transmission assets. For example, a size of the transmission lines leading to/from the busbar 2910 could be reduced, and/or an excess transmission capacity freed up for allocation to other uses.

The use of a reversible compressor/expander apparatus may also serve to improve an efficiency of operation of a generation asset. For example, a generation asset such as a combined cycle turbine typically operates at a highest efficiency when providing a fixed power output.

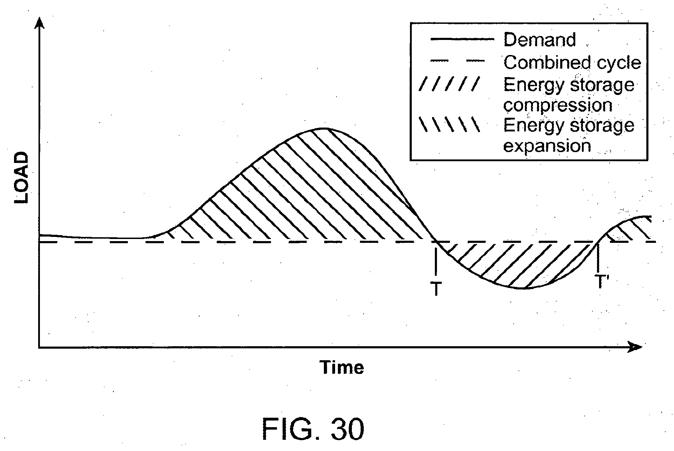

By contrast, as discussed in the Publication a reversible compressor/expander operating as part of an energy storage system, may be throttleable based at least upon an amount of gas introduced to the chamber for compression, or an amount of compressed gas admitted to the chamber for expansion. Thus as shown in Figure 30 a combined cycle generation asset may be operated at peak efficiency to provide baseline power to meet a load while a reversible compressor/expander of a compressed gas energy storage system throttles up or down to provide sufficient additional power to meet changes in load attributable to fluctuation in demand.

When the load in fact actually falls below the baseline load (e.g. T'>time>T), excess power output by the combined cycle generation asset may be harnessed to operate the compressor to store compressed gas for future expansion. Again, the throttleability of the energy storage system, allows this compression to occur with the combined cycle power plant continuing to maintain the baseline power output.

## Claims

1. A system to recover energy from compressed gas, the system comprising:

   a compressed gas storage unit (1306),
   a first chamber (1210) defined within walls and in selective fluid communication with the compressed gas storage unit to receive compressed gas;
   a first airfoil (1202) configured to drive a rotor (1204) within the first chamber in response to the compressed gas expanding in an absence of combustion; **characterized by**:

      an element comprising a first liquid sprayer (1220) in fluid communication with the first chamber configured to effect gas-liquid heat exchange with the expanding compressed gas.

2. A system as in claim 1 wherein the first airfoil and the rotor within the first chamber define an axial turbine.

3. A system as in claim 1 wherein the first airfoil and the rotor within the first chamber define a centrifugal turbine.

**4.** A system as in claim 1 wherein the turbine comprises a unidirectional turbine.

**5.** A system as in claim 1 wherein the turbine comprises a bidirectional turbine.

**6.** A system as in claim 1 wherein the first chamber is in selective fluid communication with the compressed gas storage unit through a heat exchanger.

**7.** A system as in claim 6 wherein the heat exchanger is in selective thermal communication with a thermal storage unit.

**8.** A system as in claim 1 wherein the first liquid sprayer is in fluid communication with the first chamber through an upstream mixing chamber.

**9.** A system as in claim 1 further comprising a second airfoil located downstream from the first airfoil and configured to be driven by further expanding gas.

**10.** A system as in claim 9 further comprising:

a second liquid sprayer positioned between the first airfoil and the second airfoil to effect gas-liquid heat exchange with the further expanding gas.

**11.** A system as in claim 10 wherein the second airfoil is located in the first chamber to define another turbine stage.

**12.** A system as in claim 1 wherein the first airfoil comprises a flexible material.

**13.** A system as in claim 1 wherein the first airfoil is designed for periodic replacement based upon a wear profile over time.

**14.** A system as in claim 1 wherein the rotor is in selective communication with an energy source to drive the first airfoil to compress gas within the chamber and flow compressed gas to the compressed gas storage unit.

**Patentansprüche**

**1.** System zur Energiegewinnung aus komprimiertem Gas, wobei das System enthält:

eine Lagereinheit (1306) für komprimiertes Gas;
eine erste Kammer (1210), die innerhalb von Wänden und in selektiver strömungstechnischer Verbindung mit der Lagereinheit (1306) für komprimiertes Gas steht;
ein erstes Luftleitblech (1202), das zum Antreiben eines Rotors (1204) innerhalb der ersten Kammer als Reaktion auf ein Ausdehnen des komprimierten Gases ohne Verbrennung gestaltet ist;
**gekennzeichnet durch**:

ein Element, das eine erste Flüssigkeitssprühvorrichtung (1220) in strömungstechnischer Verbindung mit der ersten Kammer enthält, die dazu ausgebildet ist, einen Gas-Flüssigkeits-Wärmeaustausch mit dem sich ausdehnenden komprimierten Gas auszuführen.

**2.** System nach Anspruch 1, wobei das erste Luftleitblech und der Rotor innerhalb der ersten Kammer eine Axialturbine definieren.

**3.** System nach Anspruch 1, wobei das erste Luftleitblech und der Rotor innerhalb der ersten Kammer eine Zentrifugalturbine definieren.

**4.** System nach Anspruch 1, wobei die Turbine eine unidirektionale Turbine enthält.

**5.** System nach Anspruch 1, wobei die Turbine eine bidirektionale Turbine enthält.

**6.** System nach Anspruch 1, wobei die erste Kammer durch einen Wärmetauscher in selektiver strömungstechnischer Verbindung mit der Lagereinheit für komprimiertes Gas steht.

**7.** System nach Anspruch 6, wobei der Wärmetauscher in selektiver thermischer Verbindung mit einer Wärmespeichereinheit steht.

**8.** System nach Anspruch 1, wobei die erste Flüssigkeitssprühvorrichtung durch eine stromaufwärts liegende Mischkammer in strömungstechnischer Verbindung mit der ersten Kammer steht.

**9.** System nach Anspruch 1, des Weiteren enthaltend ein zweites Luftleitblech, das sich stromabwärts vom ersten Luftleitblech befindet und dazu ausgebildet ist, durch weiteres sich ausdehnendes Gas angetrieben zu werden.

**10.** System nach Anspruch 9, des Weiteren enthaltend:

eine zweite Flüssigkeitssprühvorrichtung, die zwischen dem ersten Luftleitblech und dem zweiten Luftleitblech angeordnet ist, um einen Gas-Flüssigkeits-Wärmeaustausch mit dem sich weiter ausdehnenden Gas auszuführen.

**11.** System nach Anspruch 10, wobei sich das zweite Luftleitblech in der ersten Kammer befindet, um eine weitere Turbinenstufe zu definieren.

**12.** System nach Anspruch 1, wobei das erste Luftleitblech ein flexibles Material enthält.

**13.** System nach Anspruch 1, wobei das erste Luftleitblech für einen periodischen Austausch basierend auf einem zeitbezogenen Verschleißprofil gestaltet ist.

**14.** System nach Anspruch 1, wobei der Rotor mit einer Energiequelle in selektiver Verbindung steht, um das erste Luftleitblech zum Komprimieren von Gas innerhalb der Kammer und zum Leiten von komprimierten Gas zur Lagereinheit für komprimiertes Gas anzutreiben.

**Revendications**

**1.** Système pour récupérer de l'énergie à partir de gaz comprimé, le système comprenant :

- une unité de stockage de gaz comprimé (1306) ;
- une première chambre (1210) définie à l'intérieur de parois et en communication fluidique sélective avec l'unité de stockage de gaz comprimé pour recevoir du gaz comprimé ;
- un premier profil aérodynamique (1202) configuré pour entraîner un rotor (1204) à l'intérieur de la première chambre en réponse à la détente de gaz comprimé en l'absence de combustion ; **caractérisé par** :

- un élément comprenant un premier dispositif de pulvérisation de liquide (1220) en communication fluidique avec la première chambre, configuré pour effectuer un échange de chaleur gaz-liquide avec le gaz comprimé se détendant.

**2.** Système selon la revendication 1, dans lequel le premier profil aérodynamique et le rotor à l'intérieur de la première chambre définissent une turbine axiale.

**3.** Système selon la revendication 1, dans lequel le premier profil aérodynamique et le rotor à l'intérieur de la première chambre définissent une turbine centrifuge.

**4.** Système selon la revendication 1, dans lequel la turbine comprend une turbine unidirectionnelle.

**5.** Système selon la revendication 1, dans lequel la turbine comprend une turbine bidirectionnelle.

**6.** Système selon la revendication 1, dans lequel la première chambre est en communication fluidique sélective avec l'unité de stockage de gaz comprimé par l'intermédiaire d'un échangeur de chaleur.

**7.** Système selon la revendication 6, dans lequel l'échangeur de chaleur est en communication thermique sélective avec une unité de stockage thermique.

**8.** Système selon la revendication 1, dans lequel le premier dispositif de pulvérisation de liquide est en communication fluidique avec la première chambre par l'intermédiaire d'une chambre de mélange en amont.

**9.** Système selon la revendication 1, comprenant en outre un second profil aérodynamique situé en aval du premier profil aérodynamique et configuré pour être entraîné par du gaz se détendant encore.

**10.** Système selon la revendication 9, comprenant :

- un second dispositif de pulvérisation de liquide positionné entre le premier profil aérodynamique et le second profil aérodynamique pour effectuer un échange de chaleur gaz-liquide avec le gaz se détendant encore.

**11.** Système selon la revendication 10, dans lequel le second profil aérodynamique est situé dans la première chambre pour définir un autre étage de turbine.

**12.** Système selon la revendication 1, dans lequel le premier profil aérodynamique comprend un matériau souple.

**13.** Système selon la revendication 1, dans lequel le premier profil aérodynamique est conçu pour un remplacement périodique basé sur un profil d'usure au cours du temps.

**14.** Système selon la revendication 1, dans lequel le rotor est en communication sélective avec une source d'énergie pour entraîner le premier profil aérodynamique pour comprimer du gaz à l'intérieur de la chambre et faire s'écouler du gaz comprimé jusqu'à l'unité de stockage de gaz comprimé.

FIG. 1

240

210

200

204

**FIG. 2c**

240

210

200

202

211

G

204

**FIG. 2b**

240

202 226 202

210

204

**FIG. 2a**

330

334

332

304

FIG. 3

FIG. 4

524

502  502  502  502  502
     a1   a2   a3   a4

"Y"                              "X"

510

504

b1  b2  b3  b4

## FIG. 5a

## FIG. 5b

624

602 602

604

610

C1 D1

C2 D2

C3 D3

FIG. 6

FIG. 7

FIG. 8a

FIG. 8b

FIG. 9

FIG. 10

FIG. 11

FIG. 12

FIG. 13

**FIG. 14A**

**FIG. 14B**

FIG. 14C

FIG. 14D

FIG. 15A

FIG. 15B

FIG. 15C

FIG. 15D

FIG. 16A

COMPRESSION

FIG. 16B

FIG. 16C

FIG. 17

FIG. 18

| Power Supply Role | Discharge Duration* | | Notes |
| | Low | High | |
|---|---|---|---|
| Electric Energy Time-shift | 2 | 8 | Depends on energy price differential, storage efficiency, and storage variable operating cost. |
| Electric Supply Capacity | 4 | 6 | Peak demand hours. |
| Load Following | 2 | 4 | Assume: 1 hour of discharge duration provides approximately 2 hours of load following. |
| Area Regulation | 15 min. | 30 min. | Based on demonstration of Beacon Flywheel. |
| Electric Supply Reserve Capacity | 1 | 2 | Allow time for generation-based reserves to come on-line. |
| Voltage Support | 15 min. | 1 | Time needed for a) system stabilization or b) orderly load shedding. |
| Transmission Support | 2 sec. | 5 sec. | Per EPRI-DOE Handbook of Energy Storage for Transmission and Distribution Applications. |
| Transmission Congestion Relief | 3 | 6 | Peak demand hours. Low value is for "peaky" loads, high value is for "flatter" load profiles. |
| T&D Upgrade Deferral - 50th Percentile | 3 | 6 | Same as above. |
| T&D Upgrade Deferral - 90th Percentile | 3 | 6 | Same as above. |
| Substation On-site Power | 8 | 16 | Per EPRI/DOE Substation Battery Survey. |
| Time-of-use Energy Cost Management | 4 | 6 | Peak demand hours. |
| Demand Change Management | 5 | 11 | Maximum daily demand charge hours, per utility tariff. |
| Electric Service Reliability | 5 min. | 1 | Time needed for a) shorter duration outages or b) orderly load shutdown. |
| Electric Service Power Quality | 10 sec. | 1 min. | Time needed for events ridethrough depends on the type of PQ challenges addressed. |
| Renewables Energy Timeshift | 3 | 5 | Depends on energy cost/price differential and storage efficiency and variable operating cost. |
| Renewables Capacity Firming | 2 | 4 | Low & high values for Renewable Gen./Peak Load correlation (>6 hours) of 85% & 50%. |
| Wind Generation Grid Integration, Short Duration | 10 sec. | 15 min. | For a) Power Quality (depends on type of challenge addressed) and b) Wind Intermittency. |
| Wind Generation Grid Integration, Long Duration | 1 | 6 | Backup, Time Shift, Congestion Relief. |

Notes:
*Hours unless indicated otherwise. min. = minutes. sec. = seconds.
Source: United States. Dept. of Energy. Sandia National Laboratories. Energy Storage for the Electricity Grid: Benefits and Market Potential Assessment Guide. By Jim Eyer and Garth Corey. Springfield, VA: National Technical Information Service, 2010

# FIG. 19

| Capacity (Power: kW, | | |
|---|---|---|
| Low | High | Notes |
| 1MW | 500MW | Low per ISO transaction min. (Can aggregate smaller capacity). High = combined cycle gen. |
| 1MW | 500MW | Same as above. |
| 1MW | 500MW | Same as above. |
| 1MW | 40MW | Low per ISO transaction min. Max is 50% of estimate CA technical potential of 80MW. |
| 1MW | 500MW | Low per ISO transaction min. (Can aggregate smaller capacity). High = combined cycle gen. |
| 1MW | 10MW | Assume distributed deployment, to serve Voltage support needs locally. |
| 10MW | 100MW | Low value is for subtransmission. |
| 1MW | 100MW | Low per ISO transaction min. (Can aggregate smaller capacity). High = 20% of high capacity |
| 250kW | 5MW | Low = smallest likely; High = high end for distribution and subtransmission. |
| 250kW | 2MW | Same as above. |
| 1.5kW | 5kW | Per EPRI/DOE Substation Battery Survey. |
| 1kW | 5MW | Residential to medium sized commercial/industrial users. |
| 50kW | 10MW | Small commercial to large commercial/industrial users. |
| 0.2kW | 10MW | Low = under desk UPS. High = facility wide for commercial industrial users. |
| 0.2kW | 10MW | Same as above. |
| 1kW | 500MW | Low = small residential PV. High = "bulk" renewable energy fueled generation. |
| 1kW | 500MW | Same as above. |
| 0.2kW | 500MW | Low = small residential turbine. High = large wind farm boundary. |
| 0.2kW | 500MW | Same as above. |

# FIG. 19 (Cont.)

FIG. 20

FIG. 21

EP 2 751 411 B1

2101

FROM:
• generation asset

TO: • Combustion generation asset

2196

2194

2160
2102

$P_{in}$ 2106

$+\Delta T_C$

$-\Delta T_E$

$P_{out}$

2106

2107

$P_{st}$

2103

$W_{in}$ $W_{out}$

FROM:
• generation asset
• meter

M/G

TO: • busbar
• co-located facility

2104

**FIG. 21A**

TO: • Combustion generation asset

FROM:
• generation asset

2103

FROM:
• generation asset

2196

2194

FROM:
• meter

M

C

E

G

TO: • busbar
• co-located facility

2187

2186

2188

2189

FROM:
• generation asset

**FIG. 21B**

TO:• Combustion generation asset

FROM:
•generation asset

2103

2196

2194

2186 — C

E — 2188

2199 — O

FROM:
•generation asset

FROM:
•meter → M

G → TO:• busbar
• co-located facility

2187

2189

FROM:
•generation asset

# FIG. 21C

FIG. 22

FIG. 22A

| Temperature Control Role | End Use Examples | Air Conditioned Square Footage | Expected Duration (hrs) | Output (BTU/h) | System Capacity (Tons)[1] | Energy Use (kWh)[2] |
|---|---|---|---|---|---|---|
| Cooling | Small home | 200 - 4,000 | 4 - 8 | 6,000 - 60,000 | 1 - 5 | 1 - 40 |
| | Medium home, small office | 2,000 - 20,000 | 4 - 8 | 60,000 - 300,000 | 5 - 25 | 10 - 220 |
| | Large home, small warehouse | 8,000 - 48,000 | 4 - 8 | 240,000 - 720,000 | 20 - 60 | 60 - 520 |
| | Small office building | 16,000 - 50,000 | 4 - 8 | 720,000 - 1,500,000 | 60 - 125 | 170 - 1,090 |
| | Medium office building | 27,000 - 200,000 | 4 - 8 | 1,200,000 - 6,000,000 | 100 - 500 | 280 - 4,360 |
| | Large office building | 27,000 - 400,000 | 4 - 8 | 1,200,000 - 12,000,000 | 100 - 1,000 | 280 - 8,730 |
| | Medium warehouse | 40,000 - 400,000 | 8 - 12 | 1,200,000 - 6,000,000 | 100 - 500 | 560 - 6,550 |
| | Large warehouse | 100,000 - 800,000 | 8 - 12 | 3,000,000 - 12,000,000 | 250 - 1,000 | 1,410 - 13,090 |
| | Refrigerated Warehouse | 40,000 - 160,000 | 24 - 24 | 1,800,000 - 4,800,000 | 150 - 400 | 2,540 - 10,470 |
| | Supermarket, food service facility | 27,000 - 100,000 | 24 - 24 | 1,200,000 - 3,000,000 | 100 - 250 | 1,690 - 6,550 |
| Heating | Small home | 200 - 3,000 | 4 - 8 | 6,000 - 60,000 | 1 - 5 | 1 - 40 |
| | Medium home, small office | 2,000 - 15,000 | 4 - 8 | 60,000 - 300,000 | 5 - 25 | 10 - 220 |
| | Large home, small warehouse | 8,000 - 36,000 | 4 - 8 | 240,000 - 720,000 | 20 - 60 | 60 - 520 |
| | Small office building | 18,000 - 50,000 | 4 - 8 | 720,000 - 1,500,000 | 60 - 125 | 170 - 1,090 |
| | Medium office building | 30,000 - 200,000 | 4 - 8 | 1,200,000 - 6,000,000 | 100 - 500 | 280 - 4,360 |
| | Large office building | 30,000 - 400,000 | 4 - 8 | 1,200,000 - 12,000,000 | 100 - 1,000 | 280 - 8,730 |
| | Medium warehouse | 40,000 - 300,000 | 8 - 12 | 1,200,000 - 6,000,000 | 100 - 500 | 560 - 6,550 |
| | Large warehouse | 100,000 - 600,000 | 8 - 12 | 3,000,000 - 12,000,000 | 250 - 1,000 | 1,410 - 13,090 |
| | Automotive assembly plant, storage facility | 8,000 - 200,000 | 24 - 24 | 300,000 - 6,000,000 | 25 - 500 | 420 - 13,090 |

Notes:
1) 1 Ton = cooling power of one short ton (2000 pounds or 907 kilograms) of ice melting in a 24-hour period. Equals 12,000 BTU per hour, or 3517 watts.
2) Assume SEER (Seasonal Energy Efficiency Rating) range of 11 to 17.

FIG. 23

EP 2 751 411 B1

FIG. 24

EP 2 751 411 B1

FIG. 25

EP 2 751 411 B1

FIG. 25A

FIG. 26A

EP 2 751 411 B1

FIG. 26B

EP 2 751 411 B1

FIG. 27A

FIG. 27BC

FIG. 27BD

FIG. 27BA

FIG. 27BB

EP 2 751 411 B1

Heat engine + Compressor (storage)

## FIG. 27BE

Heat engine + expander (energy delivery)

## FIG. 27BF

71

| INPUT | OUTPUT (DELIVERABLE) | • PROCESS ○ PATHWAY  (ELEMENT) = OPTIONAL |
|---|---|---|
| **Configuration #1:** Electrical Energy, Mechanical Energy, Hydraulic or Pneumatic Energy drive compressor to compress gas | Compressed Gas | • Gas compression yields compressed gas directly to be stored; ○ INPUT ENERGY→PHYS. LINKAGE→COMPRESSOR→COMPRESSED GAS STORAGE |
| | | • Some amount of compressed gas not apportioned to storage or expansion, may be routed out of the system (for example to a co-situated user such as a combustion turbine) ○ INPUT ENERGY→PHYS. LINKAGE→COMPRESSOR→FLUIDIC LINKAGE |
| | Thermal Energy (hot gas) | • Gas compression yields hot gas directly or indirectly via heat exchange with separated fluids ○ INPUT ENERGY→PHYS. LINKAGE→COMPRESSOR→GAS-LIQUID SEPARATOR→FLUIDIC LINKAGE (if hot gas is used directly) or THERMAL LINKAGE (if gas absorbs heat from the hot liquid via a heat exchanger) |
| | Thermal Energy (hot liquid) | • Gas compression yields hot liquid directly through heat exchange with hot gas or indirectly via heat exchange with separated fluids ○ INPUT ENERGY→PHYS. LINKAGE→COMPRESSOR→GAS-LIQID SEPARATOR→ FLUIDIC LINKAGE (if hot liquid is used directly) or THERMAL LINKAGE (if liquid absorbs heat from the hot gas via a heat exchanger) |

FIG. 27C

EP 2 751 411 B1

| INPUT | OUTPUT (DELIVERABLE) | ● PROCESS<br>○ PATHWAY　　　　(ELEMENT) = OPTIONAL |
|---|---|---|
| **Configuration #2:** Compressed Gas (Storage Tank ) (Thermal energy source in the form of hot medium or radiation) | Electrical Energy* | ● Expansion of compressed gas drives generator<br>○ COMPRESSED GAS (directly or from TANK)→EXPANDER→ LINKAGE→ GENERATOR |
| | Mechanical Energy* | ● Expansion of compressed gas drives mechanical linkage;<br>○ COMPRESSED GAS (directly or from TANK)→EXPANDER→MECH. LINKAGE |
| | Pneumatic / Hydraulic Energy* | ● Expansion of compressed gas creates pressure differential driving pneumatic or hydraulic linkage;<br>○ COMPRESSED GAS (directly or from TANK)→EXPANDER→ HYDRAUL./PNEUMAT. LINKAGE |
| | Thermal Energy (cool gas) | ● Expansion of compressed gas yields cooled gas directly or via heat exchange with separated fluids<br>○ COMPRESSED GAS (directly or from TANK)→EXPANDER→GAS-LIQUID SEPARATOR→FLUIDIC LINKAGE (if cool gas is used directly) or THERMAL LINKAGE (if gas transfers heat to the cool liquid via a heat exchanger) |
| | Thermal Energy (cool liquid) | ● Expansion of compressed gas yields cooled liquid directly through heat exchange with cool gas, or indirectly via heat exchange with separate fluids<br>○ COMPRESSED GAS (directly or from TANK)→EXPANDER→ GAS-LIQUID SEPARATOR→FLUIDIC LINKAGE (if cool liquid is used directly) or THERMAL LINKAGE (if liquid transfers heat to the cool gas via a heat exchanger) |
| | Potable Water | ● Expansion of compressed gas yields cooled gas or liquid for use in condensing moisture out of air;<br>○ COMPRESSED GAS (directly or from TANK)→EXPANDER→THERMAL LINKAGE→CONDENSOR |
| | Humidified Gas | ● Expansion of compressed gas yields humidified air;<br>○ COMPRESSED GAS (directly or from TANK)→EXPANDER→GAS SEPARATOR→ HUMIDIFIED AIR |
| | Dehumidified Gas | ● Expansion of compressed gas yields cooled gas or liquid for use in condensing moisture out of air;<br>○ COMPRESSED GAS (directly or from TANK)→EXPANDER→THERMAL LINKAGE→CONDENSOR→DEHUMIDIFIED AIR |

* External heat sources can be employed to heat the working fluids (liquid and gas), and to deliver more electrical, mechanical, pneumatic, or hydraulic energy.

## FIG. 27D

| INPUT | OUTPUT (DELIVERABLE) | ● PROCESS ○ PATHWAY (ELEMENT) = OPTIONAL |
|---|---|---|
| Configuration #3 or Configuration #4: Thermal energy source in the form of hot medium or radiation (Compressed gas) (Compressed gas storage tank) (Electrical, Mechanical, Hydraulic or Pneumatic Energy) | Electrical Energy | ● Hot gas or liquid is either 1) input directly into expander, or 2) exchanges heat through heat exchanger with working fluids. Expansion of compressed gas drives compressor cylinder and generator. ○ PHYS. LINKAGE→COMPRESSOR→COMPRESSED GAS (directly or from TANK)→HEAT EXCHANGE→EXPANDER→LINKAGE→GENERATOR |
| | Mechanical Energy | ● Hot gas or liquid is either 1) input directly into expander, or 2) exchanges heat through heat exchanger with working fluids.Expansion of compressed gas drives mechanical linkage; ○ PHYS. LINKAGE→COMPRESSOR→COMPRESSED GAS (directly or from TANK)→HEAT EXCHANGE→EXPANDER→MECH. LINKAGE |
| | Pneumatic / Hydraulic Energy | ● Hot gas or liquid is either 1) input directly into expander, or 2) exchanges heat through heat exchanger with working fluids. Expansion of compressed gas creates pressure differential driving pneumatic or hydraulic linkage; ○ PHYS. LINKAGE→COMPRESSOR→COMPRESSED GAS (directly or from TANK)→HEAT EXCHANGE→EXPANDER→HYDRAUL./PNEUMAT. LINKAGE |
| | Thermal Energy (cool gas) | ● Expansion of compressed gas yields cooled gas directly or via heat exchange with separated fluids ○ PHYS. LINKAGE→COMPRESSOR→COMPRESSED GAS (directly or from TANK)→HEAT EXCHANGE→EXPANDER→GAS-LIQUID SEPARATOR→ FLUIDIC LINKAGE (if cool gas is used directly) or THERMAL LINKAGE (if gas transfers heat to the cool liquid via a heat exchanger) |
| | Thermal Energy (cool liquid) | ● Expansion of compressed gas yields cooled liquid directly through heat exchange with cool gas, or indirectly via heat exchange with separate fluids ○ PHYS. LINKAGE→COMPRESSOR→COMPRESSED GAS (directly or from TANK)→HEAT EXCHANGE→EXPANDER→GAS-LIQUID SEPARATOR→ FLUIDIC LINKAGE (if cool liquid is used directly) or THERMAL LINKAGE (if liquid transfers heat to the cool gas via a heat exchanger) |
| | Thermal Energy (hot gas) | ● Gas compression yields hot gas directly or indirectly via heat exchange with separated fluids ○ INPUT ENERGY→PHYS. LINKAGE→COMPRESSOR→GAS-LIQUID SEPARATOR→FLUIDIC LINKAGE (if hot gas is used directly) or THERMAL LINKAGE (if gas absorbs heat from the hot liquid via a heat exchanger)→ EXPANDER→GAS-LIQUID SEPARATOR→THERMAL/PHYS. LINKAGE |

EP 2 751 411 B1

FIG. 27EA

| INPUT | OUTPUT (DELIVERABLE) | • PROCESS<br>○ PATHWAY    (ELEMENT) = OPTIONAL |
|---|---|---|
| **Configuration #3 or Configuration #4:** Thermal energy source in the form of hot medium or radiation (Compressed gas) (Compressed gas storage tank) (Electrical, Mechanical, Hydraulic or Pneumatic Energy) | Thermal Energy (hot liquid) | • Gas compression yields hot liquid directly through heat exchange with hot gas or indirectly via heat exchange with separated fluids<br>○ INPUT ENERGY→PHYS. LINKAGE→COMPRESSOR→GAS-LIQUID SEPARATOR→ FLUIDIC LINKAGE (if hot liquid is used directly) or THERMAL LINKAGE (if liquid absorbs heat from the hot gas via a heat exchanger)→ EXPANDER→ GAS-LIQUID SEPARATOR→THERMAL/PHYS. LINKAGE |
| | Potable Water | • Expansion of compressed gas yields cooled gas or liquid for use in condensing moisture out of air;<br>○ COMPRESSED GAS (directly or from TANK)→EXPANDER→THERMAL LINKAGE→CONDENSOR |
| | Humidified Gas | • Expansion of compressed air yields humidified air;<br>○ PHYS. LINKAGE→COMPRESSOR→COMPRESSED GAS (directly or from TANK)→HEAT EXCHANGE→EXPANDER →GAS-LIQUID SEPARATOR→ HUMIDIFIED AIR |
| | Dehumidified Gas | • Expansion of compressed air yields cooled gas or liquid for use in condensing moisture out of air;<br>○ PHYS. LINKAGE→COMPRESSOR→COMPRESSED GAS (directly or from TANK)→HEAT EXCHANGE→EXPANDER→THERMAL LINKAGE→ CONDENSOR→ DEHUMIDIFIED AIR |

FIG. 27EB

EP 2 751 411 B1

FIG. 28

FIG. 29

FIG. 30

**EP 2 751 411 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011041501 A
- US 20110100010 A
- US 20110115223 A
- US 730549 A

**Non-patent literature cited in the description**

- Energy Storage for the Electricity Grid: Benefits and Market Potential Assessment Guide: A Study for the DOE Energy Storage Systems Program. **JIM EYER ; GARTH COREY.** Report No. SAND2010-0815. Sandia National Laboratories, February 2010